# EUROPEAN PATENT SPECIFICATION

(11) **EP 3 089 530 B1**
(45) Date of publication and mention of the grant of the patent: **02.01.2019**
(21) Application number: 14874334.7
(22) Date of filing: 16.10.2014
(51) Int. Cl.: H04W 72/04, H04W 24/10, H04B 7/06, H04L 5/00, H04L 5/14, H04L 1/00

(54) **TERMINAL DEVICE, BASE STATION DEVICE, AND COMMUNICATION METHOD**
ENDGERÄT, BASISSTATIONSVORRICHTUNG UND KOMMUNIKATIONSVERFAHREN
TERMINAL, STATION DE BASE ET PROCÉDÉ DE COMMUNICATION

(30) Priority: 26.12.2013 JP 2013269102
(43) Date of publication of application: 02.11.2016
(73) Proprietor: Sharp Kabushiki Kaisha, Osaka-shi, Osaka 545-8522 (JP)
(72) Inventor: SHIMEZAWA Kazuyuki, Osaka 545-8522 (JP); NOGAMI, Toshizo, Osaka 545-8522 (JP); OUCHI, Wataru, Osaka 545-8522 (JP); RUIZ DELGADO, Alvaro, Osaka 545-8522 (JP); KUSASHIMA, Naoki, Osaka 545-8522 (JP); IMAMURA, Kimihiko, Osaka 545-8522 (JP)
(74) Representative: Müller-Boré & Partner Patentanwälte PartG mbB
(86) International application number: PCT/JP2014/077582
(87) International publication number: WO 2015/098250

(56) References cited:
- EP-A2- 2 597 799
- WO-A2-2012/148161
- US-A1- 2012 257 524
- ERICSSON: "CSI reporting for TDD-FDD CA", 3GPP DRAFT; R1-135652, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20131111 - 20131115 13 November 2013 (2013-11-13), XP050735309, Retrieved from the Internet: URL:http://www.3gpp.org/ftp/Meetings_3GPP_ SYNC/RAN/RAN1/Docs/ [retrieved on 2013-11-13]
- 3gpp: "Evolved Universal Terrestrial Radio Access (E-UTRA); Physical layer procedures (3GPP TS 36.213 version 11.2.0 Release 11)", , 1 April 2013 (2013-04-01), pages 2013-4, XP055305454, Retrieved from the Internet: URL:http://www.etsi.org/deliver/etsi_ts/13 6200_136299/136213/11.02.00_60/ts_136213v1 10200p.pdf [retrieved on 2016-09-26]
- 'Physical layer procedures (Release 12)' 3GPP TS 36.213 V 12.0.0 20 December 2013, XP055354486 Retrieved from the Internet: <URL:http://www.3gpp.org/ftp/Specs/archive/ 36_series/36.213/36213-c00.zip>
- ERICSSON: 'CSI reporting for TDD-FDD CA [online]' 3GPP TSG-RAN WG1#75 R1-135652 13 November 2013, pages 1 - 5, XP050735309 Retrieved from the Internet: <URL:http://www.3gpp.org/ftp/tsg_ran/WG1_RL 1/TSGR1_75/Docs/R1-135652.zip> [retrieved on 2015-01-05]
- SAMSUNG: 'CSI feedback for TDD-FDD CA' 3GPP TSG-RAN WG1#76 R1-140361 09 February 2014, pages 1 - 5, XP050735908 Retrieved from the Internet: <URL:http://www.3gpp.org/ftp/tsg_ran/WG1_RL 1/TSGR1_76/Docs/R1-140361.zip> [retrieved on 2015-01-05]

## Description

### Technical Field

The present invention relates to a terminal device, a base station device, and a communication method.

This application is based upon and claims the benefit of priority of the prior Japanese Patent Application No. 2013-269102, filed on December 26, 2013.

### Background Art

A base station device (a cell, a first communication device (communication device different from a terminal device), and eNodeB), and a terminal device (a mobile terminal, a mobile station device, a second communication device (communication device different from the base station device), user equipment (UE), and a user device) are included in a communication system such as Wideband Code Division Multiple Access (WCDMA) (registered trademark), Long Term Evolution (LTE), and LTE-Advanced (LTE-A) by Third Generation Partnership Project (3GPP), and a Wireless Local Area Network (WLAN), and Worldwide Interoperability for Microwave Access (WiMAX) by The Institute of Electrical and Electronics engineers (IEEE). Each of the base station device and the terminal device includes a plurality of transmit/receive antennae. The base station device and the terminal device perform spatial multiplexing on a data signal by using a Multi Input Multi Output (MIMO) technology, and thus high-speed data communication is realized.

In 3GPP, as a frame structure type of a bi-directional communication scheme (duplex communication scheme), frequency division duplexing (FDD) and time division duplexing (TDD) are employed. In FDD, a full duplex scheme in which bi-directional communication can be simultaneously performed, and a half duplex scheme in which uni-directional communication is switched and thus the bi-directional communication is realized are employed (NPL 1). LTE employing the TDD may be also referred to as TD-LTE or LTE TDD.

In 3GPP, in order to realize high-speed data communication between a base station device and a terminal device, carrier aggregation (CA) in which communication is performed by aggregating a plurality of component carriers (cells) is employed (NPL 2). In the carrier aggregation until now, component carriers (cells) having the same frame structure type can be aggregated.

In 3GPP, a method of performing communication by aggregating component carriers having different frame structure types is examined as enhancement of the carrier aggregation. That is, TDD-FDD carrier aggregation (TDD-FDD CA) in which a component carrier (TDD carrier, TDD cell) which supports the TDD, and a component carrier (FDD carrier, FDD cell) which supports the FDD are aggregated so as to perform communication is examined (NPL 3).

US 2012/257524 describes techniques to support periodic reporting of channel state information (CSI) for multiple component carriers (CCs) with different system configurations. A user equipment (UE) is configured with multiple CCs for carrier aggregation. Each CC is associated with a particular system configuration, which indicates whether FDD or TDD is utilized and, if TDD is utilized, a particular uplink-downlink configuration for the CC. Each CC is associated with a set of subframes available to send CSI on that CC, which is determined based on the system configuration of the CC. The multiple CCs configured for the UE include at least two CCs associated with different system configurations and different sets of subframes available to send CSI. The UE sends CSI for a first CC on a second CC based on a set of subframes available to send CSI on the second CC.

EP 2 597 799 A2 describes a method and a device for reporting CSI in a wireless communication system, the method comprising: a step for configuring a plurality of serving cells; and a step for reporting the CSI of only one serving cell in a corresponding subframe, wherein the step for reporting the CSI of only one serving cell comprises: excluding reporting the CSI of a lower priority when CSI reports of the plurality of serving cells in the corresponding subframe collide; and excluding reporting the CSI of serving cells other than the serving cell having the smallest index when the CSI reports of different serving cells having the same priority in the corresponding subframe collide.

WO 2012/148161 A2 describes a method for transmitting CSI in a wireless access system supporting carrier aggregation/multiple cells and a terminal therefor. Specifically, the method comprises the steps of: if a collision occurs between starting points of periodic CSI reports for first and second cells, calculating the number of resource elements using the biggest bit size among CSI bit sizes for first and second cells; adjusting the bit of the CSI with the highest priority among the CSIs of the first and second cells to match the biggest bit size; transmitting, to the base station, the adjusted bits of the CSI with the highest priority, which have been mapped to the calculated resource element.

### Citation List

### Non Patent Literature

NPL 1: 3rd Generation Partnership Project Technical Specification Group Radio Access Network; Evolved Universal Terrestrial Radio Access (E-UTRA); Physical Channels and Modulation (Release 11), TS36.211 v11.4.0 (2013-09).
NPL 2: 3rd Generation Partnership Project Technical Specification Group Radio Access Network; Evolved Universal Terrestrial Radio Access (E-UTRA) and Evolved Universal Terrestrial Radio Access Network (E-UTRAN); Overall description; Stage 2 (Release 10), TS36.300 v11.7.0 (2013-09).
NPL 3: "Potential solutions of TDD-FDD joint operation", R1-132886, 3GPP TSG-RAN WG1 Meeting #74, Barcelona, Spain, 19th-23rd Aug 2013.

### Summary of Invention

### Technical Problem

However, since a TDD cell and a FDD cell have frame structure types different from each other in TDD-FDD carrier aggregation, using the conventional carrier aggregation method of aggregating cells having the same frame structure type is not possible, and realizing efficient communication is not possible.

Considering the above problem, an object of an aspect of the present invention is to provide a terminal device, a base station device, and a communication method which allow efficient communication in TDD-FDD carrier aggregation.

### Solution to Problem

The above and other problems are solved by a terminal appratus, a base station apparatus, a communication method of a terminal apparatus and a communication method of a base station apparatus as defined in claims 1, 4, 7 and 8, respectively. Further preferred embodiments are set forth in the dependent claims.

The embodiments that do not fall under the scope of the claims have to be interpreted as examples useful for understanding the invention.

### Advantageous Effects of Invention

According to the present invention, in a communication system in which a base station device and a terminal device communicate with each other, the base station device and the terminal device perform efficient transmission control and reception control, and thus it is possible to improve communication efficiency.

### Brief Description of Drawings

Fig. 1 is a schematic block diagram illustrating a constitution of a base station device 1 according to a first embodiment of the present invention.
Fig. 2 is a schematic block diagram illustrating a constitution of a terminal device 2 according to the first embodiment of the present invention.
Fig. 3 is a diagram illustrating a constitution of a subframe pattern in a TDD UL/DL configuration.
Fig. 4 is a diagram illustrating an example of an expression used for determining a subframe in which periodic CSI reporting is performed.
Fig. 5 is a diagram illustrating an example of mapping used in a configuration relating to P-CSI reporting which relates to CQI and PMI.
Fig. 6 is a diagram illustrating another example of mapping used in a configuration relating to P-CSI reporting which relates to CQI and PMI.
Fig. 7 is a diagram illustrating still another example of mapping used in a configuration relating to P-CSI reporting which relates to CQI and PMI. Description of Embodiments

In a communication system of an embodiment, carrier aggregation in which a plurality of component carriers is integrated so as to perform communication is applied. Because a cell may be configured by using a component carrier, the carrier aggregation may be referred to as cell aggregation. That is, the communication system according to the embodiment may perform communication by using integration of a plurality of cells. In the communication system according to the embodiment, the cell aggregation integrates a cell (TDD cell) to which a TDD scheme is applied, and a cell (FDD cell) to which an FDD scheme is applied, among the plurality of cells, and performs communication. That is, in the communication system according to the embodiment, the cell aggregation is applied in a plurality of cells in which a different frame structure type is configured. The frame structure type may be referred to as duplex mode. In LTE and LTE-A, Frame structure type-1 is defined as the FDD, and Frame structure type-2 is defined as the TDD.

In cell aggregation, one primary cell and one or more secondary cells are aggregated so as to perform communication. The primary cell and the secondary cell can be configured by using an uplink component carrier and a downlink component carrier. The secondary cell can be configured by using only a downlink component carrier.

A plurality of configured serving cells (plurality of configured cells) includes one primary cell and one or a plurality of secondary cells. The primary cell is a serving cell in which initial connection establishment procedure is performed, a serving cell in which connection reestablishment procedure is started, or a cell instructed as a primary cell in a handover procedure. The secondary cell may be configured at a point of time when or after RRC connection is established. A plurality of serving cells may be constituted by one base station device 1, and a plurality of serving cells may be constituted by a plurality of base station devices 1.

A frequency band in an uplink and a downlink (UL/DL operating band) and a duplex mode (TDD, FDD) are correlated with one index. The frequency band in an uplink and a downlink (UL/DL operating band) and the duplex mode are managed on one table. This index may be also referred to as an E-UTRA operating band, an E-UTRA band, or a band. For example, Index 1 may be also referred to as Band 1, Index 2 may be also referred to as Band 2, and Index n may be also referred to as Band n. For example, in Band 1, an uplink operating band is from 1920 MHz to 1980 MHz, a downlink operating band is from 2110 MHz to 2170 MHz, and the duplex mode is FDD. In Band 33, the uplink and downlink operating band is from 1900 MHz to 1920 MHz, and the duplex mode is TDD.

A combination (E-UTRA CA Band) of bands in which performing carrier aggregation is possible may be configured. For example, the carrier aggregation performed by using component carriers in Band 1 and Band 5 may be indicated to be possible. That is, it may be indicated whether or not the carrier aggregation is performed by using component carriers in bands different from each other.

A combination of a band supported by a terminal device 2, and a band in which performing the carrier aggregation is possible is configured in function information (UE capability, UE-EUTRA-Capability) of the terminal device 2. The base station device 1 can recognize a function included in the terminal device 2 by the terminal device 2 transmitting the function information.

The present invention may be applied to some of a plurality of configured cells. A cell configured in the terminal device 2 may be also referred to as a serving cell.

TDD is a technology in which time division multiplexing is performed on an uplink signal and a downlink signal, and thus communication between an uplink and a downlink is allowed in a single frequency band (carrier frequency, component carrier). In LTE, configuration is performed in advance, and thus a downlink and an uplink may be switched in a subframe unit. In TDD, a subframe (downlink subframe, and subframe reserved for downlink transmission) in which downlink transmission is allowed, and a subframe (uplink subframe, and subframe reserved for uplink transmission) in which uplink transmission is allowed, and further a guard period (GP) are configured, and thus a subframe (special subframe) in which downlink transmission and uplink transmission can be switched in a time region (symbol region) is defined. In a special subframe, a time region (symbol corresponding to the time region) in which downlink transmission is allowed is referred to as a downlink pilot time slot (DwPTS), and a time region (symbol corresponding to the time region) in which uplink transmission is allowed is referred to as an uplink pilot time slot (UpPTS). For example, in a case where a subframe i is a downlink subframe in the terminal device 2, a downlink signal transmitted from the base station device 1 can be received. In a case where a subframe j different from the subframe i is an uplink subframe, an uplink signal can be transmitted from the terminal device 2 to the base station device 1. In a case where a subframe k which is different from the subframe i or the subframe j is a special subframe, a downlink signal can be received in a downlink time region DwPTS, and an uplink signal can be transmitted in an uplink time region UpPTS.

In order to perform communication by using the TDD scheme in LTE and LTE-A, notification is performed by using a specific information element (TDD UL/DL configuration (TDD UL/DL configuration(s), TDD uplink-downlink configuration(s)), TDD configuration (TDD configuration(s), tdd-Config, TDD config), and UL/DL (UL-DL) configuration (uplink-downlink configuration(s))). The terminal device 2 may consider a certain subframe as any one of an uplink subframe, a downlink subframe, and a special subframe, based on notified information, and may perform transmission and reception processing.

Regarding a constitution of a special subframe (DwPTS, UpPTS, and length of GP in the special subframe), a plurality of patterns is defined, and is managed in a manner of a table. The plurality of patterns is correlated with values (indices), and notification of the value corresponding to the pattern is performed, and thus the terminal device performs processing of the special subframe. That is, the terminal device 2 can also be notified of information regarding a constitution of the special subframe, from the base station device 1.

A traffic adaptive control technology in which a ratio of an uplink resource and a downlink resource is changed in accordance with traffic of an uplink and traffic of a downlink (information quantity, data quantity, and communication volume) may be applied to TDD. For example, a ratio of a downlink subframe and an uplink subframe may be dynamically changed. Regarding a certain subframe, the downlink subframe and the uplink subframe may be adaptively switched. Such a subframe is referred to as a flexible subframe. The base station device 1 can receive an uplink signal or transmit a downlink signal in a flexible subframe, in accordance with a condition (situation). The terminal device 2 may perform reception processing considering a flexible subframe as the downlink subframe, as long as the base station device 1 does not perform an instruction of transmission of an uplink signal in the flexible subframe. Such TDD in which the ratio of the downlink subframe and the uplink subframe, subframes of the uplink and the downlink, or the TDD UL/DL (re)configuration is dynamically changed may be also referred to as dynamic TDD (DTDD) or enhanced interference mitigation and traffic adaptation (eIMTA). For example, TDD UL/DL configuration information may be transmitted through L1 signaling.

FDD is a technology in which communication between a downlink and an uplink is allowed different frequency bands (carrier frequencies, component carriers).

As the communication system, a cellular communication system in which a plurality of areas which are covered by the base station device 1 and have a cell shape is disposed may be applied. A single base station device 1 may manage a plurality of cells. A single base station device 1 may manage a plurality of remote radio heads (RRHs). A single base station device 1 may manage a plurality of local areas. A single base station device 1 may manage a plurality of heterogeneous networks (HetNets). A single base station device 1 may manage a plurality of low power base station devices (LPN: Low Power Node).

In the communication system, the terminal device 2 measures reference signal received power (RSRP) based on a cell-specific reference signal(s) (CRS).

In the communication system, communication may be performed by using carriers (component carriers) in which some of physical channels or signals defined in LTE are not mapped. Here, such a carrier is referred to as a new carrier type (NCT). For example, in the new carrier type, a cell-specific reference signal, a physical downlink control channel, or a synchronization signal (primary synchronization signal, secondary synchronization signal) may be not mapped. In a cell in which the new carrier type is configured, application of a physical channel (PDCH: Physical Discovery Channel, NDS: New Discovery Signal(s), DRS: Discovery Reference Signal, and DS: Discovery Signal) for measuring mobility or detecting time/frequency synchronization is examined. The NCT may be also referred to as an additional carrier type (ACT). Regarding the NCT, a known carrier type may be also referred to as a legacy carrier type (LCT).

In the embodiment, "X/Y" includes a meaning of "X or Y". In the embodiment, "X/Y" includes a meaning of "X and Y". In the embodiment, "X/Y" includes a meaning of "X and/or Y".

### (Physical Channel)

The main physical channel (or physical signal) used in LTE and LTE-A will be described. The channel means a medium used in transmission of a signal. The physical channel means a physical medium used in transmission of a signal. The physical channel may be added after now, or the structure or a format type thereof may be changed or added in LTE and LTE-A, and release of the subsequent standard. However, even when such a case occurs, the case does not influence the descriptions for the embodiment of the present invention.

In LTE and LTE-A, scheduling of the physical channel is managed by using a radio frame. One radio frame is 10 ms and one radio frame is constituted by 10 subframes. Further, one subframe is constituted by 2 slots (that is, one slot is 0.5 ms). The scheduling is managed by using a resource block or a resource block pair as a smallest unit for the scheduling, to which the physical channel is allocated. The resource block is defined as a region which includes a predetermined frequency region and a predetermined transmission time interval (for example, one slot, 7 OFDM symbols, and 7 SC-FDMA symbols). In the predetermined frequency region, a frequency axis is constituted by a set of a plurality of subcarriers (for example, 12 subcarriers). The resource block pair is constituted by two resource blocks which are continuous in one subframe in a time direction.

In order to improve communication accuracy, each OFDM symbol and each SC-FDMA symbol are transmitted with a cyclic prefix (CP) attached thereto. The length of the CP causes the number of symbols allocated in one slot to be changed. For example, in a case of a normal CP, 7 symbols can be allocated in one slot. In a case of an extended CP, 6 symbols can be allocated in one slot.

An interval between subcarriers is narrowed, and thus 24 subcarriers can be allocated in one resource block. Such a case may be applied to a specific physical channel.

The physical channel corresponds to a set of resource elements for transmitting information which is output from a higher layer. A physical signal is used in a physical layer, and does not transmit information which is output from a higher layer. That is, control information of a higher layer, such as a radio resource control (RRC) message or system information (SI) is transmitted on a physical channel.

As a downlink physical channel, there are a physical downlink shared channel (PDSCH), a physical broadcast channel (PBCH), a physical multicast channel (PMCH), a physical control format indicator channel (PCFICH), a physical downlink control channel (PDCCH), a physical hybrid ARQ indicator channel (PHICH), and an enhanced physical downlink control channel (EPDCCH). As a downlink physical signal, various reference signals and various synchronization signals are provided. As a downlink reference signal (DL-RS), there are a cell-specific reference signal (CRS), an UE specific reference signal (UERS), and a channel state information reference signal (CSI-RS). As a synchronization signal, there are a primary synchronization signal (PSS), and a secondary synchronization signal (SSS).

As an uplink physical channel, there are a physical uplink shared channel (PUSCH), a physical uplink control channel (PUCCH), and a physical random access channel (PRACH). As an uplink physical signal, various reference signals are provided. As an uplink reference signal, there are a demodulation reference signal (DMRS) and a sounding reference signal (SRS).

The PSS is constituted by three types of sequences. The SSS is constituted by two sequences of which a code length is 31. The sequences are disposed at different positions in a frequency domain. A cell identifier (PCI: physical layer cell identity, physical cell identity, physical cell identifier) for identifying the base station device 1 can be specified from 504 physical layer cell identifiers by combining the PSS and the SSS. The terminal device 2 identifies a cell identifier of the base station device 1 based on a synchronization signal received by cell searching. The cell identifier may be also referred to as a cell ID. The physical layer cell identifier may be also referred to as a physical cell ID.

A physical broadcast channel (PBCH) is transmitted for the purpose of performing a notification of a control parameter (broadcast information or system information) which is commonly used in terminal devices 2 in a cell. Broadcast information (for example, SIB1 or portion of system information) of which notification on the PBCH is not performed is transmitted on a PDSCH through a DL-SCH. Notification of a cell global identifier (CGI), a tracking area identifier (TAI), random access configuration information (transmission timing timer and the like), common radio resource configuration information (shared radio resource configuration information), and the like as the broadcast information is performed. The cell global identifier (CGI) indicates an identifier specific to a cell. The tracking area identifier is for managing an area waiting by paging.

The downlink reference signal is classified into a plurality of types in accordance with the use thereof. For example, the cell-specific reference signal (CRS) is a pilot signal transmitted with predetermined power for each cell, and is a downlink reference signal of which transmission is periodically repeated in the frequency domain and in the time domain, based on a predetermined rule. The terminal device 2 receives the cell-specific reference signal, and thus measures reception quality for each cell. The terminal device 2 uses the cell-specific reference signal as a reference signal for demodulating a physical downlink control channel or a physical downlink shared channel transmitted by an antenna port which is the same as that used for the cell-specific reference signal. As a sequence used for the cell-specific reference signal, a sequence which can be identified for each cell is used. The CRS may be transmitted in all downlink subframes by the base station device 1. However, the terminal device 2 may receive the CRS only on a designated downlink subframe.

The downlink reference signal is also used in estimating propagation fluctuation in a downlink. Each of downlink reference signals used in estimating propagation fluctuation may be referred to as a channel state information reference signal (CSI-RS) or a CSI reference signal. A CSI reference signal which is not transmitted in practice or is transmitted with zero power may be referred to as a zero power channel state information reference signals (ZP CSI-RS) or a zero power CSI reference signal. A CSI reference signal which is transmitted in practice may be referred to as a non zero power channel state information reference signal (NZP CSI-RS) or a non zero power CSI reference signal.

Each of downlink resources used in measuring an interference component may be referred to as a channel state information-interference measurement resource (CSI-IMR) or a CSI-IM resource. The terminal device 2 may measure interference signal by using a zero power CSI reference signal included in a CSI-IM resource, so as to calculate a value of a CQI. A downlink reference signal which is configured dedicatedly for each terminal device 2 is referred to as UE specific reference signals (UERS) or dedicated reference signals, downlink demodulation reference signals (DL DMRS), and the like. Such a downlink reference signal is used in demodulating the physical downlink control channel or the physical downlink shared channel.

A sequence for the downlink reference signals may be generated based on a pseudo-random sequence. The sequence for the downlink reference signals may be generated based on a Zadoff-Chu sequence. The sequence for the downlink reference signals may be generated based on a Gold sequence. The sequence for the downlink reference signals may be generated based on subspecies or modifications of the pseudo-random sequence, the Zadoff-Chu sequence, or the Gold sequence.

The physical downlink shared channel (PDSCH) is used for transmitting downlink data (DL-SCH). The PDSCH is also used in a case where system information is transmitted on the DL-SCH. Radio resource assignment information for the physical downlink shared channel is indicated by the physical downlink control channel. The PDSCH is also used in performing notification of a parameter (information element, RRC message) relating to a downlink and an uplink.

The physical downlink control channel (PDCCH) is transmitted by using some OFDM symbols from the leading of each subframe, and is used for notifying the terminal device 2 of resource assignment information in accordance with scheduling of the base station device 1 or of control information, for example, an instruction of an increase or a decrease of transmitted power. It is necessary that the terminal device 2 monitors a physical downlink control channel thereof before a higher layer message (paging, handover command, RRC message, and the like) is transmitted and received, and acquires resource assignment information from the physical downlink control channel of the terminal device 2. The resource assignment information is referred to an uplink grant when transmission is performed, and is referred to a downlink grant (also referred to downlink assignment) when reception is performed. The physical downlink control channel may be constituted so as to be transmitted with the above-described OFDM symbols, and to be transmitted in a region of resource blocks which are dedicatedly allocated to the terminal device 2 from the base station device 1. The physical downlink control channel transmitted in the region of the resource blocks which are dedicatedly allocated to the terminal device 2 from the base station device 1 may be also referred to an enhanced physical downlink control channel (EPDCCH: Enhanced PDCCH). The PDCCH may be also referred to a first control channel. The EPDCCH may be also referred to a second control channel. The resource region to which the PDCCH can be allocated may be also referred to a first control channel region. The resource region to which the EPDCCH can be allocated may be also referred to a second control channel region.

In descriptions for the present invention, the PDCCH is assumed to include the EPDCCH. That is, descriptions regarding the PDCCH can be also applied to the EPDCCH.

The base station device 1 may transmit a PCFICH, a PHICH, a PDCCH, an EPDCCH, a PDSCH, a synchronization signal (PSS/SSS), and a downlink reference signal in a DwPTS of a special subframe. The base station device 1 may not transmit a PBCH in the DwPTS of the special subframe.

The terminal device 2 may transmit a PRACH and a SRS in an UpPTS of the special subframe. The terminal device 2 may not transmit a PUCCH, a PUSCH, and a DMRS in the UpPTS of the special subframe.

In a case where the special subframe is constituted only by a GP and an UpPTS, the terminal device 2 may transmit the PUCCH and/or the PUSCH and/or the DMRS in the UpPTS of the special subframe.

Here, the terminal device 2 monitors a set of PDCCH candidates and/or EPDCCH candidates. Hereinafter, for simple descriptions, a PDCCH may include an EPDCCH. The PDCCH candidates indicate candidates having a probability of the base station device 1 mapping and transmitting a PDCCH. Each of the PDCCH candidates is constituted from one or a plurality of control channel elements (CCEs). Each of the CCEs is constituted from predetermined number of REGs (resource element groups). Each of the REGs is constituted by a predetermined number of resource elements in an OFDM symbol indicated by a control format indicator (CFI) of which a notification is performed on a PCFICH. The monitoring may include a case where the terminal device 2 attempts to decode each of PDCCHs in a set of the PDCCH candidates, in accordance to all monitored DCI formats.

Details of the EPDCCH will be described below. The EPDCCH is used for performing a notification of downlink control information (DCI), similarly to the PDCCH.

The EPDCCH is transmitted by using a set of one or more enhanced control channel elements (ECCEs). Each of the ECCEs is constituted by a plurality of enhanced resource element groups (EREGs). The EREG is used for defining mapping of the EPDCCH for resource elements. For each RB pair, 16 EREGs to which numbers from 0 to 15 are respectively attached are defined. That is, EREG0 to EREG15 are defined in each RB pair. The EREG0 to the EREG15 in each RB pair are periodically defined for resource elements other than resource elements on which a predetermined signal and/or a predetermined channel is mapped. The definition of the EREG0 to the EREG 15 is performed with priority over the frequency direction. A resource element on which a demodulation reference signal associated with an EPDCCH which is transmitted through antenna ports 107 to 110 is mapped does not define the EREG.

The number of ECCEs used for one EPDCCH depends on an EPDCCH format, and is determined based on other parameters. The number of ECCEs used for one EPDCCH is also referred to as an aggregation level. For example, the number of ECCEs used for one EPDCCH is determined based on the number of resource elements which can be used in EPDCCH transmission in one RB pair, a transmission direction of an EPDCCH, and the like. For example, the number of ECCEs used for one EPDCCH is 1, 2, 4, 8, 16, or 32. The number of EREGs used for one ECCE is determined based on the type of a subframe, and the type of the cyclic prefix. For example, the number of EREGs used for one ECCE is 4 or 8. As the transmission method of the EPDCCH, distributed transmission and localized transmission are supported.

The EPDCCH can use the distributed transmission and the localized transmission. In the distributed transmission and the localized transmission, mapping of an ECCE for an EREG and an RB pair is different from each other. For example, in the distributed transmission, one ECCE is constituted by using an EREG of a plurality of RB pairs. In the localized transmission, one ECCE is constituted by using an EREG of one RB pair.

The base station device 1 performs a configuration relating to an EPDCCH, for the terminal device 2. The terminal device 2 monitors a plurality of EPDCCHs based on the configuration from the base station device 1. A set of RB pairs used for the terminal device 2 monitoring EPDCCHs can be configured. The set of the RB pairs is also referred to as an EPDCCH set or an EPDCCH-PRB set. One EPDCCH set or more can be configured for one terminal device 2. Each EPDCCH set is constituted by one RB pair or more. The configuration relating to the EPDCCH can be individually performed for each EPDCCH set.

The base station device 1 can configures a predetermined number of EPDCCH sets for the terminal device 2. For example, EPDCCH sets of up to 2 can be configured as an EPDCCH set 0 and/or an EPDCCH set 1. Each of the EPDCCH sets can be constituted by a predetermined number of RB pairs. Each of the EPDCCH sets constitutes one set of a plurality of ECCEs. The number of ECCEs constituting one EPDCCH set is determined based on the number of RB pairs configured as the EPDCCH set, and the number of EREGs used for one ECCE. In a case where the number of ECCEs constituting one EPDCCH is N, each EPDCCH set configures ECCEs to which the numbers of 0 to (N-1) are respectively attached. For example, in a case where the number of EREGs used for one ECCE is 4, an EPDCCH set constituted by 4 RB pairs constitutes 16 ECCEs.

Here, PDCCH candidates/EPDCCH which are monitored by the terminal device 2 are defined based on CCEs/ECCEs constituting an EPDCCH set. A set of the PDCCH candidates/EPDCCH candidates is defined as a search space. An UE-specific search space and a common search space are defined. The UE-specific search space is a search space specific to the terminal device 2, and the common search space is a search space specific to the base station device 1 (cell, transmission node). An UE group-specific search space which is a search space specific to a group of terminal devices including the terminal device 2 may be defined. An UE group-specific search space is a search space based on control information (for example, RNTI) specific to a group of terminal devices. The control information specific to a group of terminal devices may be configured so as to be specific to the terminal device 2. In this case, from a viewpoint of the terminal device 2, the UE group-specific search space may be considered as an UE-specific search space. The monitoring of a PDCCH/EPDCCH includes a case where the terminal device 2 attempts to decode each of the PDCCH candidates/EPDCCH candidates in the search space, in accordance with the monitored DCI format.

The CSS is used when downlink control information is transmitted to a plurality of terminal devices 2. That is, the CSS is defined by a common resource for the plurality of terminal devices 2. The USS is used when the downlink control information is transmitted to a certain specific terminal device 2. That is, the USS is dedicatedly configured for the terminal device 2. The USS may be configured so as to be duplicated in a plurality of terminal devices 2. The CSS may be configured only in a primary cell. The terminal device 2 may perform monitoring for each non-DRX subframe of a primary cell.

Downlink control information (DCI) is transmitted to the terminal device 2 from the base station device 1 in a specific format (constitution, form). The format may be referred to as a DCI format. Transmission of the DCI format includes a case where DCI having a certain format is transmitted. The DCI format may be restated as a format for transmitting the DCI. As the DCI format transmitted to the terminal device 2 from the base station device 1, a plurality of formats is prepared (for example, DCI format 0/1/1A/1B/1C/1D/2/2A/2B/2C/2D/3/3A/4). Fields (bit fields) corresponding to various types of downlink control information are set in the DCI format.

The base station device 1 transmits DCI (single DCI) which is common between a plurality of terminal devices including the terminal device 2, in the CSS. The base station device 1 transmits individual DCI to the terminal device 2 on the CSS or the USS.

The DCI can include resource assignment of a PUSCH or a PDSCH, modulation and coding scheme, a sounding reference signal request (SRS request), a channel state information request (CSI request), an instruction of first transmission or retransmission of a single transport block, a transmit power control command for a PUSCH, a transmit power control command for a PUCCH, cyclic shift of an UL DMRS, an index of an orthogonal code cover (OCC), and the like. In addition, the DCI can include various types of control information.

A format used in uplink transmission control (for example, scheduling of a PUSCH, and the like) may be referred to an uplink DCI format (for example, DCI format 0/4) or DCI associated with an uplink. A DCI format used in the uplink transmission control may be referred to an uplink grant (UL grant). A format used in downlink reception control (for example, scheduling of a PDSCH, and the like) may be referred to a downlink DCI format (for example, DCI format 1/1A/1B/1C/1D/2/2A/2B/2C/2D), or DCI associated with a downlink. A DCI format used in the downlink reception control may be referred to a downlink grant (DL grant) or downlink assignment (DL assignment). A format which is used for adjusting transmitted power for each of a plurality of terminal devices may be referred to a group triggering DCI format (for example, DCI format 3/3A).

For example, DCI format 0 is used for transmitting information regarding resource assignment of a PUSCH, which is required for performing scheduling of one PUSCH in one serving cell, or information regarding a modulation scheme, information regarding a transmit power control (TPC) command for the PUSCH, and the like. The DCI is transmitted on a PDCCH/EPDCCH.

The terminal device 2 monitors PDCCHs in a CSS and/or a USS of a PDCCH region, and detects a PDCCH of the terminal device 2.

An RNTI is used when downlink control information (transmission on a PDCCH) is transmitted. Specifically, a cyclic redundancy check (CRC) parity bit which is added to a DCI format is scrambled by the RNTI. The terminal device 2 attempts to decode a DCI format to which the CRC parity bit scrambled by the RNTI is added, and detects DCI in which it is determined that decoding of the CRC succeeds, as the DCI of the terminal device 2 (such a process is also referred to blind decoding).

Plural types of RNTIs are used. For example, a C-RNTI, a semi-persistent scheduling (SPS) C-RNTI, and a Temporary C-RNTI can be configured as RNTIs specific to the terminal device 2, by RRC. The C-RNTI, the semi-persistent scheduling (SPS) C-RNTI, and the Temporary C-RNTI can be used for dynamic scheduling, contention resolution, or the like of unicast transmission. A P-RNTI can be used as a predefined RNTI, for a notification of paging and a change of system information. An SI-RNTI can be used for broadcasting system information. An M-RNTI can be used for a notification of a change of multi-cast channel information. An RA-RNTI can be used for a random access response. A G-RNTI is used as an RNTI common between a plurality of terminal devices, for transmitting a common PDCCH/EPDCCH to the plurality of terminal devices. In a case where the G-RNTI is configured by RRC, so as to specific to each of the terminal devices, from a viewpoint of the terminal device, the G-RNTI may be considered as an RNTI specific to the terminal device. For example, the G-RNTI can be used for dynamic UL/DL configuration in TDD. A search space may be configured based on the G-RNTI.

The terminal device 2 attempts to decoding (performs blind decoding) in accordance with aggregation levels of the CSS and the USS, and the number of PDCCH candidates, and the size of the DCI format (DCI format size, payload size of the DCI format). For example, in a case where the numbers of PDCCH candidates thereof are 4 and 2 for the aggregation levels of 4 and 8, and the number of types of DCI formats having different sizes is 2 in the CSS, the number of performing blind decoding is 12. That is, the terminal device 2 performs blind decoding up to 12 times in the CSS. In a case where the numbers of PDCCH candidates thereof are 6, 6, 2 and 2 for the aggregation levels of 1, 2, 4 and 8, and the number of types of DCI formats having different sizes is 3 in the USS, the number of performing blind decoding is 48. That is, the terminal device 2 performs blind decoding up to 48 times in the USS. In other words, the terminal device 2 performs blind decoding up to 60 times in the CSS and the USS. The number of performing blind decoding is determined based on the number of DCI formats having different sizes (DCI formats having different sizes such as 40 bits and 44 bits), the aggregation level of the search space, the number of PDCCH candidates, or the number of component carriers (cells) which perform cross carrier scheduling. If the sizes are the same as each other, the terminal device 2 performs blind decoding for one DCI format even when different types of DCI formats are provided. For example, since the size of the DCI format 0 is the same as the size of the DCI format 1A, blind decoding is performed in a state where consideration as one DCI format is performed. A DCI format monitored by the terminal device 2 depends on a transmission mode configured in each serving cell.

Considering a reception processing delay of the terminal device 2, the total number (or threshold value) of performing blind decoding may be set (defined) in advance. The total number of performing blind decoding may vary depending on whether or not carrier aggregation is configured. That is, the total number of performing blind decoding may be changed depending on the number of component carriers (serving cells) which perform blind decoding.

In a case where carrier aggregation is configured, the terminal device 2 may be scheduled in a plurality of serving cells. However, the random access procedure is performed in at most one serving cell regardless of the number of serving cells. In cross carrier scheduling with a carrier indicator field (CIF), scheduling of resources for other serving cells may be performed on a PDCCH of one certain serving. However, cross carrier scheduling is not applied to a primary cell. A primary cell is scheduled on a PDCCH of the primary cell. In a case where a PDCCH of a secondary cell is configured, cross carrier scheduling is not applied to the secondary cell. In a case where the PDCCH of a secondary cell is not configured, cross carrier scheduling may be applied to the secondary cell.

Regarding cross carrier scheduling, in a certain cell, a carrier indicator field (CIF) is included in an uplink grant (DCI format associated with an uplink) or a downlink grant (DCI format associated with a downlink) and is transmitted, and thus the uplink grant or the downlink grant may be transmitted to different cells. That is, one cell may control uplink/downlink transmission to a plurality of cells, by using a DCI format including a CIF.

A terminal device 2 in which a CIF associated with monitoring of a PDCCH in a serving cell c is configured monitors a CIF and a PDCCH in which a CRC scrambled in a PDCCH USS of the serving cell c by a C-RNTI is configured.

A terminal device 2 in which a CIF associated with monitoring of a PDCCH in the primary cell is configured monitors a CIF and a PDCCH in which a CRC scrambled in a PDCCH USS of the primary cell by an SPS-RNTI is configured.

In cross carrier scheduling, the base station device 1 is notified that the terminal device 2 supports the function, by using function information (UE-EUTRA-Capability). The base station device 1 performs a configuration (CrossCarrierSchedulingConfig) relating to the cross carrier scheduling, for the terminal device 2. In a case where the base station device 1 transmits configuration information to the terminal device 2, communication can be performed by using the cross carrier scheduling. Notification of such configuration information may be performed by using higher layer signaling.

The configuration relating to the cross carrier scheduling includes information (cif-Presence) indicating whether or not a DCI format of a PDCCH/EPDCCH includes a CIF. The configuration relating to the cross carrier scheduling may include information (schedulingCellId) indicating a cell which performs signaling of downlink allocation (downlink grant) and an uplink grant (that is, which cell performs signaling of downlink allocation and an uplink grant). Such information is referred to as scheduling cell ID information. The configuration relating to the cross carrier scheduling may include information (pdsch-Start) indicating a starting OFDM symbol of a PDSCH for a cell indicated by the scheduling cell ID information. The scheduling cell ID information may be independently configured in an uplink and a downlink, a terminal device 2 that independently supports a function of performing cross carrier scheduling for the uplink and the downlink. Information indicating the starting OFDM symbol of a PDSCH may be configured only for a downlink.

In a case where carrier aggregation is configured, a downlink resource for semi-persistent scheduling may be configured in a primary cell, and only PDCCH allocation for the primary cell may be performed prior to semi-persistent allocation.

In a case where carrier aggregation is configured, an uplink resource for the semi-persistent scheduling may be configured in a primary cell, and only PDCCH allocation for the primary cell may be performed prior to semi-persistent allocation.

A link between an uplink and a downlink allows a serving cell to which a downlink grant or an uplink grant is applied in a case where there is no CIF, to be recognized. A downlink grant received in the primary cell corresponds to transmission of a downlink in a primary cell. An uplink grant received in the primary cell corresponds to transmission of an uplink in the primary cell. A downlink grant received in a secondary cell #n corresponds to transmission of a downlink in the secondary cell #n. An uplink grant received in a secondary cell #n corresponds to transmission of an uplink in the secondary cell #n. In a case where a use of an uplink is not configured for the secondary cell #n, the uplink grant is ignored by a terminal device 2 which has received the uplink grant.

In another serving cell, in a case where monitoring of a PDCCH having an attached CIF which corresponds to a certain secondary cell is configured, the terminal device 2 does not expect that the PDCCH of the secondary cell is monitored. At this time, the base station device 1 may not transmit a DCI to the terminal device 2 in the secondary cell by using the PDCCH.

Here, the RNTI includes a cell-radio network temporary identifier (C-RNTI). The C-RNTI is a unique identifier used for RRC connection and identification of scheduling. The C-RNTI is used for uni-cast transmission which is dynamically scheduled. In a case where carrier aggregation is configured, the C-RNTI (same C-RNTI) having the same value is applied in all serving cells.

The RNTI includes a Temporary C-RNTI. The Temporary C-RNTI is an identifier used for a random access procedure. For example, the terminal device 2 may decode the DCI format (for example, DCI format 0) to which the CRC scrambled by using the Temporary C-RNTI is added and which is associated with an uplink, only in the CSS. The terminal device 2 may attempt to decode the DCI format (for example, DCI format 1A) to which the CRC scrambled by using the Temporary C-RNTI is added and which is associated with a downlink, in the CSS and the USS.

In a case where the DCI is transmitted in the CSS, the base station device 1 adds a CRC parity bit scrambled by using the Temporary C-RNTI or the C-RNTI, to the DCI (DCI format). In a case where the DCI is transmitted in the USS, the base station device 1 may add CRC scrambled by using the C-RNTI, to the DCI (DCI format).

A physical uplink shared channel (PUSCH) is mainly used for transmitting uplink data and uplink control information (UCI). The UCI transmitted on a PUSCH includes a scheduling request (SR), channel state information (CSI), and/or ACK/NACK. The CSI transmitted on a PUSCH includes aperiodic CSI (A-CSI) and periodic CSI (P-CSI). Similarly to a case of the downlink, resource assignment information of the physical uplink shared channel is indicated by a physical downlink control channel. A PUSCH scheduled by a dynamic scheduling grant transmits the uplink data. A PUSCH scheduled by a random access response grant transmits information (for example, identification information of the terminal device 2, and Message 3) of the terminal device 2, which is associated to random access. Parameters used for setting transmitted power for transmission on the PUSCH may be changed in accordance with the type of the detected grant. Control data is transmitted in a form of channel quality information (CQI aₙd/or PMI), HARQ response information (HARQ-ACK), and rank information (RI). That is, the control data is transmitted in a form of uplink control information.

A physical uplink control channel (PUCCH) is used for notification of reception acknowledgement response (ACK/NACK: Acknowledgement/Negative Acknowledgement) of downlink data transmitted on a physical downlink shared channel, or notification of channel information (channel state information) of a downlink, and is used for performing a scheduling request (SR) which is a resource assignment request (radio resource request) of an uplink. Channel state information (CSI) includes a channel quality indicator (CQI), a precoding matrix indicator (PMI), a precoding type indicator (PTI), and a rank indicator (RI). Each of the indicators may be described as indication, but the use and the meaning thereof is the same. A format of the PUCCH may be switched in accordance with the transmitted UCI. For example, in a case where the UCI is constituted from HARQ-ACK and/or SR, the UCI may be transmitted on a PUCCH of a format 1/1a/1b/3 (PUCCH format 1/1a/1b/3). In a case where the UCI is constituted from the CSI, the UCI may be transmitted on a PUCCH of a format 2/2a/2b (PUCCH format 2/2a/2b). In order to avoid collision with a SRS, a shortened format obtained by performing puncturing by one symbol, and a normal format obtained by not performing puncturing by one symbol are provided in the PUCCH format 1/1a/1b. For example, in a case where simultaneous transmission of a PUCCH and a SRS in the same subframe is available, the PUCCH format 1/1a/1b in a SRS subframe is transmitted in the shortened format. In a case where simultaneous transmission of a PUCCH and a SRS in the same subframe is not available, the PUCCH format 1/1a/1b in a SRS subframe is transmitted in the normal format. At this time, even when transmission of the SRS occurs, the SRS may not be transmitted.

CSI reporting includes periodic CSI reporting (P-CSI reporting) and aperiodic CSI reporting (A-CSI reporting). In a case where the periodic CSI reporting is configured by RRC, in the periodic CSI reporting, channel state information is periodically reported based on the configuration. In the aperiodic CSI reporting, aperiodic channel state information is reported based on a CSI request included in the DCI format, in a predetermined subframe. The periodic CSI reporting is transmitted on a PUCCH or a PUSCH. The aperiodic CSI reporting is transmitted on a PUSCH. In a case where an instruction is performed based on information (CSI request) included in the DCI format, the terminal device 2 can transmit CSI without uplink data, on the PUSCH.

The CSI includes RI, PMI, CQI, and PTI. The RI indicates the number of transmission layers (the number of ranks). The PMI is information indicating a predefined precoding matrix. The PMI indicates one precoding matrix by using one piece of information or two pieces of information. The PMI in a case of using two pieces of information is also referred to first PMI and second PMI. The CQI is information indicating a combination of a predefined modulation scheme and a predefined coding rate. The terminal device 2 reports CSI which has been recommended to the base station device 1. The terminal device 2 reports CQI which satisfies predetermined reception quality, for each transport black (code word).

Subframes (reporting instances) in which the periodic CSI reporting is allowed are determined based on information (CQI index, PMI index, RI index) configured in a higher layer, by using a period of reporting and a subframe offset. The information configured in a higher layer can be configured for each subframe set which is configured in order to measure the CSI. In a case where only one piece of information is configured for a plurality of subframe sets, the information may be considered to be common between the subframe sets.

One P-CSI report for each serving cell is configured for a terminal device 2 in which Transmission modes 1 to 9 are configured, by higher layer signaling.

One or more P-CSI reports for each serving cell are configured for a terminal device 2 in which Transmission mode 10 is configured, by higher layer signaling.

8 CSI-RS ports are configured for a terminal device 2 in which Transmission mode 9 or 10 is configured, and a reporting mode (Mode 1-1) of a single PMI in a wide band CQI is configured in Submode 1 or Submode 2, by using a certain parameter (PUCCH_format1-1_CSI_reporting_mode) and by higher layer signaling.

A CQI report for an UE-selected subband CQI in a certain subframe of a certain serving cell is a report of channel quality in a specific part (portion) of a bandwidth of a serving cell which is indicated as a bandwidth part.

A CSI reporting type is for supporting a PUCCH CSI reporting mode. The CSI reporting type may be referred to as a PUCCH reporting type. The type-1 report supports CQI feedback for an UE-selected subband. The type-la report supports subband CQI and second PMI feedback. The type-2 report, the type-2b report, and the type-2c report support wide band CQI and PMI feedback. The type-2a report supports wide band PMI feedback. The type 3 report supports RI feedback. The type 4 report supports the wide band CQI. The type 5 supports RI and the wide band PMI feedback. The type 6 supports the RI and PTI feedback.

The uplink reference signal (UL-RS) includes a demodulation reference signal (DMRS) and a sounding reference signal (SRS). The demodulation reference signal is used when the base station device 1 demodulates a physical uplink control channel (PUCCH) and/or a physical uplink shared channel (PUSCH). The sounding reference signal is mainly used when the base station device 1 estimates a channel state of an uplink. The sounding reference signal includes a periodic sounding reference signal (P-SRS: Periodic SRS) and an aperiodic sounding reference signal (A-SRS: Aperiodic SRS). The periodic sounding reference signal is configured by a higher layer, so as to periodically perform transmission. Transmission of the aperiodic sounding reference signal is required by a SRS request included in the downlink control information format. The uplink reference signal may be also referred to as an uplink pilot signal and an uplink pilot channel.

A sequence for the uplink reference signals may be generated based on a pseudo-random sequence. The sequence for the uplink reference signals may be generated based on a Zadoff-Chu sequence. The sequence for the uplink reference signals may be generated based on a Gold sequence. The sequence for the uplink reference signals may be generated based on subspecies or modifications of the pseudo-random sequence, the Zadoff-Chu sequence, or the Gold sequence.

The periodic sounding reference signal may be also referred to as a periodic sounding reference signal and a Trigger Type 0 sounding reference signal (Trigger Type 0 SRS). The aperiodic sounding reference signal may be also referred to as an aperiodic sounding reference signal and a Trigger Type-1 sounding reference signal (Trigger Type-1 SRS).

The A-SRS may be classified into a signal specialized for estimating a channel of an uplink (for example, which may be also referred to as a Trigger Type-1a SRS), and a signal used for causing the base station device 1 to measure a channel state (CSI, CQI, PMI, and RI) by using channel reciprocity in TDD (for example, which may be also referred to as a Trigger Type-lb SRS) in coordinated communication. The DMRS is configured corresponding to each of the PUSCH and the PUCCH. The DMRS is time-multiplexed in the same subframe as that of the PUSCH or the PUCCH, and is transmitted.

Regarding the PUSCH and the PUCCH, the time multiplexing method of the DMRS may be different. For example, regarding the DMRS for the PUSCH, only one symbol is allocated in one slot which is constituted by 7 symbols. Regarding the DMRS for the PUCCH, 3 symbols are allocated in one slot which is constituted by 7 symbols.

A notification of various parameters (bandwidth, cyclic shift, a transmission subframe, and the like) is performed by higher layer signaling when SRS is transmitted. A subframe for transmitting the SRS is determined based on information regarding a transmission subframe which is included in a configuration of the SRS and of which notification is performed by the higher layer signaling. The information regarding the transmission subframe includes information (shared information) configured so as to be specific to a cell, and information (dedicated information, individual information) configured so as to be specific to a terminal device. The information configured so as to be specific to a cell includes information indicating a subframe in which SRS shared by all terminal devices 2 in a cell is transmitted. The information configured so as to be specific to a terminal device includes information which indicates a subframe offset and a period (periodicity) which form a subset of subframes configured so as to be specific to a cell. The terminal device 2 can determine a subframe (may be also referred to as an SRS subframe and an SRS transmission subframe) in which transmission of SRS is possible, by using the information. In a case where the terminal device 2 transmits a PUSCH in a subframe in which the SRS configured so as to be specific to a cell is transmitted, the terminal device 2 can puncture a time resource of the PUSCH by symbols for transmitting the SRS, and can transmit the PUSCH by using the punctured time resource. Thus, it is possible to avoid collision of transmission of the PUSCH with transmission of the SRS between terminal devices 2. It is possible to prevent deterioration of characteristics of the terminal device 2 which transmits the PUSCH. It is possible to ensure channel estimation accuracy in the terminal device 2 which transmits the SRS. Here, the information configured so as to be specific to a terminal device may be independently configured as the P-SRS and the A-SRS.

For example, in a case where the various parameters are configured by the higher layer signaling, a first uplink reference signal is periodically transmitted based on the configured transmission subframe. In a case where an instruction of a transmission request is performed by using a field (SRS request) regarding a transmission request of a second uplink reference signal included in the downlink control information format, the second uplink reference signal is aperiodically transmitted. In a case where a SRS request included in certain downlink control information format indicates being positive or indicates an index (value) corresponding to being positive, the terminal device 2 transmits an A-SRS in a predetermined transmission subframe. In a case where the detected SRS request indicates being negative or indicates an index (value) corresponding to being negative, the terminal device 2 does not transmit an A-SRS in a predetermined subframe. Notification of the information (shared parameter, shared information) configured so as to be specific to a cell is performed by using system information or a dedicated control channel (DCCH). Notification of the information (dedicated parameter, individual parameter, dedicated information, and individual information) configured so as to be specific to a terminal device is performed by using a common control channel (CCCH). Notification of the pieces of information may be performed by using a RRC message. Notification of the RRC message may be performed by a higher layer.

A physical random access channel (PRACH) is a channel used for notification of a preamble sequence. The physical random access channel has a guard time. The preamble sequence is constituted such that 64 types of sequences are prepared so as to express 6-bit information. The physical random access channel is used as an access unit of the terminal device 2 to the base station device 1. The terminal device 2 uses the physical random access channel in order to transmit a radio resource request when the physical uplink control channel is not configured, in response to a scheduling request (SR), or in order to request transmission timing adjustment information (which is also referred to as timing advance (TA)) to the base station device 1. The transmission timing adjustment information is needed for causing an uplink transmission timing to match with a reception timing window of the base station device.

Specifically, the terminal device 2 transmits a preamble sequence by using a radio resource for the physical random access channel, which is configured by the base station device 1. The terminal device 2 which receives the transmission timing adjustment information configures a transmission timing timer. The transmission timing timer tracks an effective time of the transmission timing adjustment information which is commonly configured by broadcast information (or which is individually configured by the layer 3 message). The terminal device 2 manages a state of the uplink in a manner that a state is set as a transmission timing adjusted state during the effective time of the transmission timing timer (during tracking), and the state is set as a transmission timing non-adjusted state (transmission timing not-adjusted state) during a period which is out of the effective period (during stopping). The layer 3 message is a message of a control-plane (C-plane), which is transmitted and received in a radio resource control (RRC) layer between the terminal device 2 and the base station device 1. The layer 3 message is used as having the same meaning as RRC signaling or a RRC message. The RRC signaling may be also referred to as higher layer signaling or dedicated signaling.

The random access procedure includes two random access procedures of a contention based random access procedure and a non-contention based random access procedure. The contention based random access procedure is a random access having a probability of collision occurring between a plurality of terminal devices 2.

The non-contention based random access procedure is a random access in which collision does not occur between the plurality of terminal devices 2.

The non-contention based random access procedure is formed from three steps. The terminal device 2 is notified of random access preamble assignment from the base station device 1 by dedicated signaling of the downlink. At this time, in the random access preamble assignment, the base station device 1 assigns a non-contention random access preamble to the terminal device 2. The random access preamble assignment is transmitted for handover by a source base station device (Source eNB). The random access preamble assignment is subjected to signaling by a handover command which is by a target base station device (Target eNB), or is subjected to signaling by a PDCCH in a case of downlink data arrival.

The terminal device 2 which receives the random access preamble assignment transmits a random access preamble (Message 1) on a RACH in an uplink. At this time, the terminal device 2 transmits the assigned non-contention random access preamble.

The base station device 1 which receives the random access preamble transmits a random access response in the downlink data (DL-SCH: Downlink Shared Channel) to the terminal device 2. Information transmitted in the random access response includes a first uplink grant (random access response grant) and timing alignment information for handover, and timing alignment information and a random access preamble identifier for downlink data arrival. The downlink data may be also referred to as downlink shared channel data (DL-SCH data).

Here, the non-contention based random access procedure is applied to handover, downlink data arrival, and positioning. The contention based random access procedure is applied to an initial access from RRC_IDLE, reestablishment of RRC connection, handover, downlink data arrival, and uplink data arrival.

The random access procedure according to the embodiment is the contention based random access procedure. An example of the contention based random access procedure will be described.

The terminal device 2 acquires System information block type-2 (SIB2) transmitted by the base station device 1. The SIB2 corresponds to a common configuration (common information) for all terminal devices 2 (or a plurality of terminal devices 2) in a cell. For example, the common configuration includes a configuration of the PRACH.

The terminal device 2 randomly selects the number of the random access preamble. The terminal device 2 transmits a random access preamble (Message 1) of the selected number to the base station device 1 by using the PRACH. The base station device 1 estimates a transmission timing of the uplink by using the random access preamble.

The base station device 1 transmits a random access response (Message 2) by using the PDSCH. The random access response includes plural pieces of information for the random access preamble detected by the base station device 1. For example, the plural pieces of information include the number of the random access preamble, a Temporary C-RNTI, a timing advance command (TA command), and a random access response grant.

The terminal device 2 transmits (initially transmits) uplink data (Message 3) on the PUSCH scheduled by using the random access response grant. The uplink data includes an identifier (InitialUE-Identity or information indicating a C-RNTI) for identifying the terminal device 2.

In a case where decoding of uplink data fails, the base station device 1 performs an instruction of retransmission of the uplink data by using a DCI format to which a CRC parity bit scrambled by using the Temporary C-RNTI is added. In a case where the instruction of retransmission of the uplink data is received by the DCI format, the terminal device 2 retransmits the same uplink data on a PUSCH scheduled by using the DCI format to which the CRC parity bit scrambled by using the Temporary C-RNTI is added.

In a case where decoding of uplink data fails, the base station device 1 may perform an instruction of retransmission of the uplink data by using a PHICH (NACK). In a case where the instruction of retransmission of the uplink data is received by using the NACK, the terminal device 2 retransmits the same uplink data on the PUSCH.

The base station device 1 succeeds decoding of the uplink data, and thus acquires the uplink data. Thus, it is possible to recognize which terminal device 2 transmits the random access preamble and the uplink data. That is, before decoding of the uplink data is determined to succeed, the base station device 1 recognizing which terminal device 2 transmits the random access preamble and the uplink data is not possible.

In a case where Message 3 including InitialUE-Identity is received, the base station device 1 transmits a contention resolution identity (Message 4) generated based on the received InitialUE-Identity, to the terminal device 2 by using the PDSCH. In a case where the received contention resolution identity matches with the transmitted InitialUE-Identity, the terminal device 2 (1) considers that contention resolution of the random access preamble succeeds, (2) sets the value of the Temporary C-RNTI in the C-RNTI, (3) discards the Temporary C-RNTI, and (4) considers that the random access procedure is correctly completed.

In the base station device 1 receives Message 3 including information which indicates the C-RNTI, the base station device 1 transmits a DCI format (Message 4) to which a CRC parity bit scrambled by using the received C-RNTI is added, to the terminal device 2. In a case where the terminal device 2 decodes the DCI format to which the CRC parity bit scrambled by using the received C-RNTI is added, the terminal device 2 (1) considers that contention resolution of the random access preamble succeeds, (2) discards the Temporary C-RNTI, and (3) considers that the random access procedure is correctly completed.

That is, the base station device 1 performs scheduling of a PUSCH by using the random access response grant as a part of the contention based random access procedure.

The terminal device 2 transmits the uplink data (Message 3) on the PUSCH scheduled by using the random access response grant. That is, the terminal device 2 performs transmission on a PUSCH corresponding to the random access response grant, as a part of the contention based random access procedure.

The base station device 1 performs scheduling of a PUSCH by using the DCI format to which a CRC scrambled by using the Temporary C-RNTI is added, as a part of the contention based random access procedure. The base station device 1 performs scheduling/instruction of transmission on the PUSCH by using a PHICH (NACK), as a part of the contention based random access procedure.

The terminal device 2 transmits (retransmits) the uplink data (Message 3) on the PUSCH scheduled by using the DCI format to which a CRC scrambled by using the Temporary C-RNTI is added. The terminal device 2 transmits (retransmits) the uplink data (Message 3) on the scheduled PUSCH, in response to reception of the PHICH. That is, the terminal device 2 performs transmission on the PUSCH corresponding to the retransmission of the same uplink data (transport block), as a part of the contention based random access procedure.

In the TDD scheme, the base station device 1 may transmit a PCFICH, a PHICH, a PDCCH, an EPDCCH, a PDSCH, a synchronization signal, and a downlink reference signal in a DwPTS of a special subframe. The base station device 1 may not transmit a PBCH in the DwPTS of the special subframe.

In the TDD scheme, the terminal device 2 may transmit a PRACH and an SRS in an UpPTS of a special subframe. The terminal device 2 may not transmit a PUCCH, a PUSCH, and a DMRS in the UpPTS of the special subframe.

In the TDD scheme, in a case where a special subframe is constituted only by a GP and an UpPTS, the terminal device 2 may transmit a PUCCH and/or a PUSCH and/or a DMRS in the UpPTS of a special subframe.

A logical channel will be described below. The logical channel is used for transmitting a RRC message or an information element. The logical channel is transmitted on a physical channel through a transport channel.

A broadcast control channel (BCCH) is a logical channel used for broadcasting system control information. For example, system information or information needed for an initial access is transmitted by using the broadcast control channel. A master information block (MIB) or System Information Block Type-1 (SIB1) is transmitted by using this logical channel.

A common control channel (CCCH) is a logical channel used when a network (base station) transmits and receives control information to and from a terminal device which does not have RRC connection, and a terminal device which has RRC connection. For example, UE-specific control information or configuration information is transmitted by using the shared control channel.

A dedicated control channel (DCCH) is a logical channel used when the network (base station) transmits and receives dedicated control information (individual control information) to and from a terminal device which has RRC connection. For example, cell-specific reconfiguration information is transmitted by using the dedicated control channel.

Signaling using a CCCH or a DCCH may be also referred to as RRC signaling.

Information regarding uplink power control includes information of which notification as broadcast information is performed, information of which notification as information (shared information) shared between terminal devices 2 in the same cell is performed, and information of which notification as terminal device-specific dedicated information is performed. The terminal device 2 sets transmitted power based on only the information of which notification as broadcast information is performed, or based on the information of which notification as the broadcast information/shared information is performed, and the information of which notification as dedicated information is performed.

Notification of radio resource control configuration shared information as the broadcast information (or the system information) may be performed. Notification of the radio resource control configuration shared information as dedicated information (mobility control information) may be performed.

A radio resource configuration includes a random access channel (RACH) configuration, a broadcast control channel (BCCH) configuration, a paging control channel (PCCH) configuration, a physical random access channel (PRACH) configuration, a physical downlink shared channel (PDSCH) configuration, a physical uplink shared channel (PUSCH) configuration, a physical uplink control channel (PUCCH) configuration, a sounding reference signal (SRS) configuration, a configuration relating to the uplink power control, a configuration relating to an uplink cyclic prefix length, and the like. That is, the radio resource configuration is configured so as to perform notification of a parameter used for generating a physical channel/physical signal. Parameters (information elements) of which notification is performed may be different in a case where notification as the broadcast information is performed, and in a case where notification as reconfiguration information is performed.

An information element needed for configuring the parameter relating to various physical channels/physical signals (PRACH, PUCCH, PUSCH, SRS, UL DMRS, CRS, CSI-RS, PDCCH, PDSCH, PSS/SSS, UERS, PBCH, PMCH, and the like) is constituted by shared configuration information and dedicated configuration information. The shared configuration information is information shared between terminal devices 2 in the same cell. The dedicated configuration information is configured for each of the terminal devices 2. The shared configuration information may be transmitted in the system information. In a case where reconfiguration is performed, the shared configuration information may be transmitted as the dedicated information. The configurations include a configuration of a parameter. The configuration of a parameter includes a configuration of a value of the parameter. In a case where the parameter is managed in a manner of a table, the configuration of a parameter includes a configuration of the value of an index.

Information regarding the parameter of the physical channel is transmitted to the terminal device 2 by using a RRC message. That is, the terminal device 2 configures resource assignment or transmitted power for each physical channel, based on the received RRC message. As the RRC message, there are a message relating to a broadcast channel, a message relating to a multicast channel, a message relating to a paging channel, a message relating to each of channels of a downlink, a message relating to each of channels of an uplink, and the like. Each of the RRC messages may include an information element (IE). The information element may include information corresponding to a parameter. The RRC message may be also referred to as a message. A message class is a set of one or more message. The message may include the information element. As the information element, there are an information element relating to radio resource control, an information element relating to security control, an information element relating to mobility control, an information element relating to measurement, an information element relating to a multimedia broadcast multicast service (MBMS), and the like. The information element may include a lower information element. The information element may be configured as the parameter. The information element may be defined as control information which indicates one or more parameters.

The information element (IE) is used for defining (designating, configuring) parameters for the system information (SI) or various types of channels/ signals/ information in dedicated signaling. A certain information element includes one or more fields. The information element may be configured by one or more information element s. A field included in the information element may be also referred to a parameter. That is, the information element may include one or more types of parameters (one or more parameters). The terminal device 2 performs radio resource assignment control, uplink power control, transmission control, and the like, based on various parameters. The system information may be defined as the information element.

An information element may be configured in a field constituting an information element. A parameter may be configured in a field constituting an information element. The RRC message includes one or more information elements. A RRC message in which a plurality of RRC messages is set is referred to a message class.

As parameters which are related to uplink transmit power control, and of which the terminal device 2 is notified by using the system information, there are standard power for a PUSCH, standard power for a PUCCH, a channel loss compensation coefficient α, a list of power offsets obtained by being configured for each PUCCH format, and a power offset of a preamble and Message 3. As parameters which are related to the random access channel, and of which the terminal device 2 is notified by using the system information, there are a parameter relating to the preamble, a parameter relating to transmit power control of the random access channel, and a parameter relating to transmission control of a random access preamble. The parameters are used at a time of the initial access, or at a time of reconnection/reestablishment after radio link failure (RLF) occurs.

The terminal device 2 may be notified of information used for configuring the transmitted power, as the broadcast information. The terminal device 2 may be notified of information for configuring transmitted power, as the shared information. The terminal device 2 may be notified of information for configuring transmitted power, as the dedicated information (individual information).

### (First Embodiment)

A first embodiment of the present invention will be described below. In the first embodiment, a communication system includes a primary base station device as the base station device 1. The base station device 1 is also referred below to an access point, a point, a transmission point, a reception point, a cell, a serving cell, a transmission device, a reception device, a transmission station, a reception station, a transmit antenna group, a transmit antenna port group, a receive antenna group, a receive antenna port group, a communication device, a communication terminal, and eNodeB. The primary base station device is also referred below to a macro base station device, a first base station device, a first communication device, a serving base station device, an anchor base station device, a master base station device, a first access point, a first point, a first transmission point, a first reception point, a macro cell, a first cell, a primary cell, a master cell, a master small cell. The primary cell and the master cell (master small cell) may be independently constituted. In the first embodiment, the communication system may include a secondary base station device. The secondary base station device is also referred below to a remote radio head (RRH), a remote antenna, an overhang antenna, a distributed antenna, a second access point, a second point, a second transmission point, a second reception point, a reference node, a low power base station device (LPN: Low Power Node), a micro base station device, a pico base station device, a femto base station device, a small base station device, a local area base station device, a phantom base station device, a home (indoor) base station device (Home eNodeB, Home NodeB, HeNB, HNB), a second base station device, a second communication device, a coordinated base station device group, a coordinated base station device set, a coordinated base station device, a micro cell, a pico cell, a femto cell, a small cell, a phantom cell, a local area, a second cell, and a secondary cell. The communication system according to the first embodiment may include a terminal device 2. The terminal device 2 is also referred below to a mobile station, a mobile station device, a mobile terminal, a reception device, a transmission device, a reception terminal, a transmission terminal, a third communication device, a receive antenna group, a receive antenna port group, a transmit antenna group, a transmit antenna port group, a user device, and a user terminal (UE: User Equipment). Here, the secondary base station device may be illustrated as a plurality of secondary base station devices. For example, the primary base station device and the secondary base station device may communicate with a terminal device by using heterogeneous network arrangement, in such a manner that a portion or the entirety of coverage of the secondary base station device is included in coverage of the primary base station device.

The communication system according to the first embodiment is configured by the base station device 1 and the terminal device 2. The single base station device 1 may manage one or more terminal devices 2. The single base station device 1 may manage one or more cells (serving cell, primary cell, secondary cell, femto cell, pico cell, small cell, phantom cell). The single base station device 1 may manage one or more frequency bands (component carriers, carrier frequencies). The single base station device 1 may manage one or more low power base station devices(LPN: Low Power Nodes). The single base station device 1 may manage one or more home (indoor) base station devices(HeNB: Home eNodeBs). The single base station device 1 may manage one or more access points. Base station devices 1 may be connected to each other in a wired (optical fiber, copper wire, coaxial cable, and the like) or wireless (X2 interface, X3 interface, Xn interface, and the like) manner. That is, a plurality of base station devices 1 may communicate with each other at a high speed (without delay) by using an optical fiber (Ideal backhaul), or may communicate with each other at a low speed through the X2 interface (Non ideal backhaul). At this time, communication of various types of information of the terminal device 2 (configuration information or channel state information (CSI), function information (UE capability) of the terminal device, information for handover, and the like) may be performed. The plurality of base station devices 1 may be managed on a network. The single base station device 1 may manage one or more relay station device (Relay).

The communication system according to the first embodiment may realize coordinated communication (CoMP: Coordination Multiple Points) using a plurality of base station devices, low power base station devices, or home base station devices. That is, the communication system according to the first embodiment may perform dynamic point selection (DPS) in which a point (transmission point and/or reception point) which communicates with the terminal device 2 is dynamically switched. The communication system according to the first embodiment may perform coordinated scheduling (CS) or coordinated beamforming (CB). The communication system according to the first embodiment may perform joint transmission (JT) or joint reception (JR).

A plurality of low power base station devices or small cells which are disposed so as to be close to each other may be clustered (grouped). The plurality of clustered low power base station devices may perform notification of the same configuration information. An area (coverage) of the clustered small cells may be also referred to as a local area.

In downlink transmission, the base station apparatus 1 may be also referred to as a transmission point (TP). In uplink transmission, the base station apparatus 1 may be also referred to as a reception point (RP). The downlink transmission point and the uplink reception point may function as a pathloss reference point (reference point) for measuring downlink pathloss. The reference point for measuring pathloss may be configured independently from the transmission point and the reception point.

The small cell, the phantom cell, or the local area cell may be configured as a third cell. The small cell, the phantom cell, or the local area cell may be reconfigured as the primary cell. The small cell, the phantom cell, or the local area cell may be reconfigured as the secondary cell. The small cell, the phantom cell, or the local area cell may be reconfigured as the serving cell. The small cell, the phantom cell, or the local area cell may be included in the serving cell.

The base station apparatus 1 allowed to constitute the small cell may perform discrete reception (DRX) or discrete transmission (DTX), if necessary. The base station apparatus 1 allowed to constitute the small cell may cause power of some devices (for example, transmission unit or reception unit) to intermittently or quasi-stationary turn ON/OFF.

Independent identifiers (IDs: Identities) may be configured for base station devices 1 constituting a macro cell and base station devices 1 constituting a small cell. That is, identifiers of the macro cell and the small cell may be independently configured. For example, in a case where cell-specific reference signals (CRSs) are transmitted from the macro cell and the small cell, even when transmission frequencies are the same as each other, and radio resources are the same as each other, scrambling may be performed by using different identifiers. The cell-specific reference signal for the macro cell may be scrambled by using a physical layer cell ID (PCI: Physical layer Cell Identity). The cell-specific reference signal for the small cell may be scrambled by using a virtual cell ID (VCI: Virtual Cell Identity). Scrambling may be performed in the macro cell by using the physical layer cell ID (PCI: Physical layer Cell Identity), and scrambling may be performed in the small cell by using a global cell ID (GCI: Global Cell Identity). Scrambling may be performed in the macro cell by using a first physical layer ID, and scrambling may be performed in the small cell by using a second physical layer cell ID. Scrambling may be performed in the macro cell by using a first virtual cell ID, and scrambling may be performed in the small cell by using a second virtual cell ID. Here, the virtual cell ID may be an ID configured in a physical channel/physical signal. The virtual cell ID may be an ID which is configured independently from the physical layer cell ID. The virtual cell ID may be an ID used in scrambling a sequence used in the physical channel/physical signal.

Cells having different frame structure types (FDD (type-1) and TDD (type-2)) are configured as cell aggregation (carrier aggregation).

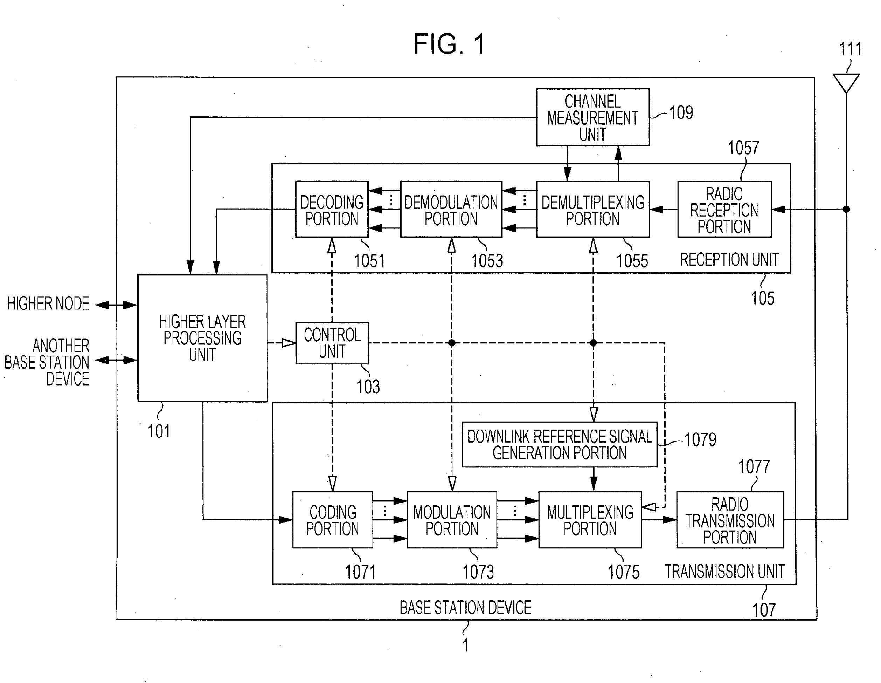

Fig. 1 is a schematic block diagram illustrating a configuration of the base station device 1 according to the present invention. As illustrated in Fig. 1, the base station device 1 includes a higher layer processing unit 101, a control unit 103, a reception unit 105, a transmission unit 107, a channel measurement unit 109, and a transmit/receive antenna 111. The reception unit 105 includes a decoding portion 1051, a demodulation portion 1053, a demultiplexing portion 1055, and a radio reception portion 1057. Reception processing of the base station device 1 is performed by the higher layer processing unit 101, the control unit 103, the reception unit 105, and the transmit/receive antenna 111. The transmission unit 107 includes a coding portion 1071, a modulation portion 1073, a multiplexing portion 1075, a radio transmission portion 1077, and a downlink reference signal generation portion 1079. Transmission processing of the base station device 1 is performed by the higher layer processing unit 101, the control unit 103, the transmission unit 107, and the transmit/receive antenna 111.

The higher layer processing unit 101 performs processing of a medium access control (MAC) layer, a packet data convergence protocol (PDCP) layer, a radio link control (RLC) layer, and a radio resource control (RRC) layer.

The higher layer processing unit 101 generates information assigned in each channel of a downlink, or acquires the information from a higher node, and then outputs the information to the transmission unit 107. The higher layer processing unit 101 assigns radio resources for causing the terminal device 2 to allocate a physical uplink shared channel (PUSCH) which is data information of an uplink, from radio resources of the uplink. The higher layer processing unit 101 determines radio resources for allocating a physical downlink shared channel (PDSCH) which is data information of a downlink, from radio resources of the downlink.

The higher layer processing unit 101 generates downlink control information indicating assignment of the radio resources, and transmits the generated information to the terminal device 2 through the transmission unit 107.

The higher layer processing unit 101 preferentially allocates radio resources having good channel quality, based on a channel measurement result of the uplink, which is input from the channel measurement unit 109 when radio resources for allocating the PUSCH are assigned. That is, the higher layer processing unit 101 generates information regarding configurations of various downlink signals, and information regarding configurations of various uplink signals for a certain terminal device or a certain cell.

The higher layer processing unit 101 may generates information regarding setting of various downlink signals, and information regarding setting of various uplink signals for each cell. The higher layer processing unit 101 may generates information regarding configurations of various downlink signals, and information regarding configurations of various uplink signals for each terminal device 2.

The higher layer processing unit 101 may generate plural pieces of information from information regarding a first configuration to information regarding an n-th configuration (n is natural number), and may transmit the generated pieces of information to the terminal device 2 through the transmission unit 107. The pieces of information are generated for a certain terminal device 2 or a certain cell, that is, are generated so as to be terminal device-specific or cell-specific. For example, the information regarding configurations of the downlink signal and/or the uplink signal may include parameters relating to resource assignment.

The information regarding configurations of the downlink signal and/or the uplink signal may include parameters used in calculating a sequence. The radio resources may be also referred to time-frequency resources, subcarriers, resource elements (RE), a resource element group (REG), control channel elements (CCE), a resource block (RB), a resource block group (RBG), and the like.

Each of the configuration information and the control information may be defined as an information element. Each of the configuration information and the control information may be defined as an RRC message. Each of the configuration information and the control information may be transmitted as system information, to the terminal device 2. The configuration information and the control information may be transmitted to the terminal device 2 by dedicated signaling.

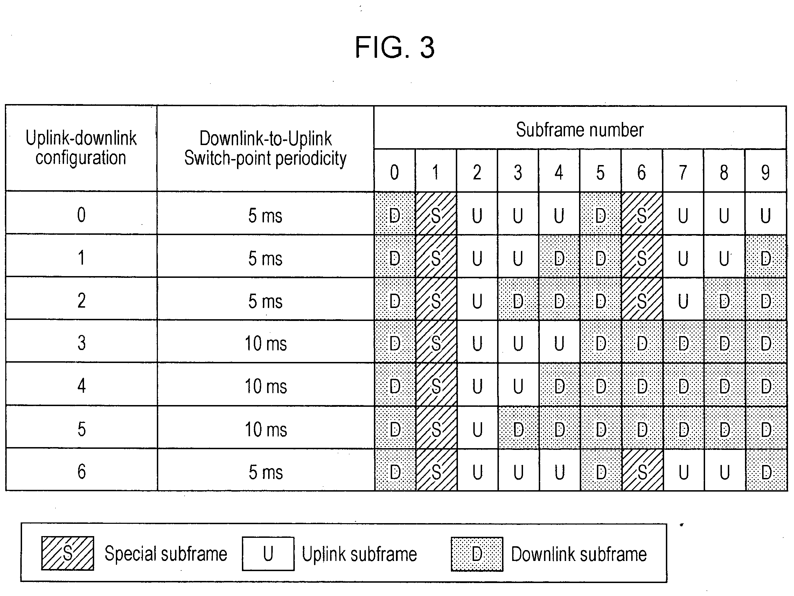

The higher layer processing unit 101 configures at least one TDD UL/DL configuration (TDD UL/DL configuration(s), TDD config, tdd-Config, and uplink-downlink configurations)) in the system information block type-1. The TDD UL/DL configuration may be defined as illustrated in Fig. 3. An index is configured, and thus a constitution of TDD may be indicated. A second TDD UL/DL configuration may be configured as a downlink reference. The system information block may prepare a plurality of types. For example, the system information block type-1 includes an information element relating to the TDD UL/DL configuration.

The system information block type-2 includes an information element relating to radio resource control. A parameter relating to an information element may be included as the information element in the certain information element. For example, the element is referred to as a parameter in a physical layer, but may be defined as an information element in a higher layer.

In the present invention, an identity, an identifier, and identification are referred to as an ID (identifier, identification sign, and identification number). As an ID (UEID) configured so as to be terminal-specific, a cell radio network temporary identifier (C-RNTI), a semi-persistent scheduling C-RNTI (SPS C-RNTI), a Temporary C-RNTI, a TPC-PUSCH RNTI, a TPC-PUCCH RNTI, and a random value for contention resolution are provided. The IDs are used in a unit of a cell. The IDs are configured by the higher layer processing unit 101.

The higher layer processing unit 101 configures various identifiers for the terminal device 2. The higher layer processing unit 101 notifies the terminal device 2 of the various configured identifiers through the transmission unit 107. For example, the higher layer processing unit 101 configures the RNTI and notifies the terminal device 2 of the configured RNTI. The higher layer processing unit 101 configures a physical layer cell ID, a virtual cell ID, or an ID corresponding to the virtual cell ID, and notifies the terminal device 2. For example, as the ID corresponding to the virtual cell ID, IDs (PUSCH ID, PUCCH ID, scrambling initialization ID, reference signal ID (RSID), and the like) which may be configured so as to be specific to a physical channel are provided. The physical layer cell ID or the virtual cell ID may be used in generating a physical channel and a sequence of a physical signal.

The higher layer processing unit 101 generates a DCI which is transmitted by using the PDCCH or the EPDCCH, and transmits the generated DCI to the terminal device 2 through the transmission unit 107.

The higher layer processing unit 101 generates control information for controlling the reception unit 105 and the transmission unit 107, and outputs the generated control information to the control unit 103. The generation is performed based on uplink control information (UCI) of which a notification is performed from the terminal device 2 on a physical uplink control channel (PUCCH), and a situation of a buffer of which a notification is performed from the terminal device 2, or various types of configuration information (RRC message, system information, a parameter, and information element) of each terminal device 2, which is configured by the higher layer processing unit 101. The UCI includes at least one of HARQ response information (HARQ-ACK, ACK/NACK/DTX), a scheduling request (SR), and channel state information (CSI). The CSI includes at least one of the CQI, the PMI, the RI, and the PTI.

The higher layer processing unit 101 configures transmitted power of an uplink signal (PRACH, PUCCH, PUSCH, UL DMRS, P-SRS, and A-SRS), and a parameter relating to the transmitted power. The higher layer processing unit 101 transmits transmitted power of a downlink signal (CRS, DL DMRS, CSI-RS, PDSCH, PDCCH/EPDCCH, and the like), and a parameter relating to the transmitted power, to the terminal device 2 through the transmission unit 107. That is, the higher layer processing unit 101 transmits information regarding power control of the uplink and the downlink to the terminal device 2 through the transmission unit 107. In other words, the higher layer processing unit 101 generates information regarding transmit power control of the base station device 1 and the terminal device 2. For example, the higher layer processing unit 101 transmits a parameter relating to transmitted power of the base station device 1, to the terminal device 2.

The higher layer processing unit 101 transmits parameters used for configuring the maximum transmitted power P_{CMAX, c} and the total maximum output power P_{CMAX} of the terminal device 2, to the terminal device 2. The higher layer processing unit 101 transmits information regarding transmit power control of various physical channels, to the terminal device 2.

The higher layer processing unit 101 sets transmitted power of the terminal device 2 in accordance with information indicating the interference quantity from the adjacent base station device, information indicating the interference quantity of which notification is performed from the adjacent base station device 1, and which is applied to the adjacent base station device, quality of a channel, which is input from the channel measurement unit 109, and the like. The higher layer processing unit 101 sets transmitted power of the terminal device 2 so as to cause a PUSCH and the like to satisfy predetermined channel quality, considering interference to the adjacent base station device 1. The higher layer processing unit 101 transmits information indicating the above setting, to the terminal device 2 through the transmission unit 107.

Specifically, the higher layer processing unit 101 transmits a PUSCH, standard power (P_{O_NOMINAL_PUSCH}, P_{O_NOMINAL_PUCCH}) for each PUSCH and each PUCCH, a path loss compensation coefficient (attenuation coefficient) a, power offset for Message 3, power offset defined for each PUCCH format, and the like in system information. The above-described pieces of information are transmitted as information (information of a shared parameter relating to uplink power control) shared between terminal devices 2 or information which is configured as a common parameter between terminal devices 2. At this time, the power offset of PUCCH format 3 and power offset of delta-PUCCH format 1bCS may be added and notification thereof may be performed. Notification of the information of the shared parameters may be performed in a RRC message.

The higher layer processing unit 101 performs notification of terminal device-specific PUSCH power P_{0_UE_PUSCH}, a parameter (deltaMCS-Enabled) for an instruction of whether or not a delta-MCS is effective, a parameter (accumulationEnabled) for an instruction of whether or not accumulation is effective, terminal device-specific PUCCH power P_{0_UE_PUCCH}, P-SRS power offset P_{SRS_OFFSET}(0), and a filter coefficient, as information which may be configured for each terminal device 2 (information of a dedicated parameter relating to uplink power control) in the RRC message. At this time, notification of power offset of transmission diversity in each PUCCH format, and A-SRS power offset P_{SRS}__{OFFSET}(1) may be performed, α described herein is a coefficient (attenuation coefficient, path loss compensation coefficient) which is used for setting the transmitted power along with a path loss value, and indicates the extent for compensating the path loss. In other words, α is a coefficient for determining the extent that the transmitted power is increased or decreased in accordance with path loss (that is, the degree of transmitted power to be compensated). α is normally set to have a value of 0 to 1. If α is 0, compensation of power in accordance with path loss is not performed. If α is 1, compensation of the transmitted power of the terminal device 2 is performed so as to cause no influence of the path loss to occur in the base station device 1. The pieces of information may be transmitted to the terminal device 2 as reconfiguration information. The shared parameter and the dedicated parameter may be independently configured in the primary cell and the secondary cell, or in a plurality of serving cells.

In a case where the reception unit 105 receives function information of the terminal device 2 from the terminal device 2, the higher layer processing unit 101 performs various configurations based on the received function information of the terminal device 2. For example, the higher layer processing unit 101 determines a carrier frequency of an uplink and a carrier frequency of a downlink, from a band (EUTRA Operating Band) supported by the terminal device 2, based on the received function information of the terminal device 2. The higher layer processing unit 101 determines whether or not the MIMO communication is performed for the terminal device 2, based on the received function information of the terminal device 2. The higher layer processing unit 101 determines whether or not the carrier aggregation is performed, based on the received function information of the terminal device 2. The higher layer processing unit 101 determines whether or not the carrier aggregation is performed by using component carriers having different frame structure types, based on the received function information of the terminal device 2. That is, the higher layer processing unit 101 determines whether or not a secondary cell is configured, and determines various parameters used for the secondary cell. The higher layer processing unit 101 notifies the terminal device 2 of the determined information. Notification of the information regarding the carrier frequency may be performed in the RRC message. That is, notification of the information regarding the carrier frequency may be in the system information. Notification of the information regarding the carrier frequency, with being included in mobility control information may be performed. Notification of the information regarding the carrier frequency may be performed as RRC information by a higher layer.

If the function information transmitted from the terminal device 2 indicates that a function of performing cross carrier scheduling on an uplink is supported, the higher layer processing unit 101 sets a configuration (CrossCarrierSchedulingConfig-UL) relating to cross carrier scheduling for the uplink. The higher layer processing unit 101 transmits configuration information thereof to the terminal device 2 through the transmission unit 107 by using higher layer signaling. The configuration relating to cross carrier scheduling for the uplink may include information (schedulingCellId-UL) indicating a cell in which uplink grant is subjected to signaling (indicating which cell performs signaling on an uplink grant). The configuration relating to cross carrier scheduling for the uplink may include information (cif-Presence-UL) indicating whether or not a CIF is included in a PDCCH/EPDCCH DCI format (DCI format for an uplink).

If the function information transmitted from the terminal device 2 indicates that a function of performing cross carrier scheduling on a downlink is supported, the higher layer processing unit 101 sets a configuration (CrossCarrierSchedulingConfig-DL) relating to cross carrier scheduling for the downlink. The higher layer processing unit 101 transmits configuration information thereof to the terminal device 2 through the transmission unit 107 by using higher layer signaling. The configuration relating to cross carrier scheduling for the downlink may include information (schedulingCellId-DL) indicating a cell in which downlink allocation (downlink grant) is subjected to signaling (indicating which cell performs signaling on downlink allocation). The configuration relating to cross carrier scheduling for the downlink may include information (pdsch-Start) indicating a starting OFDM symbol which corresponds to information indicating a cell. The configuration relating to cross carrier scheduling for the downlink may include information (cif-Presence-DL) indicating whether or not a CIF is included in a PDCCH/EPDCCH DCI format.

In a case where the higher layer processing unit 101 configures a secondary cell for the terminal device 2, the higher layer processing unit 101 assigns a cell index except for a specific value (for example, "0" or information bit corresponding to "0") to the secondary cell, and transmits the configuration information thereof to the terminal device 2. In a case where the secondary cell is configured, the terminal device 2 considers the cell index of the primary cell as the specific value.

The higher layer processing unit 101 may configure transmitted power of a downlink signal/uplink signal, or parameters relating to the transmitted power for each terminal device 2. The higher layer processing unit 101 may configure transmitted power of a common downlink/uplink signal between terminal devices 2, or parameters relating to the transmitted power. The higher layer processing unit 101 may transmit information regarding the parameters to the terminal device 2, as information (information of the parameter relating to the uplink power control) regarding the uplink power control, and/or information (information of the parameter relating to the downlink power control) regarding the downlink power control. The information of the parameter relating to the uplink power control and the information of the parameter relating to the downlink power control include at least one parameter, and are transmitted to the terminal device 2.

The higher layer processing unit 101 configures various IDs relating to various physical channels/physical signals. The higher layer processing unit 101 outputs information regarding the configuration of the IDs to the reception unit 105 and the transmission unit 107 through the control unit 103. For example, the higher layer processing unit 101 configures the value of the RNTI (UEID) for scrambling CRC included in the downlink control information format.

The higher layer processing unit 101 may configure values of various identifiers such as the cell radio network temporary identifier (C-RNTI), the Temporary C-RNTI, Paging-RNTI (P-RNTI), a random access RNTI (RA-RNTI), the semi-persistent scheduling C-RNTI (SPS C-RNTI), and a system information RNTI (SI-RNTI).

The higher layer processing unit 101 configures the value of an ID such as a physical cell ID, a virtual cell ID, and a scrambling initialization ID. The configuration information is output to each processing unit through the control unit 103. The configuration information may be transmitted to the terminal device 2, as a RRC message or system information, dedicated information specific to a terminal device, and an information element. Some of RNTIs may be transmitted by using a MAC control element (CE).

The control unit 103 generates a control signal for controlling the reception unit 105 and the transmission unit 107, based on control information from the higher layer processing unit 101. The control unit 103 outputs the generated control signal to the reception unit 105 and the transmission unit 107, so as to control the reception unit 105 and the transmission unit 107.

The reception unit 105 separates, demodulates, and decodes a reception signal which has been received from the terminal device 2 through the transmit/receive antenna 111, in accordance with the control signal input from the control unit 103. The reception unit 105 outputs the decoded information to the higher layer processing unit 101. The radio reception portion 1057 converts (down-converts) the frequency of the signal of an uplink which has been received through the transmit/receive antenna 111 into an intermediate frequency (IF), and removes an unnecessary frequency component. The radio reception portion 1057 controls an amplification level so as to appropriately maintain the signal level, performs orthogonal demodulation, and converts the analog signal subjected to orthogonal demodulation, into a digital signal. Such demodulation and conversion is performed based on the same phase component and the orthogonal component of the received signal. The radio reception portion 1057 removes a portion corresponding to a guard interval (GI) from the converted digital signal. The radio reception portion 1057 performs Fast Fourier Transform (FFT) on a signal obtained by removing the guard interval. The radio reception portion 1057 extracts the signal in the frequency domain, and outputs the extracted signal to the demultiplexing portion 1055.

The demultiplexing portion 1055 separates the signal input from the radio reception portion 1057 into signals of a PUCCH, a PUSCH, a UL DMRS, a SRS, and the like. The separation is performed based on assignment information of radio resources. The assignment information is determined in advance by the base station device 1, and each terminal device 2 is notified of the assignment information. The demultiplexing portion 1055 performs channel compensation of the PUCCH and the PUSCH from an estimated value of the channel, which is input from the channel measurement unit 109. The demultiplexing portion 1055 outputs the separated UL DMRS and SRS to the channel measurement unit 109.

The demodulation portion 1053 performs inverse discrete Fourier transform (IDFT) on the PUSCH, and acquires modulation symbols. The demodulation portion 1053 demodulates the reception signal with the modulation symbols of the PUCCH and the PUSCH, by using a modulation scheme which is determined in advance, or of which each terminal device 2 is notified in advance in the downlink control information by the base station device 1. Such a modulation scheme includes binary phase shift keying (BPSK), quadrature phase shift keying (QPSK), 16 quadrature amplitude modulation (16QAM), 64 quadrature amplitude modulation (64QAM), and the like.

The decoding portion 1051 decodes coded bits of the PUCCH and the PUSCH, which have been demodulated, at a coding rate of the predetermined coding scheme. The coding rate is determined in advance, or the base station device 1 notifies the terminal device 2 of the coding rate in advance in the uplink grant (UL grant). The decoding portion 1051 outputs the decoded data information and the decoded uplink control information to the higher layer processing unit 101.

The channel measurement unit 109 measures the estimated value of the channel, the quality of the channel, and the like, based on the uplink demodulation reference signal (UL DMRS) input from the demultiplexing portion 1055, and the SRS. The channel measurement unit 109 outputs a result of the measurement to the demultiplexing portion 1055 and the higher layer processing unit 101. The channel measurement unit 109 measures received power of signals from a first signal to the n-th signal, and/or reception quality thereof. The channel measurement unit 109 outputs a result of the measurement to the demultiplexing portion 1055 and the higher layer processing unit 101.

The transmission unit 107 generates a reference signal of a downlink (downlink reference signal), based on the control signal input from the control unit 103. The transmission unit 107 codes and modulates data information and downlink control information input from the higher layer processing unit 101. The transmission unit 107 performs multiplexing on the PDCCH (EPDCCH), the PDSCH, and the downlink reference signal. The transmission unit 107 transmits a downlink signal obtained by multiplexing to the terminal device 2 through the transmit/receive antenna 111.

The coding portion 1071 performs coding such as turbo-coding, convolutional coding, and block coding, on the downlink control information input from the higher layer processing unit 101, and data information. The modulation portion 1073 modulates the coded bits by using a modulation scheme such as QPSK, 16QAM, and 64QAM. The downlink reference signal generation portion 1079 performs generation as a downlink reference signal with a sequence known by the terminal device 2. The downlink reference signal is obtained by using a rule which is determined based on a cell identifier (Cell ID, Cell Identity, Cell Identifier, Cell Identification), and the like for identifying the base station device 1. The multiplexing portion 1075 performs multiplexing on the modulated channel and the generated downlink reference signal.

The radio transmission portion 1077 performs Inverse Fast Fourier Transform (IFFT) on the multiplexed modulation symbol, and performs modulation of the OFDM scheme. The radio transmission portion 1077 adds a guard interval to OFDM symbols obtained by OFDM modulation, and generates a baseband digital signal. The radio transmission portion 1077 converts the baseband digital signal into an analog signal, and generates the same-phase component and the orthogonal component of an intermediate frequency, from the analog signal. The radio transmission portion 1077 removes an extra frequency component from the intermediate frequency band, and converts (up-converts) a signal having an intermediate frequency into a signal having a high frequency. The radio transmission portion 1077 removes an extra frequency component, amplifies power, and outputs the signal to the transmit/receive antenna 111 so as to perform transmission.

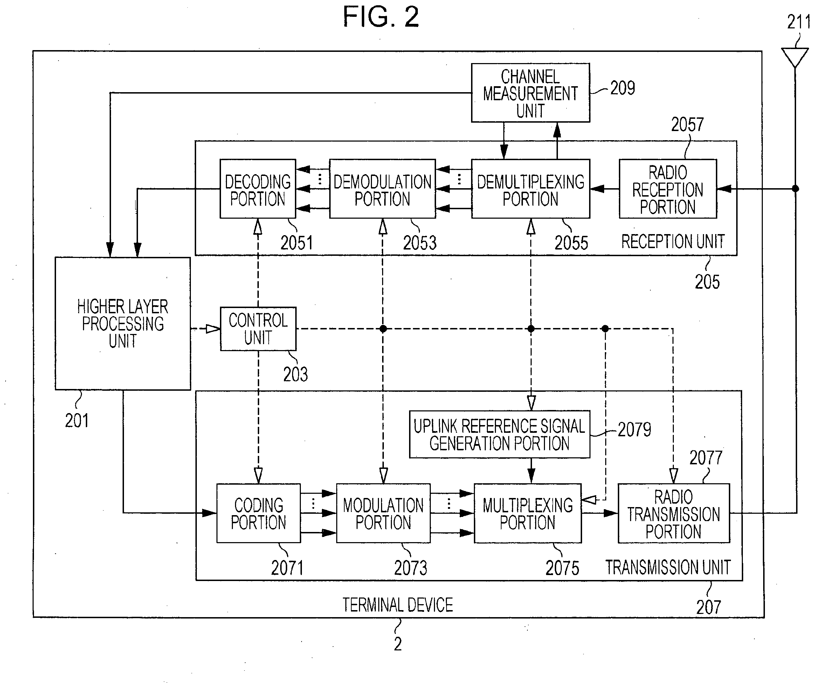

Fig. 2 is a schematic block diagram illustrating a configuration of the terminal device 2 according to the embodiment. As illustrated in Fig. 2, the terminal device 2 includes a higher layer processing unit 201, a control unit 203, a reception unit 205, a transmission unit 207, a channel measurement unit 209, and a transmit/receive antenna 211. The reception unit 205 includes a decoding portion 2051, a demodulation portion 2053, a demultiplexing portion 2055, and a radio reception portion 2057. Reception processing of the terminal station device 2 is performed by the higher layer processing unit 201, the control unit 203, the reception unit 205, and the transmit/receive antenna 211. The transmission unit 207 includes a coding portion 2071, a modulation portion 2073, a multiplexing portion 2075, and a radio transmission portion 2077. Transmission processing of the terminal device 2 is performed by the higher layer processing unit 201, the control unit 203, the transmission unit 207, and the transmit/receive antenna 211.

The higher layer processing unit 201 outputs data information of an uplink, which is generated by an operation of a user, and the like, to the transmission unit. The higher layer processing unit 201 performs processing of a medium access control (MAC) layer, a packet data convergence protocol (PDCP) layer, a radio link control (RLC) layer, and a radio resource control (RRC) layer.

The higher layer processing unit 201 manages various types of configuration information of the terminal device 2. The higher layer processing unit 201 generates information assigned to each channel of the uplink, and outputs the generated information to the transmission unit 207. The higher layer processing unit 201 generates control information for controlling the reception unit 205 and the transmission unit 207, based on downlink control information of which notification is performed on a PDCCH from the base station device 1, and various types of configuration information of the terminal device 2, which are managed by the higher layer processing unit 201 in which radio resource control information of which notification is performed on a PDSCH is configured. The higher layer processing unit 201 outputs the generated control information to the control unit 203. The higher layer processing unit 201 sets various parameters (information elements and RRC messages) of each signal, based on pieces of information from information regarding a first configuration of which notification is performed from the base station device 1, to information regarding the n-the configuration. The higher layer processing unit 201 outputs the various parameters to the transmission unit 207 through the control unit 203. When connection with the base station device 1 is established, the higher layer processing unit 201 generates function information (UE capability) of the terminal device 2, outputs the generated function information to the transmission unit 207 through the control unit 203, and notifies the base station device 1 thereof. After the connection with the base station device 1 is established, the higher layer processing unit 201 may notify the base station device 1 of the function information.

The function information may include information (RF-Parameters) regarding a radio frequency (RF) parameter. The information regarding the RF parameter may include information (1st SupportedBandCombination) indicating a band supported by the terminal device 2. The information regarding the RF parameter may include information (SupportedBandCombinationExt) indicating a band supporting the carrier aggregation and/or MIMO. The information regarding the RF parameter may include information (2nd SupportedBandConbination) indicating a band which supports a function of performing a plurality of timing advances between bands which are simultaneously integrated in the terminal device 2, or of performing simultaneous transmission and reception between bands. The bands may be listed. The value (entry) indicated by plural pieces of listed information may be used commonly (may indicates the same).

Whether each band (bandE-UTRA, FreqBandlndicator, and E-UTRA Operating Band) supported by the terminal device 2 supports half duplex may be indicated. In a band in which half duplex is not supported, full duplex is supported.

Whether a band supported by the terminal device 2 supports the carrier aggregation and/or MIMO in an uplink may be indicated.

Whether a band supported by the terminal device 2 supports the carrier aggregation and/or MIMO in a downlink may be indicated.

The information regarding the RF parameter may include information indicating a band which supports TDD-FDD carrier aggregation. The above-described bands may be listed.

The information regarding the RF parameter may include information indicating whether a function of performing simultaneous transmission and reception between bands which support TDD-FDD carrier aggregation is supported.

The information regarding the RF parameter may include information indicating whether or not simultaneous transmission and reception is performed between bands of different duplex modes.

The function information may include information (PhyLayerParameters) regarding a parameter of a physical layer. The information regarding a parameter of a physical layer may include information indicating whether a function of performing cross carrier scheduling is supported. The information regarding a parameter of a physical layer may include information indicating a function (CrossCarrierScheduling-UL) of performing cross carrier scheduling for an uplink is supported. The information regarding a parameter of a physical layer may include information indicating a function (CrossCarrierScheduling-DL) of performing cross carrier scheduling for a downlink is supported.

The base station device 1 may perform a configuration relating to cross carrier scheduling for an uplink, for the terminal device 2 in which a function of performing cross carrier scheduling for an uplink is provided, and thus may notify the terminal device 2 of an uplink grant by cross carrier scheduling. That is, the base station device 1 may transmit a DCI format (uplink grant) relating to scheduling of a PUSCH for a second cell, to the terminal device 2 by using a PDCCH of a first cell. The terminal device 2 may read a CIF included in the DCI format having the PDCCH which is transmitted on the PDCCH of the first cell, and thus may recognize a cell in which the DCI format is provided.

The base station device 1 may perform a configuration relating to cross carrier scheduling for a downlink, for the terminal device 2 in which a function of performing cross carrier scheduling for a downlink is provided, and thus may notify the terminal device 2 of a downlink grant by cross carrier scheduling. That is, the base station device 1 may transmit a DCI format (downlink grant) relating to scheduling of a PDSCH for the second cell, to the terminal device 2 by using a PDCCH of the first cell. The terminal device 2 may read a CIF included in the DCI format having the PDCCH which is transmitted on the PDCCH of the first cell, and thus may recognize a cell in which the DCI format is provided.

Here, capacity of cross carrier scheduling relating to a downlink and capacity of cross carrier scheduling relating to an uplink may be (independently) included as a portion of capacity (function, performance) of the terminal device 2, of which the base station device 1 is notified from the terminal device 2. As one example, a parameter group of a physical layer of an information element (for example, UE-EUTRA-Capability) in an RRC message can include a field (first field) and a field (second field). The RRC message is used when the base station device 1 is notified of capacity of the terminal device 2 from the terminal device 2. The field (first field) indicates whether or not cross carrier scheduling relating to a downlink is supported. The field (second field) indicates whether or not cross carrier scheduling relating to an uplink is supported. The terminal device 2 which supports cross carrier scheduling relating to a downlink notifies the base station device 1 of the parameter group of the physical layer with including the first field. The base station device 1 which receives the notification can recognize that the terminal device 2 is a terminal device which supports cross carrier scheduling relating to a downlink. The terminal device 2 which does not support cross carrier scheduling relating to a downlink notifies the base station device 1 of the parameter group of the physical layer without including the first field (with omitting a value set in the first field). The base station device 1 which receives the notification can recognize that the terminal device 2 is a terminal device which does not support cross carrier scheduling relating to a downlink. The terminal device 2 which supports cross carrier scheduling relating to an uplink notifies the base station device 1 of the parameter group of the physical layer with including the second field. The base station device 1 which receives the notification can recognize that the terminal device 2 is a terminal device which supports cross carrier scheduling relating to an uplink. The terminal device 2 which does not support cross carrier scheduling relating to an uplink notifies the base station device 1 of the parameter group of the physical layer without including the second field. The base station device 1 which receives the notification may recognize that the terminal device 2 is a terminal device which does not support cross carrier scheduling relating to an uplink. In this manner, a case where the value which has been set in the field is omitted means that the value is different from any value (for example, "1" which is a value indicating that the corresponding function is supported) which has been set in the field (for example, that the corresponding function is not supported).

The functions may be set to cause only a terminal device which supports cross carrier scheduling in carrier aggregation (carrier aggregation between FDD and FDD, and carrier aggregation between TDD and TDD) of the related art, to support the functions. That is, in order to set a value (for example, "1" indicating support) in the first field and/or the second field, it may be necessary that a value (for example, "1" indicating support) indicating whether or not cross carrier scheduling is supported in the carrier aggregation of the related art is set in the field.

As another example, a field (first field) and a field (second field) are set to be normally included in a parameter group of feature group information (FGI) in an information element of a RRC message. The field (first field) indicates whether or not cross carrier scheduling relating to a downlink is supported. The field (second field) indicates whether or not cross carrier scheduling relating to an uplink is supported. The RRC message is used when the base station device 1 is notified of capacity of the terminal device 2 from the terminal device 2. Values which are set in the fields may be set to indicate whether or not the functions are supported. For example, "1" may be set in a case where the functions are supported, and "0" may be set in a case where the functions are not supported. In addition, "0" may be set in a case where the functions are supported, and "1" may be set in a case where the functions are not supported.

The base station device 1 may notify a terminal device 2 of a downlink grant by cross carrier scheduling. The terminal device 2 has a function of performing cross carrier scheduling for a downlink and does not have a function of performing cross carrier scheduling for an uplink. The terminal device 2 may ignore an uplink grant even when notification of the uplink grant is performed by cross carrier scheduling.

The base station device 1 may notify a terminal device 2 of an uplink grant by cross carrier scheduling. The terminal device 2 has a function of performing cross carrier scheduling for an uplink and does not have a function of performing cross carrier scheduling for a downlink. The terminal device 2 may ignore a downlink grant even when notification of the downlink grant is performed by cross carrier scheduling.

In a case where a function which is not supported is present among functions included in the function information, the higher layer processing unit 201 may not set information indicating whether or not the function is supported, in the function information. The base station device 1 considers the function which is not set in the function information not to be supported by the terminal device 2, and performs various configurations. The information indicating whether or not the function is supported may be information indicating the function is supported.

If the function which is not supported is present, the higher layer processing unit 201 sets a specific value (for example, "0") indicating not to be supported or information (for example, "not supported", "disable", "FALSE", and the like), regarding the function. The higher layer processing unit 201 may notify the base station device 1 of function information including the above information.

If the function which is supported is present, the higher layer processing unit 201 sets a specific value (for example, "1") indicating to be supported or information (for example, "supported", "enable", "TRUE", and the like), regarding the function. The higher layer processing unit 201 may notify the base station device 1 of function information including the above information.

In a case where there is no a function of performing simultaneous transmission and reception between bands which may be simultaneously integrated, the higher layer processing unit 201 sets a specific value or information indicating that the function is not supported, in information (simultaneousRx-Tx) indicating whether or not the function of performing simultaneous transmission and reception between bands which may be simultaneously integrated is supported. In addition, the information indicating whether or not the function of performing simultaneous transmission and reception between bands which may be simultaneously integrated is supported may be not set in the function information.

The higher layer processing unit 201 acquires the following pieces of information from the reception unit 205. The pieces of information include information indicating a sounding subframe, and a bandwidth of the radio resources reserved for transmitting the SRS in the sounding subframe; information indicating a subframe in which the periodic SRS of which the terminal device 2 is notified by the base station device 1, a frequency band, and the quantity of cycling shift used in CAZAC sequences of the periodic SRS; and information indicating a frequency band for transmitting the aperiodic SRS of which the terminal device 2 is notified by the base station device 1, and the quantity of cycling shift used in CAZAC sequences of the aperiodic SRS. The sounding subframe (SRS subframe, SRS transmission subframe) is a subframe for reserving radio resources which are used for transmitting the SRS reported by the base station device 1.

The higher layer processing unit 201 controls SRS transmission in accordance with the information. Specifically, the higher layer processing unit 201 controls the transmission unit 207 to transmit a periodic SRS in accordance with information regarding the periodic SRS once or periodically. In a case where transmission of the aperiodic SRS in a SRS request (SRS indicator) input from the reception unit 205 is required, the higher layer processing unit 201 transmits the aperiodic SRS in accordance with information regarding the aperiodic SRS, the predetermined number of times (for example, one time).

The higher layer processing unit 201 controls transmitted power of the PRACH, the PUCCH, the PUSCH, the periodic SRS, and the aperiodic SRS, based on information regarding transmit power control of various uplink signals transmitted from the base station device 1. Specifically, the higher layer processing unit 201 configures the transmitted power of the various uplink signals, based on information regarding various types of uplink power control acquired from the reception unit 205. For example, the transmitted power of the SRS is controlled based on P_{0_PUSCH}, α, power offset P_{SRS_OFFSET}(0) (first power offset (pSRS-Offset)) for the periodic SRS, power offset P_{SRS_OFFSET}(1) (second power offset (pSRS-OffsetAp)) for the aperiodic SRS, and a TPC command. The higher layer processing unit 201 performs switching between the first power offset and the second power offset, in accordance with which the periodic SRS or the aperiodic SRS is provided for P_{SRS_OFFSET}.

In a case where third power offset is configured for the periodic SRS and/or aperiodic SRS, the higher layer processing unit 201 sets transmitted power, based on the third power offset. The third power offset may be configured so as to have a value in a range wider than that of the first power offset or the second power offset. The third power offset may be configured for each of the periodic SRS and the aperiodic SRS. That is, the information of parameters relating to the uplink power control corresponds to an information element or a RRC message which includes parameters relating to control of transmitted power of various uplink physical channels.

In a case where the sum of transmitted power of a first uplink reference signal and transmitted power of a physical uplink shared channel exceeds the maximum transmitted power (for example, P_{CMAX} or P_{CMAX, c}) configured in the terminal device 2, in a certain serving cell or a certain subframe, the higher layer processing unit 201 output instruction information to the transmission unit 207 through the control unit 203, so as to transmit the physical uplink shared channel.

In a case where the sum of transmitted power of the first uplink reference signal and transmitted power of a physical uplink control channel exceeds the maximum transmitted power (for example, P_{CMAX} or P_{CMAX, c}) configured in the terminal device 2, in a certain serving cell or a certain subframe, the higher layer processing unit 201 output instruction information to the transmission unit 207 through the control unit 203, so as to transmit the physical uplink control channel.

In a case where the sum of transmitted power of a second uplink reference signal and transmitted power of the physical uplink shared channel exceeds the maximum transmitted power configured in the terminal device 2, in a certain serving cell or a certain subframe, the higher layer processing unit 201 output instruction information to the transmission unit 207 through the control unit 203, so as to transmit the physical uplink shared channel.

In a case where the sum of transmitted power of the second uplink reference signal and transmitted power of the physical uplink control channel exceeds the maximum transmitted power configured in the terminal device 2, in a certain serving cell (for example, serving cell c) or a certain subframe (for example, subframe i), the higher layer processing unit 201 output instruction information to the transmission unit 207 through the control unit 203, so as to transmit the physical uplink control channel.

In a case where transmission of a plurality of physical channels occurs at the same timing (for example, subframe), the higher layer processing unit 201 may control transmitted power of various physical channels or control transmission of the various physical channels, in accordance with the priorities of the various physical channels. The higher layer processing unit 201 outputs control information thereof to the transmission unit 207 through the control unit 203.

In a case where carrier aggregation is performed by using a plurality of component carriers which respectively correspond to a plurality of serving cells or a plurality of serving cells, the higher layer processing unit 201 may control transmitted power of various physical channels or control transmission of the various physical channels, in accordance with the priorities of the various physical channels.

The higher layer processing unit 201 may control transmission of various physical channels which are to be transmitted from a cell, in accordance with the priority of the cell. The higher layer processing unit 201 outputs control information thereof to the transmission unit 207 through the control unit 203.

The higher layer processing unit 201 outputs instruction information to the transmission unit 207 through the control unit 203, based on information regarding a configuration of the uplink reference signal of which notification is performed from the base station device 1, for example, such that the uplink reference signal is generated. That is the reference signal control unit 2013 outputs the information regarding the configuration of the uplink reference signal, to the uplink reference signal generation portion 2079 through the control unit 203.

The control unit 203 generates a control signal for controlling the reception unit 205 and the transmission unit 207, based on the control information from the higher layer processing unit 201. The control unit 203 outputs the generated control signal to the reception unit 205 and the transmission unit 207, and thus controls the reception unit 205 and the transmission unit 207.

The reception unit 205 separates, demodulates, and decodes a reception signal which is received from the base station device 1 through the transmit/receive antenna 211, in accordance with the control signal input from the control unit 203. The reception unit 205 outputs information obtained by the decoding to the higher layer processing unit 201.

The reception unit 205 performs appropriate reception processing in accordance with whether or not information regarding a first configuration and/or information regarding a second configuration is received. For example, in a case where either of the information regarding the first configuration and the information regarding the second configuration is received, the reception unit 205 detects a first control information field from the received downlink control information format. In a case where the information regarding the first configuration and the information regarding the second configuration are received, the reception unit 205 detects a second control information field from the received downlink control information format.

The radio reception portion 2057 converts (down-converts) the frequency of the signal of a downlink which has been received through the receive antenna into an intermediate frequency, and removes an unnecessary frequency component. The radio reception portion 2057 controls an amplification level so as to appropriately maintain the signal level, and performs orthogonal demodulation based on the same phase component and the orthogonal component of the received signal. The radio reception portion 2057 converts the analog signal subjected to orthogonal demodulation, into a digital signal. The radio reception portion 2057 removes a portion corresponding to a guard interval from the converted digital signal. The radio reception portion 2057 performs Fast Fourier Transform on a signal obtained by removing the guard interval, and thus extracts a signal in the frequency domain.

The demultiplexing portion 2055 separates the extracted signal into a PDCCH, a PDSCH, and a downlink reference signal (DL-RS). The separation is performed based on assignment information and the like of radio resources of which notification is performed in downlink control information. The demultiplexing portion 2055 performs compensation of a path of the PDCCH and the PDSCH, based on an estimated value of the path, which is input from the channel measurement unit 209. The demultiplexing portion 2055 outputs the downlink reference signal obtained by the separation, to the channel measurement unit 209.

The demodulation portion 2053 performs demodulation of the QPSK modulation scheme, on the PDCCH transmitted by using the DCI format. The demodulation portion 2053 outputs a result obtained by the demodulation, to the decoding portion 2051. The demodulation portion 2053 performs demodulation of the modulation scheme of which notification is performed in the downlink control information, such as QPSK, 16QAM, and 64QAM on the PDSCH. The demodulation portion 2053 outputs a result obtained by the demodulation, to the decoding portion 2051.

The decoding portion 2051 examines decoding of a PDCCH. In a case where decoding is determined to succeed, the decoding portion 2051 outputs the decoded downlink control information to the higher layer processing unit 201. The decoding portion 2051 performs decoding with the coding rate of which notification is performed in the downlink control information, and outputs data information obtained by decoding, to the higher layer processing unit 201.

In a case where a function of independently performing cross carrier scheduling for an uplink and a downlink is not provided, the decoding portion 2051 performs decoding processing (blind decoding) by using DCI format 0 and DCI format 1A as one DCI format.

In a case where a function of independently performing cross carrier scheduling for an uplink and a downlink is provided, the decoding portion 2051 performs decoding processing by using DCI format 0 and DCI format 1A as independent DCI formats.

In a case where a function of performing cross carrier scheduling for an uplink is not provided, the decoding portion 2051 does not expect that cross carrier scheduling of an uplink grant such as DCI format 0 or DCI format 4 is performed.

In a case where a function of performing cross carrier scheduling for a downlink is not provided, the decoding portion 2051 does not expect that cross carrier scheduling of a downlink grant such as DCI format 1 or DCI format 1A is performed.

In a case where a configuration relating to cross carrier scheduling for either of an uplink and a downlink is performed, the decoding portion 2051 may increase the total number of performing blind decoding.

In a case where a configuration relating to cross carrier scheduling only for either of an uplink and a downlink is set, the decoding portion 2051 performs decoding processing so as not to exceed the total number of performing blind decoding. For example, the number of PDCCH candidates in an USS is restricted. The aggregation level for performing decoding in the USS is restricted. In addition, a cell (component carrier) which performs decoding processing is restricted. For example, decoding processing is performed only for a primary cell. The base station device 1 transmits a PDCCH by using the number of PDCCH candidates, the aggregation level, or the cell which is restricted so as not to increase the number of performing blind decoding.

The channel measurement unit 209 measures the path loss of the downlink based on the downlink reference signal input from the demultiplexing portion 2055, and outputs the measured path loss to the higher layer processing unit 201. The channel measurement unit 209 calculates an estimated value of a channel of a downlink, based on the downlink reference signal, and outputs the calculated value to the demultiplexing portion 2055. The channel measurement unit 209 measures received power of a first signal and/or a second signal, or measures reception quality thereof, in accordance with various types of information regarding measurement, of which notification is performed from the reference signal control unit 2013 through the control unit 203, and various types of information regarding a measurement report. The channel measurement unit 209 outputs the result thereof to the higher layer processing unit 201. In a case where an instruction of performing a channel evaluation of the first signal and/or the second signal is performed, the channel measurement unit 209 may output a result regarding the channel evaluation of each of the signals, to the higher layer processing unit 201. Here, the first signal or the second signal are reference signals (pilot signals, pilot channels, base signals). In addition to the first signal or the second signal, a third signal or a fourth signal may be provided. That is, the channel measurement unit 209 measures channels of one or more signals. The channel measurement unit 209 configures a signal for measuring the channel, in accordance with the control information of which notification is performed from the higher layer processing unit 201 through the control unit 203.

In a certain cell (first cell), in a case where an uplink subframe in which uplink transmission is required is generated, and thus measurement of CRS or CSI-RS is not possible in the same subframe of a cell (second cell) different from the certain cell, the channel measurement unit 209 may perform processing except for a subframe in which measurement of an average of measurement results (received power, reception quality, channel quality, and the like) in the second cell is not possible. In other words, the channel measurement unit 209 may calculate an average value of the measurement results (received power, reception quality, channel quality, and the like), only by using the received CRS or CSI-RS. The channel measurement unit 209 may transmit the calculation result thereof (indicator or information corresponding to the calculation result) to the base station device 1 through the transmission unit 207.

The transmission unit 207 generates an uplink demodulation reference signal (UL DMRS) and/or a sounding reference signal (SRS), based on the control signal (control information) input from the control unit 203. The transmission unit 207 codes and modulates data information input from the higher layer processing unit 201, and performs multiplexing of a PUCCH, a PUSCH, and the generated UL DMRS and/or the generated SRS. The transmission unit 207 adjusts transmitted power of the PUCCH, the PUSCH, the UL DMRS, and the SRS, and transmits the adjusted transmitted power to the base station device 1 through the transmit/receive antenna 211.

In a case where information regarding a measurement result is output from the higher layer processing unit 201, the transmission unit 207 transmits the output information, to the base station device 1 through the transmit/receive antenna 211.

In a case where channel state information which is a result regarding the channel evaluation is output from the higher layer processing unit 201, the transmission unit 207 performs feedback of channel state information to the base station device 1. That is, the higher layer processing unit 201 generates channel state information (CSI, CQI, PMI, RI) based on a measurement result of which notification is performed from the channel measurement unit 209, and performs feedback to the base station device 1 through the control unit 203.

If a predetermined grant (or a predetermined downlink control information format) is detected in the reception unit 205, the transmission unit 207 transmits an uplink signal corresponding to the predetermined grant in the first uplink subframe among subframes subsequent to a predetermined subframe from a subframe in which the grant is detected. For example, if the grant is detected in the subframe i, the uplink signal may be transmitted in the first uplink subframe among subframes subsequent to a subframe (i+k).

In a case where a transmission subframe of the uplink signal is the subframe i, the transmission unit 207 sets transmitted power of the uplink signal, based on a power control adjustment value obtained by a TPC command which is received in a subframe (i-k). Here, the power control adjustment value f(i) (or g(i)) is configured based on a corrected value or an absolute value which is correlated with a value set in the TPC command. In a case where the accumulation is effective, corrected values correlated with the value set in the TPC command are accumulated, and the accumulation result is applied as the power control adjustment value. In a case where the accumulation is not effective, a single absolute value which is correlated with a value set in the TPC command is applied as the power control adjustment value.

In a case where either of the information regarding the first configuration and the information regarding the second configuration is received in the reception unit 205, the transmission unit 207 sets transmitted power based on a parameter relating to the first uplink power control. In a case where the information regarding the first configuration and the information regarding the second configuration are received in the reception unit 205, the transmission unit 207 sets the transmitted power based on a parameter relating to the second uplink power control, and transmits the uplink signal.

The coding portion 2071 performs coding such as turbo-coding, convolutional coding, and block coding, on the uplink control information input from the higher layer processing unit 201, and data information. The modulation portion 2073 modulates the coded bits input from the coding portion 2071, by using a modulation scheme such as BPSK, QPSK, 16QAM, and 64QAM.

The uplink reference signal generation portion 2079 generates an uplink reference signal based on information regarding the configuration of the uplink reference signal. That is, the uplink reference signal generation portion 2079 generates CAZAC sequences known by the base station device 1. The CAZAC sequences are obtained by using a rule which is determined based on a cell identifier for identifying the base station device 1, a bandwidth for assigning an uplink demodulation reference signal, the first uplink reference signal, and the second uplink reference signal, and the like. The uplink reference signal generation portion 2079 adds the cycling shift to the CAZAC sequences of the generated uplink demodulation reference signal, the first uplink reference signal, and the second uplink reference signal, based on the control signal input from the control unit 203.

The uplink reference signal generation portion 2079 may initialize base sequences of the uplink demodulation reference signal, and/or the sounding reference signal, and the uplink reference signal, based on predetermined parameters. The predetermined parameters may be the same as each other in the reference signals. The predetermined parameters may be configured independently in the reference signals. That is, the uplink reference signal generation portion 2079 may initialize the base sequences of the reference signals by using the same parameter, as long as there is no parameter which is independently configured.

The multiplexing portion 2075 arranges modulation symbols of the PUSCH in parallel with each other, based on the control signal input from the control unit 203, so as to perform discrete Fourier transform (DFT), and performs multiplexing of the PUCCH, the signal of the PUSCH, and the generated UL DMRS, and the generated SRS.

The radio transmission portion 2077 performs Inverse Fast Fourier Transform on the multiplexed signals, and performs modulation of the SC-FDMA scheme. The radio transmission portion 2077 adds a guard interval to SC-FDMA symbols obtained by SC-FDMA modulation, and generates a baseband digital signal. The radio transmission portion 2077 converts the baseband digital signal into an analog signal, and generates the same-phase component and the orthogonal component of an intermediate frequency, from the analog signal. The radio transmission portion 2077 removes an extra frequency component from the intermediate frequency band, and converts (up-converts) a signal having an intermediate frequency into a signal having a high frequency (radio frequency). The radio transmission portion 2077 removes an extra frequency component, amplifies power, and outputs the signal to the transmit/receive antenna 211 so as to perform transmission.

In the embodiment of the present invention, the reception processing may include detection processing (detection). The reception processing may include demodulation processing (demodulation). The reception processing may include decoding processing (decode, decoding).

In the terminal device 2, the priorities of the physical channels/physical signals to be transmitted may be configured or defined in advance, in accordance with the type of the physical channel.

In the embodiment of the present invention, the terminal device 2 may report a measurement result of the received power to the base station device 1 based on the CSI-RS or a discovery reference signal (DRS). The terminal device 2 may perform periodically reporting. The terminal device 2 may perform the reporting in a case where a certain condition is satisfied.

In the embodiment of the present invention, in a case where the terminal device 2 measures the received power based on the CSI-RS or the DRS, the terminal device 2 may perform transmit power control of the uplink signal based on the received power. That is, the terminal device 2 may determine downlink path loss based on the received power.

In the embodiment of the present invention, in a case where the sum of transmitted power of the various uplink signals, which includes transmitted power of the first uplink reference signal and/or the second uplink reference signal exceeds the maximum transmitted power configured in the terminal device 2, the terminal device 2 may not transmit the first uplink reference signal and/or the second uplink reference signal.

In the embodiment of the present invention, if the base station device 1 or the terminal device 2 satisfies a certain condition, one thereof may be configured as an uplink reference UL-DL configuration, and another may be configured as a downlink reference UL-DL configuration. For example, the terminal device 2 may receive two pieces of information regarding a first configuration and information regarding a second configuration, and then may set the received pieces of information as the uplink reference UL-DL configuration and the downlink reference UL-DL configuration. A DCI format (for example, DCI format 0/4) associated with an uplink may be transmitted in a downlink subframe configured in the uplink reference UL-DL configuration.

Each of the uplink reference UL-DL configuration and the downlink reference UL-DL configuration may be configured by using the same table. In a case where indices of the uplink reference UL-DL configuration and the downlink reference UL-DL configuration are configured based on the same table, it is preferable that the uplink reference UL-DL configuration and the downlink reference UL-DL configuration are configured so as to have different indices from each other. That is, it is preferable that different subframe patterns are respectively configured in the uplink reference UL-DL configuration and the downlink reference UL-DL configuration.

In a case where a plurality of TDD UL/DL configuration (UL/DL configuration, UL-DL configuration) is indicated for one serving cell (primary cell, secondary cell), any one thereof may be configured as an uplink reference UL-DL configuration, and another may be configured as a downlink reference UL-DL configuration in accordance with conditions. The uplink reference UL-DL configuration may be used for determining a correspondence between a subframe in which at least a physical downlink control channel is allocated, and a subframe in which a physical uplink shared channel corresponding to the physical downlink control channel is allocated. The uplink reference UL-DL configuration may be different from a transmission direction (that is, uplink or downlink) of an actual signal. The downlink reference UL-DL configuration may be used for determining a correspondence between a subframe in which at least a physical downlink shared channel is allocated, and a subframe in which HARQ-ACK corresponding to the physical downlink shared channel is transmitted. The downlink reference UL-DL configuration may be different from a transmission direction (that is, uplink or downlink) of an actual signal). That is, the uplink reference UL-DL configuration is used for specifying (selecting, determining) a correspondence between a subframe n in which a PDCCH/EPDCCH/PHICH is allocated, and a subframe (n+k) in which a PUSCH corresponding to the PDCCH/EPDCCH/PHICH is allocated. In a case where one primary cell is configured, or in a case where one primary cell and one secondary cell are configured, and the uplink reference UL-DL configuration for the primary cell and the uplink reference UL-DL configuration for the secondary cell are the same as each other, the corresponding uplink reference UL-DL configuration is used for determining a correspondence between a subframe in which a PDCCH/EPDCCH/PHICH is allocated, and a subframe in which a PUSCH corresponding to the PDCCH/EPDCCH/PHICH is allocated, in each of the two serving cells. The downlink reference UL-DL configuration is used for specifying (selecting, determining) a correspondence between a subframe n in which a PDSCH is allocated, and a subframe (n+k) in which HARQ-ACK corresponding to the PDSCH is allocated. In a case where one primary cell is configured, or in a case where one primary cell and one secondary cell are configured, and the downlink reference UL-DL configuration for the primary cell and the downlink reference UL-DL configuration for the secondary cell are the same as each other, the corresponding downlink reference UL-DL configuration is used for specifying (selecting, determining) a correspondence between a subframe n in which a PDSCH is allocated, and a subframe (n+k) in which a HARQ-ACK corresponding to the PDSCH is transmitted, in each of the two serving cells.

If a TDD UL/DL configuration (first TDD UL/DL configuration) for the uplink transmission reference, and a TDD UL/DL configuration (second TDD UL/DL configuration) for the downlink transmission reference are configured, and information regarding the uplink transmit power control is configured, in a case where subframes having the same type are configured in the first TDD UL/DL configuration and the second TDD UL/DL configuration, the terminal device 2 sets the uplink power control of the subframe, based on the parameters relating to the first uplink power control. In a case where subframes having different types are configured in the first TDD UL/DL configuration and the second TDD UL/DL configuration, the uplink power of the subframe is set based on the parameters relating to the second uplink power control.

The flexible subframe is a subframe which is an uplink subframe or a downlink subframe. The flexible subframe is a subframe which is a downlink subframe or a special subframe. The flexible subframe is a subframe which is uplink subframe or the special subframe. That is, the flexible subframe is a subframe which is a first subframe or a second subframe. For example, a subframe configured as the flexible subframe is processed as the first subframe (for example, uplink subframe) in a case of Condition 1, and is processed as the second subframe (for example, downlink subframe) in a case of Condition 2.

The flexible subframe may be set based on the first configuration and the second configuration. For example, in a case where a certain subframe i is configured as the uplink subframe in the first configuration, and is configured as the downlink subframe in the second configuration, the subframe i functions as the flexible subframe. The flexible subframe may be configured based on information for performing an instruction of a subframe pattern of the flexible subframe.

A plurality of subframe sets may be configured not based on two TDD UL/DL configurations, but based on one TDD UL/DL configuration and a flexible subframe pattern (downlink candidate subframe pattern or uplink candidate subframe pattern, addition subframe). The terminal device 2 may receive a downlink signal by using a subframe index indicated by a flexible subframe pattern as long as, even when indication as the uplink subframe in the TDD UL/DL configuration is performed, the uplink signal is transmitted in the subframe. The terminal device 2 may transmit the uplink signal as long as even when indication as the downlink subframe in the TDD UL/DL configuration is performed, an instruction of transmitting the uplink signal in the subframe is performed in advance. An instruction for a specific subframe as an uplink/downlink candidate subframe may be performed.

If a certain condition is satisfied, the terminal device 2 may recognize one set of subframes as a subframe set for an uplink, and recognize the other set of subframes as a subframe set for a downlink. Here, the subframe set for an uplink corresponds to a set of subframes configured for transmitting a PUSCH and a PHICH. The downlink subframe set corresponds to a set of subframes configured for transmitting a PDSCH and HARQ. Information indicating association of subframes with the PUSCH and the PHICH, and information indicating association of subframes with the PDSCH and the HARQ may be configured in the terminal device 2 in advance.

In the embodiment of the present invention, a plurality of subframe sets is configured for one serving cell (primary cell, secondary cell, carrier frequency, transmission frequency, component carrier). A cell in which a plurality of subframe sets is configured, and a cell in which a plurality of subframe sets is not configured may be provided.

In the embodiment of the present invention, in a case where two or more subframe sets are independently configured for one serving cell, the maximum transmitted power (P_{CMAX}, P_{CMAX, c}) for each terminal device 2 may be configured for each of the subframe sets. That is, the terminal device 2 may configure plural pieces of independent maximum transmitted power to be plural. That is, plural pieces of maximum transmitted power (P_{CMAX}, P_{CMAX, c}) may be set for one serving cell. Plural pieces of the maximum allowable output power (P_{EMAX, c}) may be configured for one serving cell.

In a case where resource assignments of various uplink signals are the same as each other, the base station device 1 may detect the various uplink signals by using a difference between signal sequences of the uplink signals. That is, the base station device 1 may recognize the uplink signal by using the difference between the signal sequences of the received uplink signals. The base station device 1 may determine whether or not transmission to the base station device 1 is performed, by using the difference between the signal sequences of the received uplink signals.

In a case where an instruction of measuring received power is performed by using the CSI-RS or the DRS from the base station device 1, the terminal device 2 may calculate downlink path loss based on the measurement result, and use the calculated downlink path loss in the uplink transmit power control.

Here, the measurement of the received power may be referred to as reference signal received power (RSRP) measurement or reception signal power measurement. Measurement of reception quality may be referred to as reference signal received quality (RSRQ) measurement or reception signal quality measurement.

The resource assignment (resource allocation, mapping to resource elements, mapping to physical resources) of the CSI-RS or the DRS may be frequency-shifted. The frequency shift of the CSI-RS or the DRS may be determined based on the physical cell ID. The frequency shift of the CSI-RS or the DRS may be determined based on the virtual cell ID.

For example, if notification of information is not performed from the base station device 1, the terminal device 2 measures received power of the first downlink reference signal. Notification of information for an instruction of whether or not received power of the second downlink reference signal is measured is performed for the terminal device 2 from the base station device 1. In a case where the instruction information indicates that the received power of the second downlink reference signal may be measured, the terminal device 2 measures the received power of the second downlink reference signal. At this time, the terminal device 2 may measure the received power of the first downlink reference signal along with the measurement of the second downlink reference signal. In a case where the instruction information indicates that measuring the received power of the second downlink reference signal is not possible, the terminal device 2 measures the received power of only the first downlink reference signal. The instruction information may include information for an instruction of whether or not reception quality of the second downlink reference signal is measured. Regardless the instruction information, received power of a third downlink reference signal may be measured.

In a case where two subframe sets are configured for one serving cell, if the second subframe set is set to be a subframe pattern of the flexible subframe, information of instructing the flexible subframe of a pattern of a subframe in which the DCI format including the TPC command field can be received may be transmitted to the terminal device 2 from the base station device 1.

A pattern of a subframe in which a TPC command applicable to the uplink subframe which belongs to the first subframe set, and a pattern of a subframe in which a TPC command applicable to the uplink subframe which belongs to the second subframe set may be respectively configured. The correspondence between the uplink subframe and the downlink subframe in which the DCI format including the TPC command for the uplink subframe is transmitted may be managed in a table.

RSRP measurement results may be independent from each other in a subframe set. A RSRP by the CRS received in a downlink subframe of a fixation subframe and a RSRP by the CRS received in the flexible subframe may be independently measured.

In the embodiment of the present invention, in a case where a plurality of subframe sets is configured in one cell (serving cell, primary cell, secondary cell), the subframe sets may be indicated by a bitmap (bit sequence). For example, a subframe set constituted by fixation subframes may be indicated by a bit sequence. A subframe set constituted by flexible subframes may be indicated by a bit sequence. The subframe sets may be independently configured in FDD and TDD. For example, the subframe sets may be indicated by a 40-bit bit sequence in FDD, may be indicated by a 20-bit bit sequence in TDD and the subframe configurations (TDD UL/DL configurations) 1 to 5. The subframe sets may be indicated by a 70-bit bit sequence in the subframe configuration 0, and may be indicated by a 60-bit bit sequence in the subframe configuration 6. The first bit or a left-end bit of the bit sequence corresponds to the subframe #0 of a radio frame which satisfies a system frame number (SFN) mod x=0. A subframe in which "1" is set in the bit sequence is used. For example, in a case where "1011000011" is indicated in a 10-bit bit sequence, the subframes #0, #2, #3, #8, and #9 are used.

In the embodiment of the present invention, in a case where a plurality of subframe sets is configured in one cell (serving cell, primary cell, secondary cell), an uplink subframe set may be configured based on the uplink reference UL/DL configuration, and a downlink subframe set may be configured based on the downlink reference UL/DL configuration.

In the embodiment of the present invention, a subframe pattern (measSubframePatternPCell), a subframe pattern (csi-measSubframeSetl, csi-measSubframeSet2), and a subframe pattern (epdcch-SubframePattern) are configured for the primary cell. The subframe pattern (measSubframePatternPCell) is for measuring a primary cell, such as RSRP/RSRQ/radio link monitoring. The subframe pattern (csi-measSubframeSetl, csi-measSubframeSet2) is used for measuring a CSI. The subframe pattern (epdcch-SubframePattern) is used for monitoring an EPDCCH.

In the embodiment of the present invention, a subframe pattern (epdcch-SubframePattern) for monitoring an EPDCCH is configured for the secondary cell.

In the embodiment of the present invention, a subframe pattern (measSubframePatternNeigh) for measuring RSRP and RSRQ at a carrier frequency is configured for an adjacent cell.

In the embodiment of the present invention, the subframe pattern (csi-measSubframeSetl, csi-measSubframeSet2) for measuring a CSI may be common between the primary cell and the secondary cell.

In the embodiment of the present invention, the subframe pattern may be independently configured in FDD and TDD. For example, the subframe pattern may be indicated by a 40-bit bit sequence in FDD and indicated by a 20-bit bit sequence in TDD and the subframe configurations (TDD UL/DL configurations) 1 to 5. The subframe pattern may be indicated by a 70-biy bit sequence in the subframe configuration 0, and indicated by a 60-bit bit sequence in the subframe configuration 6. The first bit or a left-end bit of the bit sequence corresponds to the subframe #0 of a radio frame which satisfies a system frame number (SFN) mod x=0. A subframe in which "1" is set in the bit sequence is used. For example, in a case where "1011000011" is indicated in a 10-bit bit sequence, the subframes #0, #2, #3, #8, and #9 are used.

In the embodiment of the present invention, the TDD UL/DL configuration is transmitted (notified, transferred) to the terminal device 2 from the base station device 1. Notification of the TDD UL/DL configuration may be performed by SIB1. Notification of the TDD UL/DL configuration may be performed by higher layer signaling (RRC signaling, RRC message). The base station device 1 may notify the terminal device 2 which performs communication by using a plurality of TDD UL/DL configurations, of the TDD UL/DL configuration by L1 signaling or L2 signaling.

In the embodiment of the present invention, in a case where a plurality of TDD UL/DL configurations is set in one cell, one TDD UL/DL configuration is used as an uplink reference, and one TDD UL/DL configuration is used as a downlink reference. The TDD UL/DL configuration configured as the uplink reference is used for performing processing relating to uplink transmission/reception at a transmission timing of a PUSCH, a reception timing of a PHICH in response to the PUSCH, a reception timing of an uplink grant, and the like. The TDD UL/DL configuration configured as the downlink reference is used for performing processing relating to downlink transmission/reception at a reception (monitoring) timing of a PDCCH/EPDCCH/PDSCH, a reception timing of a downlink grant, a transmission timing of a PUCCH having HARQ-ACK, and the like.

In the embodiment of the present invention, in a case where a plurality of TDD UL/DL configurations (UL/DL configurations) is set for the primary cell, each subframe pattern in the primary cell may be determined based on the TDD UL/DL configuration of which a notification is performed by SIB1. Each subframe pattern in the primary cell may be determined based on the TDD UL/DL configuration of which a notification is performed by higher layer signaling (RRC signaling, RRC message). The subframe pattern in the primary cell may be determined based on the TDD UL/DL configuration of which a notification is performed by L1 signaling (downlink grant, uplink grant, PDCCH/EPDCCH, DCI format). The subframe pattern in the primary cell may be determined based on the TDD UL/DL configuration of which a notification is performed by L2 signaling (MAC CE). The subframe pattern in the primary cell may be determined based on the TDD UL/DL configuration used as the uplink reference (uplink reference UL/DL configuration). The subframe pattern in the primary cell may be determined based on the TDD UL/DL configuration used as the downlink reference (downlink reference UL/DL configuration). The subframe pattern in the primary cell may be determined based on the common TDD UL/DL configuration. The subframe pattern in the primary cell may be independently determined. For example, a subframe pattern for measuring a primary cell may be determined based on the TDD UL/DL configuration of which a notification is performed by SIB1. A subframe pattern for monitoring an EPDCCH may be determined based on the TDD UL/DL configuration of which a notification is performed by higher layer signaling (RRC signaling, RRC message). The subframe pattern for measuring a primary cell may be determined based on the TDD UL/DL configuration of which a notification is performed by SIB1, and a subframe pattern for measuring a CSI may be determined based on L1 signaling. Specifically, the subframe pattern for measuring a primary cell may be determined based on a bit sequence corresponding to the subframe configuration (TDD UL/DL configuration) 0. The subframe pattern monitoring an EPDCCH may be determined based on the subframe configuration (TDD UL/DL configuration) 3. The subframe pattern for measuring a CSI may be determined based on the subframe configuration (TDD UL/DL configuration) 6. The value of the subframe configuration (TDD UL/DL configuration) is only an example, and may be a different value.

In the embodiment of the present invention, in a case where a plurality of TDD UL/DL configurations (UL/DL configurations) is set for the secondary cell, a subframe pattern in the secondary cell may be determined based on the TDD UL/DL configuration of which the secondary cell is notified by system information. The subframe pattern in the secondary cell may be determined based on the TDD UL/DL configuration of which a notification is performed by higher layer signaling (RRC signaling, RRC message). The subframe pattern in the secondary cell may be determined based on the TDD UL/DL configuration of which a notification is performed by L1 signaling (downlink grant, uplink grant, PDCCH/EPDCCH, DCI format). The subframe pattern in the secondary cell may be determined based on the TDD UL/DL configuration of which a notification is performed by L2 signaling (MAC CE). The subframe pattern in the secondary cell may be determined based on the TDD UL/DL configuration used as the uplink reference (uplink reference UL/DL configuration). The subframe pattern in the secondary cell may be determined based on the TDD UL/DL configuration used as the downlink reference (downlink reference UL/DL configuration). In a case where a subframe pattern for measuring a CSI is configured so as to be independent from that of the primary cell, the subframe pattern for measuring a CSI in the secondary cell may be determined so as to be independent from that of the primary cell.

In the embodiment of the present invention, in a case where a plurality of TDD UL/DL configurations (UL/DL configurations) is set for each of the primary cell and the secondary cell, each subframe pattern in each of the primary cell and the secondary cell may be determined based on the common TDD UL/DL configuration. For example, the common TDD UL/DL configuration may be a TDD UL/DL configuration of which a notification is performed by SIB1, a TDD UL/DL configuration of which a notification is performed by higher layer signaling, or a TDD UL/DL configuration of which a notification is performed by L1/L2 signaling. The common TDD UL/DL configuration may be a TDD UL/DL configuration (uplink reference UL/DL configuration) configured as an uplink reference or a TDD UL/DL configuration (downlink reference UL/DL configuration) configured as a downlink reference. Each subframe pattern in each of the primary cell and the secondary cell may be independently determined. For example, the subframe pattern in the primary cell may be determined based on the TDD UL/DL configuration of which a notification is performed by SIB1, and the subframe pattern in the secondary cell may be determined based on the TDD UL/DL configuration of which a notification is performed by L1/L2 signaling. The subframe pattern in the primary cell may be determined based on the TDD UL/DL configuration configured as an uplink reference, and the subframe pattern in the secondary cell may be determined based on the TDD UL/DL configuration configured as a downlink reference.

In the embodiment of the present invention, in a case where a plurality of TDD UL/DL configurations (UL/DL configurations) is set for each of the primary cell and the secondary cell, a notification of the uplink reference UL/DL configuration of the primary cell may be performed by SIB1 (or system information other than SIB1). The notification of the uplink reference UL/DL configuration of the primary cell may be performed by higher layer signaling (RRC signaling, RRC message). The notification of the uplink reference UL/DL configuration of the primary cell may be performed by higher layer signaling (RRC signaling, RRC message) which is common between terminal device or is dedicated for a terminal device. The notification of the uplink reference UL/DL configuration of the primary cell may be performed by L1/L2 signaling. A notification of the downlink reference UL/DL configuration of the primary cell may be performed by using a method similar to the methods described for the uplink reference UL/DL configuration of the primary cell. The uplink reference UL/DL configuration and the downlink reference UL/DL configuration of the primary cell may be configured as independent parameters.

In the embodiment of the present invention, in a case where a plurality of TDD UL/DL configurations (UL/DL configurations) is set for each of the primary cell and the secondary cell, a notification of the uplink reference UL/DL configuration of the secondary cell may be performed by higher layer signaling (RRC signaling, RRC message) corresponding to system information. The notification of the uplink reference UL/DL configuration of the secondary cell may be performed by higher layer signaling (RRC signaling, RRC message) which does not correspond to the system information, and is common between terminal devices or dedicated for a terminal device. The notification of the uplink reference UL/DL configuration of the secondary cell may be performed by L1/L2 signaling. A notification of the downlink reference UL/DL configuration of the secondary cell may be performed by using a method similar to the methods described for the uplink reference UL/DL configuration of the secondary cell. The uplink reference UL/DL configuration and the downlink reference UL/DL configuration of the secondary cell may be configured as independent parameters.

In the embodiment of the present invention, the downlink reference UL/DL configuration (TDD UL/DL configuration) for a serving cell is determined based on the TDD UL/DL configuration of the primary cell and the TDD UL/DL configuration of the secondary cell.

In the embodiment of the present invention, in a case where a plurality of TDD UL/DL configurations (UL/DL configurations) is set for each of the primary cell and the secondary cell, the downlink reference UL/DL configuration for a serving cell may be determined as the TDD UL/DL configuration for notifying the primary cell by using SIB1, or as the TDD UL/DL configuration for notifying the secondary cell by higher layer signaling. The downlink reference UL/DL configuration for the serving cell may be determined as the TDD UL/DL configuration obtained by performing a notification of a UL/DL configuration of the primary cell by SIB1, or as the TDD UL/DL configuration obtained by performing a notification of a UL/DL configuration of the secondary cell by L1 signaling. The downlink reference UL/DL configuration for the serving cell may be determined by setting the UL/DL configuration of the primary cell as a downlink reference UL/DL configuration, and by setting the UL/DL configuration of the secondary cell as a downlink reference UL/DL configuration. The downlink reference UL/DL configuration for the serving cell may be determined by setting the UL/DL configuration of the primary cell as a downlink reference UL/DL configuration, and by setting the UL/DL configuration of the secondary cell as an uplink reference TDD UL/DL configuration. The downlink reference UL/DL configuration for the serving cell may be determined by setting the UL/DL configuration of the primary cell as an uplink reference TDD UL/DL configuration, and by setting the UL/DL configuration of the secondary cell as a downlink reference TDD UL/DL configuration. The UL/DL configurations of the primary cell and the secondary cell are only an example, and may be TDD UL/DL configurations of which a notification is performed, in accordance with other conditions.

In the embodiment of the present invention, the uplink reference UL/DL configuration (TDD UL/DL configuration) for the serving cell is determined based on the TDD UL/DL configuration of a certain serving cell and the TDD UL/DL configuration of another serving cell.

In the embodiment of the present invention, in a case where a plurality of TDD UL/DL configurations (UL/DL configurations) is set for each of a plurality of serving cells, uplink reference UL/DL configurations for a serving cell may be determined by setting a TDD UL/DL configuration of which a notification is performed by SIB1, for a certain serving cell, and by setting a TDD UL/DL configuration of which a notification is performed by higher layer signaling, for another serving cell. The uplink reference UL/DL configurations for the serving cell may be determined by setting the UL/DL configuration of a certain serving cell as a TDD UL/DL configuration of which a notification is performed by SIB1, and by setting the UL/DL configuration of another serving cell as a TDD UL/DL configuration of which a notification is performed by L1 signaling. The uplink reference UL/DL configurations for the serving cell may be determined by setting the UL/DL configuration of a certain serving cell as an uplink reference UL/DL configuration, and by setting the UL/DL configuration of another serving cell as an uplink reference UL/DL configuration. The uplink reference UL/DL configurations for the serving cell may be determined by setting the UL/DL configuration of a certain serving cell as an uplink reference UL/DL configuration, and by setting the UL/DL configuration of another serving cell as a downlink reference UL/DL configuration. The TDD UL/DL configurations of the plurality of serving cells are only an example, and may be TDD UL/DL configurations of which a notification is performed, in accordance with other conditions.

In the embodiment of the present invention, in a case where a plurality of TDD UL/DL configurations (UL/DL configurations) is set for each of a plurality of serving cells (primary cell and secondary cell), and cross carrier scheduling is performed, downlink transmission/reception processing in the primary cell is performed based on the UL/DL configuration for the serving cell. Uplink transmission/reception processing in the primary cell is performed based on the uplink reference UL/DL configuration for the serving cell. The uplink transmission/reception processing in the primary cell is performed based on the uplink reference UL/DL configuration for the serving cell. In this case, if a downlink grant for the secondary cell is detected in the primary cell, downlink reception (PDSCH reception) of the secondary cell is performed based on the downlink reference UL/DL configuration for the serving cell. HARQ-ACK in response to downlink reception of the secondary cell is transmitted on a PUCCH of the primary cell. At this time, the PUCCH is transmitted based on the downlink reference UL/DL configuration for the serving cell. In this case, if an uplink grant for the secondary cell is detected in the primary cell, uplink transmission (for example, PUSCH reception) of the secondary cell is performed based on the uplink reference UL/DL configuration for the serving cell. A PHICH in response to uplink transmission of the secondary cell is transmitted in the primary cell. At this time, the PHICH is transmitted based on the uplink reference UL/DL configuration for the serving cell. That is, in this case, the terminal device 2 and the base station device 1 perform transmission/reception of an uplink/downlink based on the uplink reference UL/DL configuration and the downlink reference UL/DL configuration. In this case, the terminal device 2 is determined by PHICH resources of the serving cell c in a subframe (n+k)_{PHICH}, in response to PUSCH transmission (for a serving cell c or a cell different from the serving cell c) which is scheduled in the subframe n by the serving cell c. k_{PHICH} is determined based on the uplink reference UL/DL configuration for the serving cell. In this case, if a PUSCH (for a serving cell c or a cell different from the serving cell c) which is scheduled from the serving cell c in the subframe n is received, the base station device 1 transmits HARQ-ACK in response to the PUSCH, by using the PHICH resources of the serving cell c in a subframe (n+k)_{PHICH}.

In the embodiment of the present invention, in a case where a plurality of TDD UL/DL configurations (UL/DL configurations) is set for an adjacent cell, a subframe pattern in the adjacent cell may be determined based on a TDD UL/DL configuration of which the adjacent cell is notified by system information. The subframe pattern in the adjacent cell may be determined based on a TDD UL/DL configuration of which a notification is performed by higher layer signaling (RRC signaling, RRC message). The subframe pattern in the adjacent cell may be determined based on a TDD UL/DL configuration of which a notification is performed by higher layer signaling (RRC signaling, RRC message) which is common between terminal device or is dedicated for a terminal device. The subframe pattern in the adjacent cell may be determined based on a TDD UL/DL configuration of which a notification is performed by L1 signaling (downlink grant, uplink grant, PDCCH/EPDCCH, DCI format). The subframe pattern in the adjacent cell may be determined based on a TDD UL/DL configuration of which a notification is performed by L2 signaling (MAC CE). The subframe pattern in the adjacent cell may be determined based on a TDD UL/DL configuration (uplink reference UL/DL configuration) configured as an uplink reference. The subframe pattern in the adjacent cell may be determined based on a TDD UL/DL configuration (downlink reference UL/DL configuration) configured as a downlink reference.

Details of the P-CSI reporting will be described below.

The terminal device 2 performs P-CSI reporting which relates to RI, based on M_RI and N_OFFSET,RI. M_RI is information indicating a period. N_OFFSET,RI is information indicating a relative offset. M_RI and N_OFFSET,RI are determined based on I_RI. I_RI is a parameter which is configured through a higher layer so as to be specific to the terminal device 2. The base station device 1 and the terminal device 2 predefine and hold mapping of I_RI for M_RI and N_OFFSET,RI. The base station device 1 configures I_RI in the terminal device 2, and thus implicitly configures a value of M_RI and a value of N_OFFSET,RI. M_RI and N_OFFSET,RI indicate values by setting a subframe as a unit.

The terminal device 2 performs P-CSI reporting which relates to CQI and PMI, based on N_pd and N_OFFSET,CQI. N_pd is information indicating a period. N_OFFSET,CQI is information indicating an offset. N_pd and N_OFFSET,CQI are determined based on I CQI/PMI. I_CQI/PMI is a parameter which is configured through a higher layer so as to be specific to the terminal device 2. The base station device 1 and the terminal device 2 predefine and hold mapping of I_CQI/PMI for N_pd and N_OFFSET,CQI. The base station device 1 configures I_CQI/PMI in the terminal device 2, and thus implicitly configures a value of N_pd and a value of N_OFFSET,CQI. N_pd and N_OFFSET,CQI indicate values by setting a subframe as a unit.

In the terminal device 2, transmission modes 1 to 9 may be configured in each serving cell. In the terminal device 2, a CSI process and the transmission mode 10 may be configured in each serving cell.

In the terminal device 2 which is configured to be in a predetermined transmission mode, one CSI process or more can be configured in each serving cell by the higher layer. Each of the CSI processes is associated with one or more CSI-RS resources and one or more CSI interference measurement (CSI-IM) resources. The CSI (channel state information) reported by the terminal device 2 corresponds to a CSI process configured by the higher layer. Each of the CSI processes configures whether or not PMI/RI reporting is performed, by signaling of the higher layer. A configuration of each of the CSI processes includes a configuration of the periodic CSI reporting and a configuration of the aperiodic CSI reporting.

In the terminal device 2, two CSI subframe sets or more can be configured. The CSI subframe set can be used for limiting resources which are measured for CSI reporting. For example, the CSI reporting is performed based on CSI measurement in a subframe indicated by the CSI subframe set. The CSI subframe set is information for a predetermined number of subframes, and is information having a bitmap format in which a subframe is set as a unit. In a case where two CSI subframe sets or more are configured, configuration information for the P-CSI reporting is independently configured in each of the CSI subframe sets.

I_RI and/or I_CQI/PMI are independently configured for each serving cell or for each CSI process. That is, in each serving cell or in each CSI process, the period M_RI and the offset N_OFFSET,RI of P-CSI reporting which relates to RI, and/or the period N_pd and the offset N_OFFSET,CQI of P-CSI reporting which relates to CQI and PMI are independently configured.

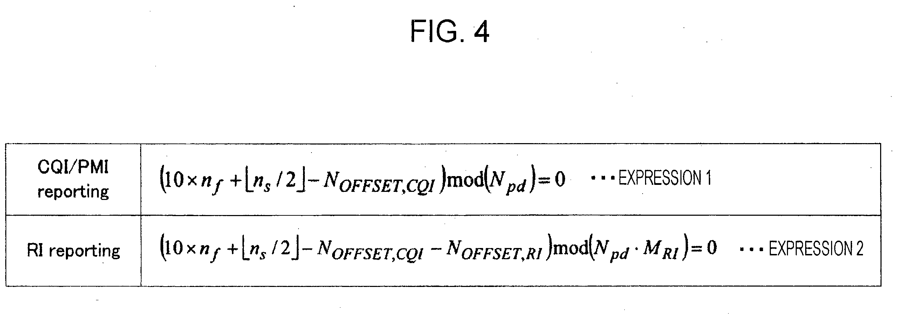

Fig. 4 is a diagram illustrating an example of an expression of determining a subframe in which periodic CSI reporting is performed. The terminal device 2 performs periodic CSI reporting in a subframe which satisfies the expression illustrated in Fig. 4. n_f indicates a radio frame number. n_s indicates a slot number in each radio frame. mod indicates an operation of outputting the remainder after division. P-CSI reporting which relates to CQI and PMI is performed in a subframe which satisfies Expression 1 in Fig. 4. P-CSI reporting which relates to RI is performed in a subframe which satisfies Expression 2 in Fig. 4.

For example, in a case where wide-band CQI/PMI reporting is configured, wide-band CQI/PMI is reported in a period indicated by N_pd, based on a subframe to which an offset indicated by N_OFFSET,CQI is given among predetermined subframes which function as a reference. In a case where RI reporting is configured, RI is reported in a period given by multiplying N_pd and M_RI, based on a subframe to which offsets indicated by N_OFFSET,CQI and N_OFFSET,RI are given among predetermined subframes which function as a reference. That is, the RI is reported in a period of integer times the reporting period of the wide-band CQI/PMI. The integer times is given by M_RI.

In a case where wide-band CQI/PMI reporting and subband CQI reporting are configured, the wide-band CQI/PMI is reported based on an integer of H. H is given by J*K+1. J indicates the number of band parts. K indicates a parameter configured in the higher layer. The subband CQI is reported by using reporting instances (subframes) of J*K pieces between reporting of two consecutive pieces of wide-band CQI/PMI. RI is reported in a period given by multiplying H, N_pd, and M_RI. That is, the wide-band CQI/PMI is reported in a period of integer times the reporting period of the subband CQI. The integer times are given by H. The RI is reported by in a period of integer times the reporting period of the wide-band CQI/PMI and the subband CQI. The integer times are given by H*M_RI. The RI is reported by in a period of integer times the reporting period of the wide-band CQI/PMI. The integer times are given by M_RI. Subband CQI reporting is performed based on a band part obtained by dividing a system band.

Here, in the P-CSI reporting which relates to CQI and PMI, mapping of I_CQI/PMI for N_pd and N_OFFSET,CQI is defined multiple times.

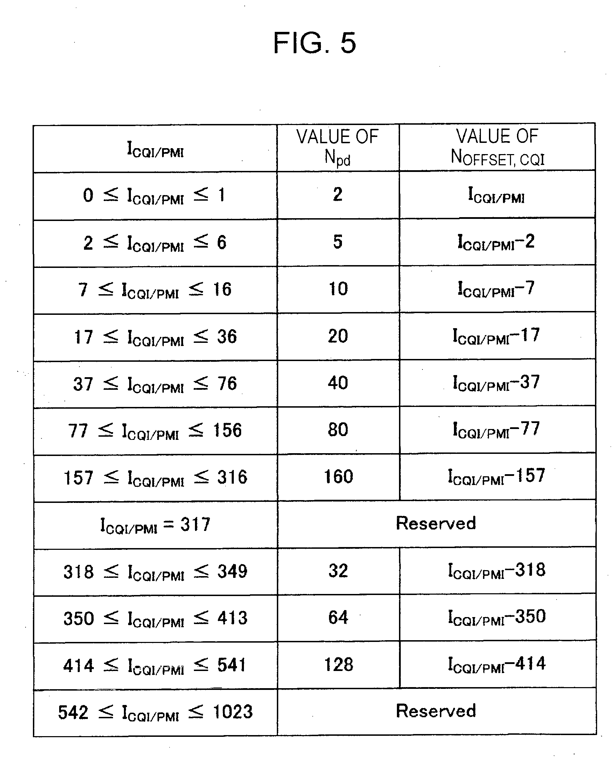

Fig. 5 is a diagram illustrating an example of mapping used in a configuration relating to P-CSI reporting which relates to CQI and PMI. Mapping illustrated in Fig. 5 indicates mapping of I_CQI/PMI for N_pd and N_OFFSET,CQI in the P-CSI reporting which relates to CQI and PMI. The mapping illustrated in Fig. 5 is also referred below to as first mapping. The first mapping includes 2, 32, 64, and 128 as the value of N_pd. The first mapping does not include 1 as the value of N_pd.

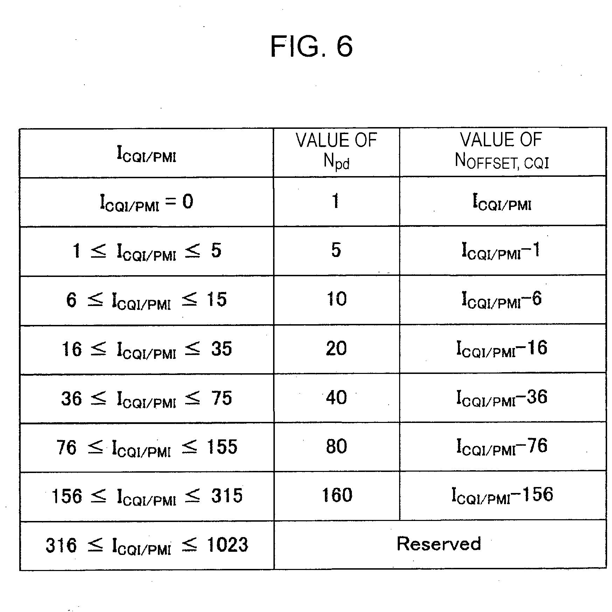

Fig. 6 is a diagram illustrating an example of mapping used in a configuration relating to P-CSI reporting which relates to CQI and PMI. Mapping illustrated in Fig. 6 indicates mapping of I_CQI/PMI for N_pd and N_OFFSET,CQI in the P-CSI reporting which relates to CQI and PMI. The mapping illustrated in Fig. 6 is also referred below to as second mapping. The second mapping includes 1 as the value of N_pd. The second mapping does not include 2, 32, 64, and 128 as the value of N_pd.

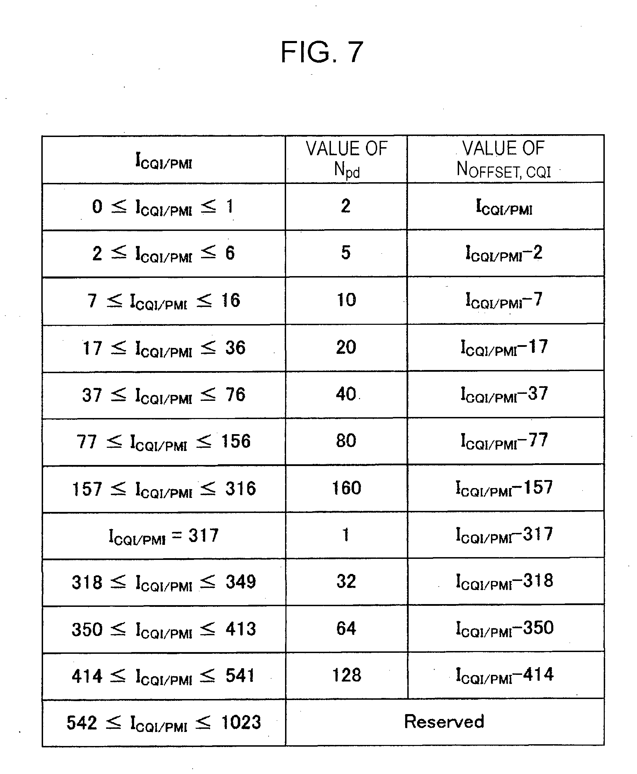

Fig. 7 is a diagram illustrating an example of mapping used in a configuration relating to P-CSI reporting which relates to CQI and PMI. Mapping illustrated in Fig. 7 indicates mapping of I_CQI/PMI for N_pd and N_OFFSET,CQI in the P-CSI reporting which relates to CQI and PMI. The mapping illustrated in Fig. 7 is also referred below to as third mapping. The third mapping includes 1, 2, 32, 64, and 128 as the value of N_pd. The third mapping is not limited to the mapping illustrated in Fig. 7, as long as the third mapping is mapping different from the first mapping or the second mapping. As the third mapping, mapping illustrated in Fig. 5 or mapping illustrated in Fig. 6 is used. However, mapping of which an index of a portion is not used may be used as the third mapping.

In the P-CSI reporting which relates to CQI and PMI, mapping of I_CQI/PMI for the N_pd and N_OFFSET,CQI can be configured based on a frame structure type of a serving cell and/or a configuration of carrier aggregation.

Mapping Example 1 is an example of mapping of I_CQI/PMI for N_pd and N_OFFSET,CQI. In Mapping Example 1, the first mapping is used in the following cases: (1) a serving cell in a case where one serving cell is configured in the terminal device 2, and the configured serving cell is an FDD cell; (2) a primary cell in a case where two serving cells or more are configured in the terminal device 2, a primary cell is an FDD cell, and a secondary cell is an FDD cell; (3) a secondary cell in a case where two serving cells or more are configured in the terminal device 2, a primary cell is an FDD cell, and a secondary cell is an FDD cell; or (4) a primary cell in a case where two serving cells or more are configured in the terminal device 2, a primary cell is an FDD cell, and a secondary cell is a TDD cell.

That is, in a case where one serving cell is configured in the terminal device 2, and the configured serving cell is an FDD cell, the terminal device 2 performs P-CSI reporting which relates to CQI and PMI, in the serving cell by using the first mapping. In a case where two serving cells or more are configured in the terminal device 2, a primary cell is an FDD cell, and a secondary cell is an FDD cell, the terminal device 2 performs P-CSI reporting which relates to CQI and PMI, in the serving cell which is the primary cell or the secondary cell, by using the first mapping. In a case where two serving cells or more are configured in the terminal device 2, a primary cell is an FDD cell, and a secondary cell is a TDD cell, the terminal device 2 performs P-CSI reporting which relates to CQI and PMI, in the serving cell which is the primary cell, by using the first mapping.

Mapping Example 2 is an example of mapping of I_CQI/PMI for N_pd and N_OFFSET,CQI. In Mapping Example 2, the second mapping is used in the following cases: (1) a serving cell in a case where one serving cell is configured in the terminal device 2, and the configured serving cell is a TDD cell; (2) a primary cell in a case where two serving cells or more are configured in the terminal device 2, a primary cell is a TDD cell, and a secondary cell is a TDD cell; (3) a secondary cell in a case where two serving cells or more are configured in the terminal device 2, a primary cell is a TDD cell, and a secondary cell is a TDD cell; or (4) a primary cell in a case where two serving cells or more are configured in the terminal device 2, a primary cell is a TDD cell, and a secondary cell is an FDD cell.

That is, in a case where one serving cell is configured in the terminal device 2, and the configured serving cell is a TDD cell, the terminal device 2 performs P-CSI reporting which relates to CQI and PMI, in the serving cell by using the first mapping. In a case where two serving cells or more are configured in the terminal device 2, a primary cell is a TDD cell, and a secondary cell is a TDD cell, the terminal device 2 performs P-CSI reporting which relates to CQI and PMI, in the serving cell which is the primary cell or the secondary cell, by using the first mapping. In a case where two serving cells or more are configured in the terminal device 2, a primary cell is a TDD cell, and a secondary cell is an FDD cell, the terminal device 2 performs P-CSI reporting which relates to CQI and PMI, in the serving cell which is the primary cell, by using the first mapping.

In Mapping Example 2, in a TDD cell to which the second mapping is applied, a predetermined value of N_pd can be applied depending on a configuration (for example, an UL/DL configuration, a downlink reference UL/DL configuration, and an uplink reference UL/DL configuration) of the primary cell or the serving cell. For example, a reporting period in which N_pd is 1 can be applied in the serving cell only in a case where an UL/DL configuration of the primary cell or the serving cell is 0, 1, 3, 4, or 6. In a case where a reporting period in which N_pd is 1 is applied, in one radio frame, all uplink subframes of the primary cell or the serving cell are used for CQI/PMI reporting. A reporting period in which N_pd is 5 can be applied in the serving cell only in a case where an UL/DL configuration of the primary cell or the serving cell is 0, 1, 2, or 6. A reporting period in which N_pd is 10, 20, 40, 80, and 160 can be applied in the serving cell, in all UL/DL configurations of the primary cell or the serving cell.

Mapping Example 3 is an example of mapping of I_CQI/PMI for N_pd and N_OFFSET,CQI. In Mapping Example 3, the first mapping is used in a secondary cell in a case where two serving cells or more are configured in the terminal device 2, a primary cell is an FDD cell, and the secondary cell is a TDD cell. That is, in a case where two serving cells or more are configured in the terminal device 2, and a primary cell is an FDD cell, and the secondary cell is a TDD cell, the terminal device 2 performs P-CSI reporting which relates to CQI and PMI, in the serving cell which is the secondary cell, by using the first mapping. The terminal device 2 performs P-CSI reporting in a case where the primary cell is an FDD cell, and the secondary cell is a TDD cell.

In Mapping Example 3, in a TDD cell to which the first mapping is applied, a predetermined value of N_pd can be applied depending on a configuration (for example, an UL/DL configuration, a downlink reference UL/DL configuration, and an uplink reference UL/DL configuration) of the primary cell or the serving cell. For example, a reporting period in which N_pd is 32, 64, and 128 may not be applied in a TDD cell to which the first mapping is applied.

In a case where the primary cell is an FDD cell, and the secondary cell is a TDD cell, Mapping Example 3 is applied, and thus a transmission timing of the FDD cell which is the primary cell can be applied in P-CSI reporting of the secondary cell. Thus, it is possible to realize efficient P-CSI reporting.

Mapping Example 4 is an example of mapping of I_CQI/PMI for N_pd and N_OFFSET,CQI. In Mapping Example 4, the second mapping is used in a secondary cell in a case where two serving cells or more are configured in the terminal device 2, a primary cell is a TDD cell, and the secondary cell is an FDD cell. That is, in a case where two serving cells or more are configured in the terminal device 2, a primary cell is a TDD cell, and the secondary cell is an FDD cell, the terminal device 2 performs P-CSI reporting which relates to CQI and PMI, in the serving cell which is the secondary cell, by using the second mapping. The terminal device 2 performs P-CSI reporting in a case where the primary cell is a TDD cell, and the secondary cell is an FDD cell.

In Mapping Example 4, in an FDD cell to which the second mapping is applied, a predetermined value of N_pd can be applied depending on a configuration (for example, an UL/DL configuration, a downlink reference UL/DL configuration, and an uplink reference UL/DL configuration) of the primary cell. For example, a reporting period in which N_pd is 1 can be applied in the serving cell only in a case where an UL/DL configuration of the primary cell or the serving cell is 0, 1, 3, 4, or 6. In a case where the reporting period in which N_pd is 1 is applied, in one radio frame, all uplink subframes of the primary cell are used for CQI/PMI reporting. A reporting period in which N_pd is 5 can be applied in the serving cell only in a case where an UL/DL configuration of the primary cell or the serving cell is 0, 1, 2, or 6. A reporting period in which N_pd is 10, 20, 40, 80, and 160 can be applied in the serving cell, in all UL/DL configurations of the primary cell.

In Mapping Example 4, in an FDD cell to which the second mapping is applied, a predetermined value of N_pd may be applied depending on a downlink reference UL/DL configuration or an uplink reference UL/DL configuration which is configured in the primary cell or the FDD cell.

In a case where the primary cell is a TDD cell, and the secondary cell is an FDD cell, Mapping Example 4 is applied, and thus a transmission timing of the TDD cell which is the primary cell can be applied in P-CSI reporting of the secondary cell. Thus, it is possible to realize efficient P-CSI reporting.

Mapping Example 5 is an example of mapping of I_CQI/PMI for N_pd and N_OFFSET,CQI. In Mapping Example 5, the second mapping is used in a secondary cell in a case where two serving cells or more are configured in the terminal device 2, a primary cell is an FDD cell, and the secondary cell is a TDD cell. That is, the terminal device 2 performs P-CSI reporting which relates to CQI and PMI, in the serving cell which is the secondary cell, by using the second mapping. The terminal device 2 performs P-CSI reporting in a case where two serving cells or more are configured in the terminal device 2, the primary cell is an FDD cell, and the secondary cell is a TDD cell.

In Mapping Example 5, in a TDD cell to which the second mapping is applied, all predetermined value of N_pd may be applied without depending on a downlink reference UL/DL configuration or an uplink reference UL/DL configuration which is configured in the primary cell.

In Mapping Example 5, in a TDD cell to which the second mapping is applied, a reporting period in which N_pd is 1 may be interpreted as a reporting period in which N_pd is 2. That is, the terminal device 2 can perform interpretation as the reporting period in which N_pd is 2, even when a notification of information corresponding to the reporting period in which N_pd is 1 is performed.

In Mapping Example 5, in a TDD cell to which the second mapping is applied, a predetermined value of N_pd can be applied depending on a configuration (for example, an UL/DL configuration, a downlink reference UL/DL configuration, and an uplink reference UL/DL configuration) of the primary cell. For example, a reporting period in which N_pd is 1 can be applied in the serving cell only in a case where a downlink reference UL/DL configuration of the primary cell or the serving cell is 0, 1, 3, 4, or 6. In a case where the reporting period in which N_pd is 1 is applied, in one radio frame, all uplink subframes of the primary cell are used for CQI/PMI reporting. A reporting period in which N_pd is 5 can be applied in the serving cell only in a case where a downlink reference UL/DL configuration of the primary cell is 0, 1, 2, or 6. A reporting period in which N_pd is 10, 20, 40, 80, and 160 can be applied in the serving cell, in all downlink reference UL/DL configurations of the primary cell.

In a case where the primary cell is an FDD cell, and the secondary cell is a TDD cell, Mapping Example 5 is applied, and thus a transmission timing of the TDD cell as in Mapping Example 2 can be applied in P-CSI reporting of the secondary cell. Thus, it is possible to realize efficient P-CSI reporting in a case where the second mapping is the optimum mapping for the TDD cell.

Mapping Example 6 is an example of mapping of I_CQI/PMI for N_pd and N_OFFSET,CQI. In Mapping Example 6, the first mapping is used in a secondary cell in a case where two serving cells or more are configured in the terminal device 2, a primary cell is a TDD cell, and the secondary cell is an FDD cell. That is, the terminal device 2 performs P-CSI reporting which relates to CQI and PMI, in the serving cell which is the secondary cell, by using the first mapping. The terminal device 2 performs P-CSI reporting in a case where two serving cells or more are configured in the terminal device 2, the primary cell is a TDD cell, and the secondary cell is an FDD cell.

In Mapping Example 6, in an FDD cell to which the first mapping is applied, a predetermined value of N_pd can be applied depending on a configuration (for example, an UL/DL configuration, a downlink reference UL/DL configuration, and an uplink reference UL/DL configuration) of the primary cell or the serving cell. For example, a reporting period in which N_pd is 2 can be applied in the serving cell only in a case where an UL/DL configuration of the primary cell or the serving cell is 0, 1, 3, 4, or 6. In a case where the reporting period in which N_pd is 2 is applied, in one radio frame, all uplink subframes of the primary cell may be used for CQI/PMI reporting. That is, the reporting period in which N_pd is 2 may be interpreted as the reporting period in which N_pd is 1. A reporting period in which N_pd is 5 can be applied in the serving cell only in a case where an UL/DL configuration of the primary cell is 0, 1, 2, or 6. A reporting period in which N_pd is 10, 20, 40, 80, and 160 can be applied in the serving cell, in all UL/DL configurations of the primary cell.

In a case where the primary cell is a TDD cell, and the secondary cell is an FDD cell, Mapping Example 6 is applied, and thus a transmission timing of the FDD cell as in Mapping Example 1 can be applied in P-CSI reporting of the secondary cell. Thus, it is possible to realize efficient P-CSI reporting in a case where the first mapping is the optimum mapping for the FDD cell.

Mapping Example 7 is an example of mapping of I_CQI/PMI for N_pd and N_OFFSET,CQI. In Mapping Example 7, the third mapping is used in a secondary cell in a case where two serving cells or more are configured in the terminal device 2, a primary cell is an FDD cell, and the secondary cell is a TDD cell. That is, the terminal device 2 performs P-CSI reporting which relates to CQI and PMI, in the serving cell which is the secondary cell, by using the third mapping. The terminal device 2 performs P-CSI reporting in a case where two serving cells or more are configured in the terminal device 2, the primary cell is an FDD cell, and the secondary cell is a TDD cell.

In Mapping Example 7, in a TDD cell to which the third mapping is applied, in a case where the primary cell is an FDD cell, a predetermined value of N_pd may not be applied. For example, a reporting period in which N_pd is 1 may not be applied.

In Mapping Example 7, in a TDD cell to which the third mapping is applied, a predetermined value of N_pd can be applied depending on a configuration (for example, an UL/DL configuration, a downlink reference UL/DL configuration, and an uplink reference UL/DL configuration) of the primary cell. For example, a reporting period in which N_pd is 1 can be applied in the serving cell only in a case where a downlink reference UL/DL configuration of the primary cell or the serving cell is 0, 1, 3, 4, or 6. In a case where the reporting period in which N_pd is 1 is applied, in one radio frame, all uplink subframes of the primary cell are used for CQI/PMI reporting. A reporting period in which N_pd is 5 can be applied in the serving cell only in a case where a downlink reference UL/DL configuration of the primary cell is 0, 1, 2, or 6. A reporting period in which N_pd is 10, 20, 40, 80, and 160 can be applied in the serving cell, in all downlink reference UL/DL configurations of the primary cell.

In a case where the primary cell is an FDD cell, and the secondary cell is a TDD cell, Mapping Example 7 is applied, and thus a transmission timing of the FDD cell which is the primary cell can be applied in P-CSI reporting of the secondary cell. Thus, it is possible to realize efficient P-CSI reporting. Regardless of an FDD cell or a TDD cell, in the base station device 1 and the terminal device 2, a configuration relating to P-CSI reporting can be performed as long as one third mapping is held as mapping of I_CQI/PMI for N_pd and N_OFFSET,CQI.

Mapping Example 8 is an example of mapping of I_CQI/PMI for N_pd and N_OFFSET,CQI. In Mapping Example 8, the third mapping is used in a secondary cell in a case where two serving cells or more are configured in the terminal device 2, a primary cell is a TDD cell, and the secondary cell is an FDD cell. That is, the terminal device 2 performs P-CSI reporting which relates to CQI and PMI, in the serving cell which is the secondary cell, by using the third mapping. The terminal device 2 performs P-CSI reporting in a case where two serving cells or more are configured in the terminal device 2, the primary cell is a TDD cell, and the secondary cell is an FDD cell.

In Mapping Example 8, in an FDD cell to which the third mapping is applied, in a case where the primary cell is an FDD cell, a predetermined value of N_pd may not be applied. For example, a reporting period in which N_pd is 2, 32, 64, and 128 may not be applied.

In Mapping Example 8, in a TDD cell to which the third mapping is applied, a predetermined value of N_pd can be applied depending on a configuration (for example, an UL/DL configuration, a downlink reference UL/DL configuration, and an uplink reference UL/DL configuration) of the primary cell. For example, a reporting period in which N_pd is 1 can be applied in the serving cell only in a case where an UL/DL configuration of the primary cell is 0, 1, 3, 4, or 6. In a case where the reporting period in which N_pd is 1 is applied, in one radio frame, all uplink subframes of the primary cell are used for CQI/PMI reporting. A reporting period in which N_pd is 5 can be applied in the serving cell only in a case where an UL/DL configuration of the primary cell is 0, 1, 2, or 6. A reporting period in which N_pd is 10, 20, 40, 80, and 160 can be applied in the serving cell, in all UL/DL configurations of the primary cell.

In a case where the primary cell is a TDD cell, and the secondary cell is an FDD cell, Mapping Example 8 is applied, and thus a transmission timing of the TDD cell which is the primary cell can be applied in P-CSI reporting of the secondary cell. Thus, it is possible to realize efficient P-CSI reporting. Regardless of an FDD cell or a TDD cell, in the base station device 1 and the terminal device 2, a configuration relating to P-CSI reporting can be performed as long as one third mapping is held as mapping of I_CQI/PMI for N_pd and N_OFFSET,CQI.

It is also stated that a configuration of mapping (which has been described in the above descriptions) of I_CQI/PMI for N_pd and N_OFFSET,CQI is switched based on the frame structure type of the serving cell and/or a configuration of carrier aggregation. For example, mapping used in the serving cell corresponds to any of Mapping Examples 1 to 8. The mapping can be switched based on the frame structure type of the serving cell and/or the configuration of carrier aggregation.

In an example of performing switching of mapping configuration, in a case where two serving cells or more are configured, the base station device 1 and the terminal device 2 perform switching of mapping which is used in the primary cell and/or the secondary cell, based on whether the primary cell is an FDD cell or a TDD cell. For example, in a case where the primary cell is an FDD cell, the first mapping is used in the primary cell and/or the secondary cell. In a case where the primary cell is a TDD cell, the second mapping is used in the primary cell and/or the secondary cell.

In an example of performing switching of mapping configuration, in a case where two serving cells or more are configured, the base station device 1 and the terminal device 2 perform switching of mapping which is used in the primary cell and/or the secondary cell, based on whether frame structure types of the primary cell and the secondary cell are the same as or different from each other. For example, in a case where the frame structure types of the primary cell and the secondary cell are the same as each other, the first mapping or the second mapping is used in the primary cell and/or the secondary cell. In a case where the frame structure types of the primary cell and the secondary cell are FDD, the first mapping is used in the primary cell and/or the secondary cell. In a case where the frame structure types of the primary cell and the secondary cell are TDD, the second mapping is used in the primary cell and/or the secondary cell. In a case where the frame structure types of the primary cell and the secondary cell are different from each other, the third mapping is used in the primary cell and/or the secondary cell.

The configuration and switching of the mapping which has been described above may be performed based on whether or not a configuration relating to carrier aggregation of TDD and FDD is configured in the higher layer. The configuration and switching of the mapping which has been described above may be configured among configurations relating to P-CSI reporting.

A CSI reference resource will be described below.

CSI is generated based on a CSI reference resource. For example, the terminal device 2 generates CQI on the assumption that the CQI is transmitted by a group of downlink physical resource blocks, which is referred to as a CSI reference resource.

A CSI reference resource in a certain serving cell is defined in the frequency domain and the time domain. A CSI reference resource in the frequency domain is defined by a group of downlink physical resource blocks which correspond to a band in which the CQI is operated.

A CSI reference resource in the time domain is defined by a predetermined subframe, based on a transmission mode configured in the terminal device 2, the number of CSI processes, and/or the frame structure type, for example. In a case where the terminal device 2 reports CSI with including CQI in an uplink subframe n, the CSI reference resource in the time domain is defined by a downlink subframe (n-n_CQI_ref). That is, the CSI reference resource in the time domain is defined by a downlink subframe before a subframe indicated by n_CQI_ref, from an uplink subframe in which CSI reporting is performed.

A specific example of a definition of the CSI reference resource in the time domain is as follows. n_CQI_ref is defined as follows, in the terminal device 2 in which a plurality of CSI processes and a predetermined transmission mode are configured in a serving cell.
(1) In a case where the serving cell is FDD, and periodic CSI reporting or aperiodic CSI reporting is performed, n_CQI_ref is a minimum value corresponding to available downlink subframes, among values which are more than 5. That is, the CSI reference resource in the time domain is a subframe before subframes of which the number is equal to or more than 5 from a subframe in which CSI reporting is performed. The CSI reference resource in the time domain is an available downlink subframe which is closest to the subframe in which CSI reporting is performed. The corresponding CSI request in aperiodic CSI reporting is in an uplink DCI format.
(2) In a case where the serving cell is FDD, and aperiodic CSI reporting is performed based on the corresponding CSI request in a random access response grant, n_CQI_ref is 5. A downlink subframe (n-n_CQI_ref) is an available downlink subframe.
(3) In a case where the serving cell is TDD, the CSI process of 2 or 3 is configured, and periodic CSI reporting or aperiodic CSI reporting is performed, n_CQI_ref is the minimum value corresponding to an available downlink subframe among values which are more than 4. That is, the CSI reference resource in the time domain is a subframe before subframes of which the number is equal to or more than 4, from a subframe in which CSI reporting is performed. The CSI reference resource in the time domain is an available downlink subframe which is closest to the subframe in which CSI reporting is performed. The corresponding CSI request in aperiodic CSI reporting is in an uplink DCI format.
(4) In a case where the serving cell is TDD, the CSI process of 2 or 3 is configured, and aperiodic CSI reporting is performed based on the corresponding CSI request in a random access response grant, n_CQI_ref is 4. A downlink subframe (n-n_CQI_ref) is an available downlink subframe.
(5) In a case where the serving cell is TDD, 4 or more CSI processes are Configured, and periodic CSI reporting or aperiodic CSI reporting is performed, n_CQI_ref is the minimum value corresponding to an available downlink subframe among values which are more than 5. That is, the CSI reference resource in the time domain is a subframe before subframes of which the number is equal to or more than 5, from a subframe in which CSI reporting is performed. The CSI reference resource in the time domain is an available downlink subframe which is closest to the subframe in which CSI reporting is performed. The corresponding CSI request in aperiodic CSI reporting is in an uplink DCI format.
(6) In a case where the serving cell is TDD, 4 or more CSI processes are configured, and aperiodic CSI reporting is performed based on the corresponding CSI request in a random access response grant, n_CQI_ref is 5. A downlink subframe (n-n_CQI_ref) is an available downlink subframe.

The available downlink subframe is defined by a subframe which satisfies all or some of the following conditions.
(1) The subframe is defined as a downlink subframe in the terminal device 2.
(2) In a case where a plurality of cells having different UL/DL configurations are integrated, and simultaneous transmission and reception of the terminal device 2 in the integrated cells is not possible, the subframe in a primary cell is a downlink subframe or a special subframe having DwPTS which is longer than a predetermined value in length.
(3) In a case where a plurality of cells having different UL/DL configurations are integrated, a primary cell is FDD or TDD, and simultaneous transmission and reception of the terminal device 2 in the integrated cells is not possible, the subframe in the primary cell is a downlink subframe or a special subframe having DwPTS which is longer than a predetermined value in length.
(4) In a case where a CSI subframe set is configured in the terminal device 2 in periodic CSI reporting, the subframe is an element of the CSI subframe set linked to the periodic CSI reporting.
(5) In a case where a terminal device 2 in which a predetermined transmission mode and a plurality of CSI processes are configured, and a CSI subframe set is configured in the terminal device 2 in aperiodic CSI reporting in a certain CSI process, the subframe is an element of the CSI subframe set linked to a downlink subframe which corresponds to a CSI request in an uplink subframe.

In P-CSI reporting which relates to CQI and PMI, the terminal device 2 can define a combination of mapping of I_CQI/PMI for N_pd and N_OFFSET,CQI, and the CSI reference resource in the time domain. For example, in a terminal device 2 in which a TDD cell and an FDD cell are configured, mapping of I_CQI/PMI for N_pd and N_OFFSET,CQI in a serving cell (including a secondary cell) is defined based on a frame structure type and/or an UL/DL configuration of a primary cell. A CSI reference resource in a serving cell (including a secondary cell) in the time domain is defined based on a frame structure type and/or an UL/DL configuration of the serving cell.

For example, there is provided a terminal device which communicates with a base station device. The terminal device includes a higher layer processing unit, and a transmission unit. In the higher layer processing unit, a primary cell and a secondary cell having different frame structure types from each other are configured, and a parameter relating to periodic reporting of channel state information is configured. The transmission unit periodically reports channel state information based on a period and an offset of a subframe determined by the parameter. Mapping of the parameter for the period and the offset in the secondary cell is determined based on the frame structure type of the primary cell. A CSI reference resource in the time domain in the secondary cell is determined based on the frame structure type of the secondary cell.

For example, there is provided a terminal device which communicates with a base station device. The terminal device includes a higher layer processing unit, and a transmission unit. In the higher layer processing unit, a plurality of serving cells having different frame structure types from each other is configured, and a parameter relating to periodic reporting of channel state information is configured. The transmission unit periodically transmits channel state information based on the period and the offset of a subframe which is determined by the parameter. Mapping of the parameter for the period and the offset in the serving cell is determined based on the frame structure type in the primary cell. A CSI reference resource in the time domain in the serving cell is determined based on the frame structure type of the serving cell.

In the embodiment according to the present invention, the descriptions are made by using a resource element or a resource block as a unit of mapping of various uplink signals or various downlink signals, and by using a symbol, a subframe, or a radio frame as a unit of transmission in the time direction. However, it is not limited thereto. Even when a region and a unit of time constituted by any frequency and any time are used instead of the above units, similar effects can be obtained. In the embodiment according to the present invention, a case where demodulation is performed by using an RS which is subjected to precoding processing is described, and the descriptions are made by using a port which is equivalent to the layer of MIMO, as a port corresponding to the RS which is subjected to precoding processing. However, it is not limited thereto. In addition, the present invention is applied to ports corresponding to reference signals which are different from each other. Thus, similar effect can be obtained. For example, unprecoded (nonprecoded) RS is used instead of the precoded RS, and a port which is equivalent to an output end after the precoding processing, or a port which is equivalent to a physical antenna (or combination of physical antennae) can be used as the port.

In the embodiment of the present invention, in a case where only DCI format 3/3A is received in a certain downlink subframe, a correction value (or absolute value) corresponding to a value set in the TPC command field which is included in DCI format 3/3A is applied to the power control adjustment value for the transmitted power of a PUSCH which is transmitted in a specific subframe set, regardless of which subframe set the downlink subframe belongs to. In a case where only DCI format 3/3A is received in a certain downlink subframe, the accumulation of TPC commands included in DCI format 3/3A may be applied to the power control adjustment value for the transmitted power of a PUSCH which is transmitted in a specific subframe set. The specific subframe set may be a set of fixation subframes, a set of flexible subframes, or a set of arbitrary subframes.

In the embodiment of the present invention, the parameter relating to the uplink power control corresponds to the parameter used in the transmit power control of the uplink physical channel/physical signal (PUSCH, PUCCH, PRACH, SRS, DMRS, and the like). The parameter used in the transmit power control includes information regarding switching or (re)configuring of various parameters which are used in configuring transmitted power of various uplink physical channels. The parameter relating to the downlink transmit power control corresponds to the parameter used in the transmit power control of the downlink physical channel/physical signal (CRS, UERS (DL DMRS), CSI-RS, PDSCH, PDCCH/EPDCCH, PBCH, PSS/SSS, PMCH, PRS, and the like). The parameter used in the transmit power control includes information regarding switching or (re)configuring of various parameters which are used in configuring transmitted power of various downlink physical channels.

In the embodiment of the present invention, the base station device 1 may configure a plurality of virtual cells ID for one terminal device 2. For example, the base station device 1 and a network including at least one base station device 1 may configure independently virtual cells ID for each physical channel/physical signal. A plurality of virtual cells ID for one physical channel/physical signal may be configured. That is, the virtual cell ID may be set for each configuration of the physical channel/physical signal. The virtual cell ID may be shared between a plurality of physical channels/physical signals.

In the descriptions of the embodiment of the present invention, for example, a case of setting power includes a case where a value of the power is set. The case of setting power includes a case where a value is set in a parameter relating to the power. A case of calculating power includes a case where the value of the power is calculated, and a case of measuring power includes a case where the value of the power is measured. A case of reporting power includes a case where the value of the power is reported. In this manner, the expression of the power appropriately includes the meaning of the value of the power.

In the descriptions of the embodiment of the present invention, a case where transmission is not performed includes a case where transmission processing is not performed. The case where transmission is not performed includes a case where a signal for transmission is not generated. The case where transmission is not performed includes a case where a signal (or information) is generated, but the generated signal (or information) is not transmitted. A case where reception is not performed includes a case where reception processing is not performed. The case where reception is not performed includes a case where detection processing is not performed. The case where reception is not performed includes a case where decoding or demodulation processing is not performed.

In the descriptions of the embodiment of the present invention, for example, a case of calculating the pathloss includes a case where the value of the pathloss is calculated. In this manner, the expression of the pathloss appropriately includes the meaning of the value of the pathloss.

In the descriptions of the embodiment of the present invention, a case of configuring various parameters includes a case where values of the various parameters are configured. In this manner, the expression of various parameters appropriately includes the meaning of the value of the various parameters.

According to the present invention, programs operated in the base station device 1 and the terminal device 2 correspond to a program of controlling a CPU and the like (program of causing a computer to perform functions), so as to realize the functions in the embodiment according to the present invention. Pieces of information handled in the base station device 1 and the terminal device 2 are temporarily accumulated in a RAM during the processing, and then, the pieces of information are stored in various ROMs or various HDDs. The stored pieces of information are read by the CPU, if necessary, and modification and writing is performed. As a recoding medium of storing the program, any of a semiconductor medium (for example, ROM, non-volatile memory card, and the like), an optical recording medium (for example, DVD, MO, MD, CD, BD, and the like), a magnetic recording medium (for example, magnetic tape, flexible disc, and the like), and the like may be used. The loaded program is executed, and thus the above-described functions of the embodiment are performed, and an operating system, other applications, or the like are processed together, based on an instruction of the program. Thus, the functions according to the present invention may be realized.

In a case where distribution to markets is performed, the program may be stored in a portable recoding medium and be distributed, or may be transmitted to a server computer connected through a network such as the Internet. In this case, the present invention also includes a recording device of the server computer. In the above-described embodiment, some or all of components of the base station device 1 and the terminal device 2 may be realized as a LSI which is a typical integrated circuit. Function blocks of the base station device 1 and the terminal device 2 may be individually formed as a form of the chip. Some or all of the function blocks may be integrated so as to be formed as a form of the chip. A method of integration of circuits is not limited to the LSI, and may be realized as a dedicated circuit or a public processor. In a case where the progress of the semiconductor technology causes a technology of integration of circuits, which substitute the LSI to be expressed, an integrated circuit obtained by using the expressed technology may be used.

Hitherto, the embodiment according to the invention is described in detail with reference to the drawings. However, the specific configuration is not limited to the embodiment, and includes design modification and the like in a range without departing from the gist of the invention. The present invention may be changed in a scope described in the claims, and an embodiment obtained by appropriately combining technological means disclosed in different embodiments is also included in the technological scope of the present invention. The components are components described in the embodiment of the present invention, and a configuration obtained by substituting components of exhibiting similar effects with each other is also included.

This application invention is not limited to the above-described embodiment. The terminal device in this application invention is not limited to application to a mobile station, and may be applied to a stationary type electronic device or a non-movable electronic device which is installed indoor or outdoor. Examples of such an electronic device include AV devices, kitchen utensils, cleaning or washing devices, an air-conditioning device, business appliances, vending machines, other domestic appliances. The present invention is preferably used in a radio base station device, a radio terminal device, a radio communication system, or a radio communication method.

### Industrial Applicability

An aspect of the present invention can be applied to a base station device, a terminal device, and the like which can efficiently perform communication, in a communication system in which the base station device and the terminal device communicate with each other.

### Reference Signs List

1 BASE STATION DEVICE
2 TERMINAL DEVICE
101 HIGHER LAYER PROCESSING UNIT
103 CONTROL UNIT
105 RECEPTION UNIT
107 TRANSMISSION UNIT
109 CHANNEL MEASUREMENT UNIT
111 TRANSMIT/RECEIVE ANTENNA
1051 DECODING PORTION
1053 DEMODULATION PORTION
1055 DEMULTIPLEXING PORTION
1057 RADIO RECEPTION PORTION
1071 CODING PORTION
1073 MODULATION PORTION
1075 MULTIPLEXING PORTION
1077 RADIO TRANSMISSION PORTION
1079 DOWNLINK REFERENCE SIGNAL GENERATION PORTION
201 HIGHER LAYER PROCESSING UNIT
203 CONTROL UNIT
205 RECEPTION UNIT
207 TRANSMISSION UNIT
209 CHANNEL MEASUREMENT UNIT
211 TRANSMIT/RECEIVE ANTENNA
2051 DECODING PORTION
2053 DEMODULATION PORTION
2055 DEMULTIPLEXING PORTION
2057 RADIO RECEPTION PORTION
2071 CODING PORTION
2073 MODULATION PORTION
2075 MULTIPLEXING PORTION
2077 RADIO TRANSMISSION PORTION
2079 UPLINK REFERENCE SIGNAL GENERATION PORTION

## Claims

1. A terminal apparatus (2) comprising:
a higher layer processing unit (201) configured to configure a mode of periodic channel state information, CSI, reporting, and a parameter I_{CQI/PMI} for a configuration of a periodicity and an offset, the periodicity and the offset being for the CSI reporting; and
a transmission unit (207, 2071, 2073, 2075, 2077) configured to, for the CSI reporting, periodically feed back a CSI component on a physical uplink control channel or a physical uplink shared channel using the mode, wherein
for frequency division duplex, FDD, the periodicity and the offset are determined based on a first mapping being a mapping between values of the parameter I_{CQI/PMI} and combinations of periodicity and offset,
for a FDD serving cell of FDD-time division duplex, TDD, carrier aggregation with a primary cell with TDD, the periodicity and the offset of the periodic CSI reporting transmitted on the FDD serving cell are determined based on a second mapping being a mapping between values of the parameter I_{CQI/PMI} and combinations of periodicity and offset,
wherein the first mapping and the second mapping are different mappings,
for a TDD serving cell of FDD-TDD carrier aggregation with a primary cell with TDD, the periodicity and the offset of the periodic CSI reporting transmitted on the TDD serving cell are determined based on the second mapping, and
in a case that the terminal apparatus (2) is configured with serving cells and in a case that frame structure types of two serving cells among the configured serving cells are different from each other, the terminal apparatus (2) is considered to be configured with the FDD-TDD carrier aggregation.

2. The terminal apparatus (2) according to claim 1, wherein
the first mapping defines the periodicity of 2, 5, 10, 20, 40, 80, 160, 32, 64, and 128 subframes, and
the second mapping defines the periodicity of 1, 5, 10, 20, 40, 80, and 160 subframes.

3. The terminal apparatus (2) according to claim 1, wherein
in the first mapping:
the parameter I_{CQI/PMI} of 0 to 1 corresponds to the offset of I_{CQI/PMI}with the periodicity of 2;
the parameter I_{CQI/PMI} of 2 to 6 corresponds to the offset of I_{CQI/PMI} minus 2 with the periodicity of 5;
the parameter I_{CQI/PMI} of 7 to 16 corresponds to the offset of I_{CQI/PMI} minus 7 with the periodicity of 10;
the parameter I_{CQI/PMI} of 17 to 36 corresponds to the offset of I_{CQI/PMI} minus 17 with the periodicity of 20;
the parameter I_{CQI/PMI} of 37 to 76 corresponds to the offset of I_{CQI/PMI} minus 37 with the periodicity of 40;
the parameter I_{CQI/PMI} of 77 to 156 corresponds to the offset of I_{CQI/PMI} minus 77 with the periodicity of 80;
the parameter I_{CQI/PMI} of 157 to 316 corresponds to the offset of I_{CQI/PMI} minus 157 with the periodicity of 160;
the parameter I_{CQI/PMI} of 318 to 349 corresponds to the offset of I_{CQI/PMI} minus 318 with the periodicity of 32;
the parameter I_{CQI/PMI} of 350 to 413 corresponds to the offset of I_{CQI/PMI} minus 350 with the periodicity of 64, and
the parameter I_{CQI/PMI} of 414 to 541 corresponds to the offset of I_{CQI/PMI} minus 414 with the periodicity of 128, and
in the second mapping:
the parameter I_{CQI/PMI} of 0 corresponds to the offset of I_{CQI/PMI} with the periodicity of 1;
the parameter I_{CQI/PMI} of 1 to 5 corresponds to the offset of I_{CQI/PMI} minus 1 with the periodicity of 5;
the parameter I_{CQI/PMI} of 6 to 15 corresponds to the offset of I_{CQI/PMI} minus 6 with the periodicity of 10;
the parameter I_{CQI/PMI} of 16 to 35 corresponds to the offset of I_{CQI/PMI} minus 16 with the periodicity of 20;
the parameter I_{CQI/PMI} of 36 to 75 corresponds to the offset of I_{CQI/PMI} minus 36 with the periodicity of 40;
the parameter I_{CQI/PMI} of 76 to 155 corresponds to the offset of I_{CQI/PMI} minus 76 with the periodicity of 80; and
the parameter I_{CQI/PMI} of 156 to 315 corresponds to the offset of I_{CQI/PMI} minus 156 with the periodicity of 160.

4. A base station apparatus (1) comprising:
a higher layer processing unit (101) configured to configure for a terminal apparatus (2) a mode of periodic channel state information, CSI, reporting, and a parameter I_{CQI/PMI} for a configuration of a periodicity and an offset, the periodicity and the offset being for the CSI reporting; and
a reception unit (105, 1051, 1053, 1055, 1057) configured to receive, for the CSI reporting, periodical feedbacks of a CSI component on a physical uplink control channel or a physical uplink shared channel using the mode, wherein
for frequency division duplex, FDD, the periodicity and the offset are determined based on a first mapping being a mapping between values of the parameter I_{CQI/PMI} and combinations of periodicity and offset,
for a FDD serving cell of FDD-time division duplex, TDD, carrier aggregation with a primary cell with TDD, the periodicity and the offset of the periodic CSI reporting transmitted on the FDD serving cell are determined based on a second mapping, the second mapping being a mapping between values of the parameter I_{CQI/PMI} and combinations of periodicity and offset,
wherein the first mapping and the second mapping are different mappings,
for a TDD serving cell of FDD-TDD carrier aggregation with a primary cell with TDD, the periodicity and the offset of the periodic CSI reporting transmitted on the TDD serving cell are determined based on the second mapping, and
in a case that the terminal apparatus (2) is configured with serving cells and in a case that frame structure types of two serving cells among the configured serving cells are different from each other, the terminal apparatus (2) is considered to be configured with the FDD-TDD carrier aggregation.

5. The base station apparatus (1) according to claim 4, wherein
the first mapping defines the periodicity of 2, 5, 10, 20, 40, 80, 160, 32, 64, and 128 subframes, and
the second mapping defines the periodicity of 1, 5, 10, 20, 40, 80, and 160 subframes.

6. The base station apparatus (1) according to claim 4, wherein
in the first mapping:
the parameter I_{CQI/PMI} of 0 to 1 corresponds to the offset of I_{CQI/PMI} with the periodicity of 2;
the parameter I_{CQI/PMI} of 2 to 6 corresponds to the offset of I_{CQI/PMI} minus 2 with the periodicity of 5;
the parameter I_{CQI/PMI} of 7 to 16 corresponds to the offset of I_{CQI/PMI} minus 7 with the periodicity of 10;
the parameter I_{CQI/PMI} of 17 to 36 corresponds to the offset of I_{CQI/PMI} minus 17 with the periodicity of 20;
the parameter I_{CQI/PMI} of 37 to 76 corresponds to the offset of I_{CQI/PMI} minus 37 with the periodicity of 40;
the parameter I_{CQI/PMI} of 77 to 156 corresponds to the offset of I_{CQI/PMI} minus 77 with the periodicity of 80;
the parameter I_{CQI/PMI} of 157 to 316 corresponds to the offset of I_{CQI/PMI} minus 157 with the periodicity of 160;
the parameter I_{CQI/PMI} of 318 to 349 corresponds to the offset of I_{CQI/PMI} minus 318 with the periodicity of 32;
the parameter I_{CQI/PMI} of 350 to 413 corresponds to the offset of I_{CQI/PMI} minus 350 with the periodicity of 64, and
the parameter I_{CQI/PMI} of 414 to 541 corresponds to the offset of I_{CQI/PMI} minus 414 with the periodicity of 128, and
in the second mapping:
the parameter I_{CQI/PMI} of 0 corresponds to the offset of I_{CQI/PMI} with the periodicity of 1;
the parameter I_{CQI/PMI} of 1 to 5 corresponds to the offset of I_{CQI/PMI} minus 1 with the periodicity of 5;
the parameter I_{CQI/PMI} of 6 to 15 corresponds to the offset of I_{CQI/PMI} minus 6 with the periodicity of 10;
the parameter I_{CQI/PMI} of 16 to 35 corresponds to the offset of I_{CQI/PMI} minus 16 with the periodicity of 20;
the parameter I_{CQI/PMI} of 36 to 75 corresponds to the offset of I_{CQI/PMI} minus 36 with the periodicity of 40;
the parameter I_{CQI/PMI} of 76 to 155 corresponds to the offset of I_{CQI/PMI} minus 76 with the periodicity of 80; and
the parameter I_{CQI/PMI} of 156 to 315 corresponds to the offset of I_{CQI/PMI} minus 156 with the periodicity of 160.

7. A communication method of a terminal apparatus (2), the communication method comprising:
configuring a mode of periodic channel state information, CSI, reporting, and a parameter I_{CQI/PMI} for a configuration of a periodicity and an offset, the periodicity and the offset being for the CSI reporting; and
periodically feeding back, for the CSI reporting, a CSI component on a physical uplink control channel or a physical uplink shared channel using the mode, wherein
for frequency division duplex, FDD, the periodicity and the offset are determined based on a first mapping being a mapping between values of the parameter I_{CQI/PMI} and combinations of periodicity and offset,
for a FDD serving cell of FDD-time division duplex, TDD, carrier aggregation with a primary cell with TDD, the periodicity and the offset of the periodic CSI reporting transmitted on the FDD serving cell are determined based on a second mapping, the second mapping being a mapping between values of the parameter I_{CQI/PMI} and combinations of periodicity and offset,
wherein the first mapping and the second mapping are different mappings,
for a TDD serving cell of FDD-TDD carrier aggregation with a primary cell with TDD, the periodicity and the offset of the periodic CSI reporting transmitted on the TDD serving cell are determined based on the second mapping, and
in a case that the terminal apparatus (2) is configured with serving cells and in a case that frame structure types of two serving cells among the configured serving cells are different from each other, the terminal apparatus (2) is considered to be configured with the FDD-TDD carrier aggregation.

8. A communication method of a base station apparatus (1), the communication method comprising:
configuring for a terminal apparatus (2) a mode of periodic channel state information, CSI, reporting, and a parameter I_{CQI/PMI} for a configuration of a periodicity and an offset, the periodicity and the offset being for the CSI reporting; and
receiving, for the CSI reporting, periodical feedbacks of a CSI component on a physical uplink control channel or a physical uplink shared channel using the mode, wherein
for frequency division duplex, FDD, the periodicity and the offset are determined based on one of a first mapping of the parameter I_{CQI/PMI}. the first mapping being a mapping between values of the parameter I_{CQI/PMI} and combinations of periodicity and offset,
for a FDD serving cell of FDD-time division duplex, TDD, carrier aggregation with a primary cell with TDD, the periodicity and the offset are determined based on a second mapping, the second mapping being a mapping between values of the parameter I_{CQI/PMI} and combinations of periodicity and offset,
wherein the first mapping and the second mapping are different mappings,
for a TDD serving cell of FDD-TDD carrier aggregation with a primary cell with TDD, the periodicity and the offset of the periodic CSI reporting transmitted on the TDD serving cell are determined based on the second mapping, and
in a case that the terminal apparatus (2) is configured with serving cells and in a case that frame structure types of two serving cells among the configured serving cells are different from each other, the terminal apparatus (2) is considered to be configured with the FDD-TDD carrier aggregation.

9. The method according to claim 7 or claim 8, wherein
the first mapping defines the periodicity of 2, 5, 10, 20, 40, 80, 160, 32, 64, and 128 subframes, and
the second mapping defines the periodicity of 1, 5, 10, 20, 40, 80, and 160 subframes.

10. The method according to claim 7 or claim 8, wherein
in the first mapping:
the parameter I_{CQI/PMI} of 0 to 1 corresponds to the offset of I_{CQI/PMI} with the periodicity of 2;
the parameter I_{CQI/PMI} of 2 to 6 corresponds to the offset of I_{CQI/PMI} minus 2 with the periodicity of 5;
the parameter I_{CQI/PMI} of 7 to 16 corresponds to the offset of I_{CQI/PMI} minus 7 with the periodicity of 10;
the parameter I_{CQI/PMI} of 17 to 36 corresponds to the offset of I_{CQI/PMI} minus 17 with the periodicity of 20;
the parameter I_{CQI/PMI} of 37 to 76 corresponds to the offset of I_{CQI/PMI} minus 37 with the periodicity of 40;
the parameter I_{CQI/PMI} of 77 to 156 corresponds to the offset of I_{CQI/PMI} minus 77 with the periodicity of 80;
the parameter I_{CQI/PMI} of 157 to 316 corresponds to the offset of I_{CQI/PMI} minus 157 with the periodicity of 160;
the parameter I_{CQI/PMI} of 318 to 349 corresponds to the offset of I_{CQI/PMI} minus 318 with the periodicity of 32;
the parameter I_{CQI/PMI} of 350 to 413 corresponds to the offset of I_{CQI/PMI} minus 350 with the periodicity of 64, and
the parameter I_{CQI/PMI} of 414 to 541 corresponds to the offset of I_{CQI/PMI} minus 414 with the periodicity of 128, and
in the second mapping:
the parameter I_{CQI/PMI} of 0 corresponds to the offset of I_{CQI/PMI} with the periodicity of 1;
the parameter I_{CQI/PMI} of 1 to 5 corresponds to the offset of I_{CQI/PMI} minus 1 with the periodicity of 5;
the parameter I_{CQI/PMI} of 6 to 15 corresponds to the offset of I_{CQI/PMI} minus 6 with the periodicity of 10;
the parameter I_{CQI/PMI} of 16 to 35 corresponds to the offset of I_{CQI/PMI} minus 16 with the periodicity of 20;
the parameter I_{CQI/PMI} of 36 to 75 corresponds to the offset of I_{CQI/PMI} minus 36 with the periodicity of 40;
the parameter I_{CQI/PMI} of 76 to 155 corresponds to the offset of I_{CQI/PMI} minus 76 with the periodicity of 80; and
the parameter I_{CQI/PMI} of 156 to 315 corresponds to the offset of I_{CQI/PMI} minus 156 with the periodicity of 160.

## Patentansprüche

1. Endgerät (2), umfassend:
eine höherschichtige Verarbeitungseinheit (201), die konfiguriert ist, einen Modus der periodischen Kanalzustandsinformationen,CSI,-Berichterstattung und einen Parameter I_{CQI/PMI} für eine Konfiguration einer Periodizität und eines Offsets zu konfigurieren, wobei die Periodizität und der Offset für die CSI-Berichterstattung sind; und
eine Übertragungseinheit (207, 2071, 2073, 2075, 2077), die konfiguriert ist, für die CSI-Berichterstattung periodisch eine CSI-Komponente auf einem Physical Uplink Control Channel oder einem Physical Uplink Shared Channel unter Verwendung des Modus zurückzuführen, wobei
für Frequency Division Duplex, FDD, die Periodizität und der Offset basierend auf einem ersten Mapping bestimmt werden, das ein Mapping zwischen Werten des Parameters I_{CQI/PMI} und Kombinationen von Periodizität und Offset ist, für eine FDD-Serving Cell von FDD-Time Division Duplex, TDD, Trägeraggregation mit einer Primärzelle mit TDD, die Periodizität und der Offset der periodischen CSI-Berichterstattung, die auf der FDD-Serving Cell übertragen wird, basierend auf einem zweiten Mapping bestimmt werden, das ein Mapping zwischen Werten des Parameters I_{CQI/PMI} und Kombinationen von Periodizität und Offset ist,
wobei das erste Mapping und das zweite Mapping unterschiedliche Mappings sind,
für eine TDD-Serving Cell von FDD-TDD-Trägeraggregation mit einer Primärzelle mit TDD die Periodizität und den Offeset der periodischen CSI-Berichterstattung, die auf der TDD-Serving Cell übertragen wird, basierend auf dem zweiten Mapping bestimmt werden, und
in einem Fall, dass das Endgerät (2) mit Serving Cells konfiguriert ist und in einem Fall, dass Rahmenstrukturtypen von zwei Serving Cells der konfigurierten Serving Cells voneinander verschieden sind, das Endgerät (2) als mit FDD-TDD-Trägeraggregation konfiguriert angesehen wird.

2. Endgerät (2) nach Anspruch 1, wobei
das erste Mapping die Periodizität von 2, 5, 10, 20, 40, 80, 160, 32, 64 und 128 Subframes definiert, und
das zweite Mapping die Periodizität von 1, 5, 10, 20, 40, 80 und 160 Subframes definiert.

3. Endgerät (2) nach Anspruch 1, wobei
bei dem ersten Mapping:
der Parameter I_{CQI/PMI} von 0 bis 1 dem Offset von I_{CQI/PMI} mit der Periodizität von 2 entspricht;
der Parameter I_{CQI/PMI} von 2 bis 6 dem Offset von I_{CQI/PMI} minus 2 mit der Periodizität von 5 entspricht;
der Parameter I_{CQI/PMI} von 7 bis 16 dem Offset von I_{CQI/PMI} minus 7 mit der Periodizität von 10 entspricht;
der Parameter I_{CQI/PMI} von 17 bis 36 dem Offset von I_{CQI/PMI} minus 17 mit der Periodizität von 20 entspricht;
der Parameter I_{CQI/PMI} von 37 bis 76 dem Offset von I_{CQI/PMI} minus 37 mit der Periodizität von 40 entspricht;
der Parameter I_{CQI/PMI} von 77 bis 156 dem Offset von I_{CQI/PMI} minus 77 mit der Periodizität von 80 entspricht;
der Parameter I_{CQI/PMI} von 157 bis 316 dem Offset von I_{CQI/PMI} minus 157 mit der Periodizität von 160 entspricht;
der Parameter I_{CQI/PMI} von 318 bis 349 dem Offset von I_{CQI/PMI} minus 318 mit der Periodizität von 32 entspricht;
der Parameter I_{CQI/PMI} von 350 bis 413 dem Offset von I_{CQI/PMI} minus 350 mit der Periodizität von 64 entspricht; und
der Parameter I_{CQI/PMI} von 414 bis 541 dem Offset von I_{CQI/PMI} minus 414 mit der Periodizität von 128 entspricht, und
bei dem zweiten Mapping:
der Parameter I_{CQI/PMI} von 0 dem Offset von I_{CQI/PMI} mit der Periodizität von 1 entspricht;
der Parameter I_{CQI/PMI} von 1 bis 5 dem Offset von I_{CQI/PMI} minus 1 mit der Periodizität von 5 entspricht;
der Parameter I_{CQI/PMI} von 6 bis 15 dem Offset von I_{CQI/PMI} minus 6 mit der Periodizität von 10 entspricht;
der Parameter I_{CQI/PMI} von 16 bis 35 dem Offset von I_{CQI/PMI} minus 16 mit der Periodizität von 20 entspricht;
der Parameter I_{CQI/PMI} von 36 bis 75 dem Offset von I_{CQI/PMI} minus 36 mit der Periodizität von 40 entspricht;
der Parameter I_{CQI/PMI} von 76 bis 155 dem Offset von I_{CQI/PMI} minus 76 mit der Periodizität von 80 entspricht; und
der Parameter I_{CQI/PMI} von 156 bis 315 dem Offset von I_{CQI/PMI} minus 156 mit der Periodizität von 160 entspricht.

4. Basisstationsvorrichtung (1), umfassend:
eine höherschichtige Verarbeitungseinheit (101), die konfiguriert ist, für ein Endgerät (2) einen Modus der periodischen Kanalzustandsinformationen,CSI,-Berichterstattung und einen Parameter I_{CQI/PMI} für eine Konfiguration einer Periodizität und eines Offsets zu konfigurieren, wobei die Periodizität und der Offset für die CSI-Berichterstattung sind; und
eine Empfangseinheit (105, 1051, 1053, 1055, 1057), die konfiguriert ist, für die CSI-Berichterstattung periodische Feedbacks bzw. Rückmeldungen einer CSI-Komponente auf einem Physical Uplink Control Channel oder einem Physical Uplink Shared Channel unter Verwendung des Modus zu empfangen, wobei
für Frequency Division Duplex, FDD, die Periodizität und der Offset basierend auf einem ersten Mapping bestimmt werden, das ein Mapping zwischen Werten des Parameters I_{CQI/PMI} und Kombinationen von Periodizität und Offset ist, für eine FDD-Serving Cell von FDD-Time Division Duplex, TDD, Trägeraggregation mit einer Primärzelle mit TDD, die Periodizität und der Offset der periodischen CSI-Berichterstattung, die auf der FDD-Serving Cell übertragen wird, basierend auf einem zweiten Mapping bestimmt werden, wobei das zweite Mapping ein Mapping zwischen Werten des Parameters I_{CQI/PMI} und Kombinationen von Periodizität und Offset ist,
wobei das erste Mapping und das zweite Mapping unterschiedliche Mappings sind,
für eine TDD-Serving Cell von FDD-TDD-Trägeraggregation mit einer Primärzelle mit TDD die Periodizität und den Offset der periodischen CSI-Berichterstattung, die auf der TDD-Serving Cell übertragen wird, basierend auf dem zweiten Mapping bestimmt werden, und
in einem Fall, dass das Endgerät (2) mit Serving Cells konfiguriert ist und in einem Fall, dass Rahmenstrukturtypen von zwei Serving Cells der konfigurierten Serving Cells voneinander verschieden sind, das Endgerät (2) als mit FDD-TDD-Trägeraggregation konfiguriert angesehen wird.

5. Basisstationsvorrichtung (1) nach Anspruch 4, wobei
das erste Mapping die Periodizität von 2, 5, 10, 20, 40, 80, 160, 32, 64 und 128 Subframes definiert, und
das zweite Mapping die Periodizität von 1, 5, 10, 20, 40, 80 und 160 Subframes definiert.

6. Basisstationsvorrichtung (1) nach Anspruch 4, wobei bei dem ersten Mapping:
der Parameter I_{CQI/PMI} von 0 bis 1 dem Offset von I_{CQI/PMI} mit der Periodizität von 2 entspricht;
der Parameter I_{CQI/PMI} von 2 bis 6 dem Offset von I_{CQI/PMI} minus 2 mit der Periodizität von 5 entspricht;
der Parameter I_{CQI/PMI} von 7 bis 16 dem Offset von I_{CQI/PMI} minus 7 mit der Periodizität von 10 entspricht;
der Parameter I_{CQI/PMI} von 17 bis 36 dem Offset von I_{CQI/PMI} minus 17 mit der Periodizität von 20 entspricht;
der Parameter I_{CQI/PMI} von 37 bis 76 dem Offset von I_{CQI/PMI} minus 37 mit der Periodizität von 40 entspricht;
der Parameter I_{CQI/PMI} von 77 bis 156 dem Offset von I_{CQI/PMI} minus 77 mit der Periodizität von 80 entspricht;
der Parameter I_{CQI/PMI} von 157 bis 316 dem Offset von I_{CQI/PMI} minus 157 mit der Periodizität von 160 entspricht;
der Parameter I_{CQI/PMI} von 318 bis 349 dem Offset von I_{CQI/PMI} minus 318 mit der Periodizität von 32 entspricht;
der Parameter I_{CQI/PMI} von 350 bis 413 dem Offset von I_{CQI/PMI} minus 350 mit der Periodizität von 64 entspricht; und
der Parameter I_{CQI/PMI} von 414 bis 541 dem Offset von I_{CQI/PMI} minus 414 mit der Periodizität von 128 entspricht, und
bei dem zweiten Mapping:
der Parameter I_{CQI/PMI} von 0 dem Offset von I_{CQI/PMI} mit der Periodizität von 1 entspricht;
der Parameter I_{CQI/PMI} von 1 bis 5 dem Offset von I_{CQI/PMI} minus 1 mit der Periodizität von 5 entspricht;
der Parameter I_{CQI/PMI} von 6 bis 15 dem Offset von I_{CQI/PMI} minus 6 mit der Periodizität von 10 entspricht;
der Parameter I_{CQI/PMI} von 16 bis 35 dem Offset von I_{CQI/PMI} minus 16 mit der Periodizität von 20 entspricht;
der Parameter I_{CQI/PMI} von 36 bis 75 dem Offset von I_{CQI/PMI} minus 36 mit der Periodizität von 40 entspricht;
der Parameter I_{CQI/PMI} von 76 bis 155 dem Offset von I_{CQI/PMI} minus 76 mit der Periodizität von 80 entspricht; und
der Parameter I_{CQI/PMI} von 156 bis 315 dem Offset von I_{CQI/PMI} minus 156 mit der Periodizität von 160 entspricht.

7. Kommunikationsverfahren eines Endgeräts (2), wobei das Kommunikationsverfahren umfasst:
Konfigurieren eines Modes der periodischen Kanalzustandsinformationen,CSI,-Berichterstattung und eines Parameters I_{CQI/PMI} für eine Konfiguration einer Periodizität und eines Offsets, wobei die Periodizität und der Offset für die CSI-Berichterstattung sind,
periodisches Zurückführen, für die CSI-Berichterstattung, einer CSI-Komponente auf einem Physical UplinkControl Channel oder einem Physical Uplink Shared Channel unter Verwendung des Modus, wobei
für Frequency Division Duplex, FDD, die Periodizität und der Offset basierend auf einem ersten Mapping bestimmt werden, das ein Mapping zwischen Werten des Parameters I_{CQI/PMI} und Kombinationen von Periodizität und Offset ist, für eine FDD-Serving Cell von FDD-Time Division Duplex, TDD, Trägeraggregation mit einer Primärzelle mit TDD, die Periodizität und der Offset der periodischen CSI-Berichterstattung, die auf der FDD-Serving Cell übertragen wird, basierend auf einem zweiten Mapping bestimmt werden, wobei das zweite Mapping ein Mapping zwischen Werten des Parameters I_{CQI/PMI} und Kombinationen von Periodizität und Offset ist,
wobei das erste Mapping und das zweite Mapping unterschiedliche Mappings sind,
für eine TDD-Serving Cell von FDD-TDD-Trägeraggregation mit einer Primärzelle mit TDD die Periodizität und der Offset der periodischen CSI-Berichterstattung, die auf der TDD-Serving Cell übertragen wird, basierend auf dem zweiten Mapping bestimmt werden, und
in einem Fall, dass das Endgerät (2) mit Serving Cells konfiguriert ist und in einem Fall, dass Rahmenstrukturtypen von zwei Serving Cells der konfigurierten Serving Cells voneinander verschieden sind, das Endgerät (2) als mit FDD-TDD-Trägeraggregation konfiguriert angesehen wird.

8. Kommunikationsverfahren einer Basisstationsvorrichtung (1), wobei das Kommunikationsverfahren umfasst:
Konfigurieren, für ein Endgerät (2), eines Modes der periodischen Kanalzustandsinformationen,CSI,-Berichterstattung und eines Parameters I_{CQI/PMI} für eine Konfiguration einer Periodizität und eines Offsets, wobei die Periodizität und der Offset für die CSI-Berichterstattung sind; und
Empfangen, für die CSI-Berichterstattung, von periodischen Feedbacks einer CSI-Komponente auf einem Physical Uplink Control Channel oder einem Physical Uplink Shared Channel unter Verwendung des Modus, wobei für Frequency Division Duplex, FDD, die Periodizität und der Offset basierend auf einem ersten Mapping des Parameters I_{CQI/PMI} bestimmt werden, wobei das erste Mapping ein Mapping zwischen Werten des Parameters I_{CQI/PMI} und Kombinationen von Periodizität und Offset ist,
für eine FDD-Serving Cell von FDD-Time Division Duplex, TDD, Trägeraggregation mit einer Primärzelle mit TDD, die Periodizität und der Offset basierend auf einem zweiten Mapping bestimmt werden, wobei das zweite Mapping ein Mapping zwischen Werten des Parameters I_{CQI/PMI} und Kombinationen von Periodizität und Offset ist,
wobei das erste Mapping und das zweite Mapping unterschiedliche Mappings sind,
für eine TDD-Serving Cell von FDD-TDD-Trägeraggregation mit einer Primärzelle mit TDD die Periodizität und der Offset der periodischen CSI-Berichterstattung, die auf der TDD-Serving Cell übertragen wird, basierend auf dem zweiten Mapping bestimmt werden, und
in einem Fall, dass das Endgerät (2) mit Serving Cells konfiguriert ist und in einem Fall, dass Rahmenstrukturtypen von zwei Serving Cells der konfigurierten Serving Cells voneinander verschieden sind, das Endgerät (2) als mit FDD-TDD-Trägeraggregation konfiguriert angesehen wird.

9. Verfahren nach Anspruch 7 oder Anspruch 8, wobei
das erste Mapping die Periodizität von 2, 5, 10, 20, 40, 80, 160, 32, 64 und 128 Subframes definiert, und
das zweite Mapping die Periodizität von 1, 5, 10, 20, 40, 80 und 160 Subframes definiert.

10. Verfahren nach Anspruch 7 oder Anspruch 8, wobei bei dem ersten Mapping:
der Parameter I_{CQI/PMI} von 0 bis 1 dem Offset von I_{CQI/PMI} mit der Periodizität von 2 entspricht;
der Parameter I_{CQI/PMI} von 2 bis 6 dem Offset von I_{CQI/PMI} minus 2 mit der Periodizität von 5 entspricht;
der Parameter I_{CQI/PMI} von 7 bis 16 dem Offset von I_{CQI/PMI} minus 7 mit der Periodizität von 10 entspricht;
der Parameter I_{CQI/PMI} von 17 bis 36 dem Offset von I_{CQI/PMI} minus 17 mit der Periodizität von 20 entspricht;
der Parameter I_{CQI/PMI} von 37 bis 76 dem Offset von I_{CQI/PMI} minus 37 mit der Periodizität von 40 entspricht;
der Parameter I_{CQI/PMI} von 77 bis 156 dem Offset von I_{CQI/PMI} minus 77 mit der Periodizität von 80 entspricht;
der Parameter I_{CQI/PMI} von 157 bis 316 dem Offset von I_{CQI/PMI} minus 157 mit der Periodizität von 160 entspricht;
der Parameter I_{CQI/PMI} von 318 bis 349 dem Offset von I_{CQI/PMI} minus 318 mit der Periodizität von 32 entspricht;
der Parameter I_{CQI/PMI} von 350 bis 413 dem Offset von I_{CQI/PMI} minus 350 mit der Periodizität von 64 entspricht; und
der Parameter I_{CQI/PMI} von 414 bis 541 dem Offset von I_{CQI/PMI} minus 414 mit der Periodizität von 128 entspricht, und
bei dem zweiten Mapping:
der Parameter I_{CQI/PMI} von 0 dem Offset von I_{CQI/PMI} mit der Periodizität von 1 entspricht;
der Parameter I_{CQI/PMI} von 1 bis 5 dem Offset von I_{CQI/PMI} minus 1 mit der Periodizität von 5 entspricht;
der Parameter I_{CQI/PMI} von 6 bis 15 dem Offset von I_{CQI/PMI} minus 6 mit der Periodizität von 10 entspricht;
der Parameter I_{CQI/PMI} von 16 bis 35 dem Offset von I_{CQI/PMI} minus 16 mit der Periodizität von 20 entspricht;
der Parameter I_{CQI/PMI} von 36 bis 75 dem Offset von I_{CQI/PMI} minus 36 mit der Periodizität von 40 entspricht;
der Parameter I_{CQI/PMI} von 76 bis 155 dem Offset von I_{CQI/PMI} minus 76 mit der Periodizität von 80 entspricht; und
der Parameter I_{CQI/PMI} von 156 bis 315 dem Offset von I_{CQI/PMI} minus 156 mit der Periodizität von 160 entspricht.

## Revendications

1. Appareil de terminal (2) comprenant :
un module de traitement de couche supérieure (201) configuré pour configurer un mode de rapport d'informations d'état de canal, CSI, périodique et un paramètre I_{CQI/PMI} pour une configuration d'une périodicité et d'un décalage, la périodicité et le décalage étant pour le rapport CSI ; et
un module de transmission (207, 2071, 2073, 2075, 2077) configuré pour réinjecter périodiquement, pour le rapport CSI, un composant CSI sur un canal de commande de liaison montante physique ou un canal partagé de liaison montante physique en utilisant le mode, dans lequel
pour le duplexage par répartition en fréquence, FDD, la périodicité et le décalage sont déterminés en fonction d'un premier mappage qui est un mappage entre des valeurs du paramètre I_{CQI/PMI} et des combinaisons de périodicité et décalage,
pour une cellule de desserte FDD d'agrégation de porteuses de FDD-duplexage par répartition dans le temps, TDD, avec une cellule primaire avec TDD, la périodicité et le décalage du rapport CSI périodique transmis sur la cellule de desserte FDD sont déterminés en fonction d'un second mappage qui est un mappage entre des valeurs du paramètre I_{CQI/PMI} et des combinaisons de périodicité et décalage,
dans lequel le premier mappage et le second mappage sont des mappages différents,
pour une cellule de desserte TDD d'agrégation de porteuses de FDD-TDD avec une cellule primaire avec TDD, la périodicité et le décalage du rapport CSI périodique transmis sur la cellule de desserte TDD sont déterminés en fonction du second mappage, et
au cas où l'appareil de terminal (2) est configuré avec des cellules de desserte et au cas où les types de structure de trame de deux cellules de desserte parmi les cellules de desserte configurées sont différents l'un de l'autre, l'appareil de terminal (2) est considéré comme étant configuré avec l'agrégation de porteuses de FDD-TDD.

2. Appareil de terminal (2) selon la revendication 1, dans lequel
le premier mappage définit la périodicité de 2, 5, 10, 20, 40, 80, 160, 32, 64 et 128 sous-trames, et
le second mappage définit la périodicité de 1, 5, 10, 20, 40, 80 et 160 sous-trames.

3. Appareil de terminal (2) selon la revendication 1, dans lequel dans le premier mappage :
le paramètre I_{CQI/PMI} de 0 sur 1 correspond au décalage de I_{CQI/PMI} avec la périodicité de 2 ;
le paramètre I_{CQI/PMI} de 2 sur 6 correspond au décalage de I_{CQI/PMI} moins 2 avec la périodicité de 5 ;
le paramètre I_{CQI/PMI} de 7 sur 16 correspond au décalage de I_{CQI/PMI} moins 7 avec la périodicité de 10 ;
le paramètre I_{CQI/PMI} de 17 sur 36 correspond au décalage de I_{CQI/PMI} moins 17 avec la périodicité de 20 ;
le paramètre I_{CQI/PMI} de 37 sur 76 correspond au décalage de I_{CQI/PMI} moins 37 avec la périodicité de 40 ;
le paramètre I_{CQI/PMI} de 77 sur 156 correspond au décalage de I_{CQI/PMI} moins 77 avec la périodicité de 80 ;
le paramètre I_{CQI/PMI} de 157 sur 316 correspond au décalage de I_{CQI/PMI} moins 157 avec la périodicité de 160 ;
le paramètre I_{CQI/PMI} de 318 sur 349 correspond au décalage de I_{CQI/PMI} moins 318 avec la périodicité de 32 ;
le paramètre I_{CQI/PMI} de 350 sur 413 correspond au décalage de I_{CQI/PMI} moins 350 avec la périodicité de 64, et
le paramètre I_{CQI/PMI} de 414 sur 541 correspond au décalage de I_{CQI/PMI} moins 414 avec la périodicité de 128, et
dans le second mappage :
le paramètre I_{CQI/PMI} de 0 correspond au décalage de I_{CQI/PMI} avec la périodicité de 1 ;
le paramètre I_{CQI/PMI} de 1 sur 5 correspond au décalage de I_{CQI/PMI} moins 1 avec la périodicité de 5 ;
le paramètre I_{CQI/PMI} de 6 sur 15 correspond au décalage de I_{CQI/PMI} moins 6 avec la périodicité de 10 ;
le paramètre I_{CQI/PMI} de 16 sur 35 correspond au décalage de I_{CQI/PMI} moins 16 avec la périodicité de 20 ;
le paramètre I_{CQI/PMI} de 36 sur 75 correspond au décalage de I_{CQI/PMI} moins 36 avec la périodicité de 40 ;
le paramètre I_{CQI/PMI} de 76 sur 155 correspond au décalage de I_{CQI/PMI} moins 76 avec la périodicité de 80 ; et
le paramètre I_{CQI/PMI} de 156 sur 315 correspond au décalage de I_{CQI/PMI} moins 156 avec la périodicité de 160.

4. Appareil de station de base (1) comprenant :
un module de traitement de couche supérieure (101) configuré pour configurer pour un appareil de terminal (2) un mode de rapport d'informations d'état de canal, CSI, périodique et un paramètre I_{CQI/PMI} pour une configuration d'une périodicité et d'un décalage, la périodicité et le décalage étant pour le rapport CSI ; et
un module de réception (105, 1051, 1053, 1055, 1057) configuré pour recevoir, pour le rapport CSI, des rétroactions périodiques d'un composant CSI sur un canal de commande de liaison montante physique ou un canal partagé de liaison montante physique en utilisant le mode, dans lequel pour le duplexage par répartition en fréquence, FDD, la périodicité et le décalage sont déterminés en fonction d'un premier mappage qui est un mappage entre des valeurs du paramètre I_{CQI/PMI} et des combinaisons de périodicité et décalage,
pour une cellule de desserte FDD d'agrégation de porteuses de FDD-duplexage par répartition dans le temps, TDD, avec une cellule primaire avec TDD, la périodicité et le décalage du rapport CSI périodique transmis sur la cellule de desserte FDD sont déterminés en fonction d'un second mappage, le second mappage étant un mappage entre des valeurs du paramètre I_{CQI/PMI} et des combinaisons de périodicité et décalage,
dans lequel le premier mappage et le second mappage sont des mappages différents,
pour une cellule de desserte TDD d'agrégation de porteuses de FDD-TDD avec une cellule primaire avec TDD, la périodicité et le décalage du rapport CSI périodique transmis sur la cellule de desserte TDD sont déterminés en fonction du second mappage, et
au cas où l'appareil de terminal (2) est configuré avec des cellules de desserte et au cas où les types de structure de trame de deux cellules de desserte parmi les cellules de desserte configurées sont différents l'un de l'autre, l'appareil de terminal (2) est considéré comme étant configuré avec l'agrégation de porteuses de FDD-TDD.

5. Appareil de station de base (1) selon la revendication 4, dans lequel
le premier mappage définit la périodicité de 2, 5, 10, 20, 40, 80, 160, 32, 64 et 128 sous-trames, et
le second mappage définit la périodicité de 1, 5, 10, 20, 40, 80 et 160 sous-trames.

6. Appareil de station de base (1) selon la revendication 4, dans lequel
dans le premier mappage :
le paramètre I_{CQI/PMI} de 0 sur 1 correspond au décalage de I_{CQI/PMI} avec la périodicité de 2 ;
le paramètre I_{CQI/PMI} de 2 sur 6 correspond au décalage de I_{CQI/PMI} moins 2 avec la périodicité de 5 ;
le paramètre I_{CQI/PMI} de 7 sur 16 correspond au décalage de I_{CQI/PMI} moins 7 avec la périodicité de 10 ;
le paramètre I_{CQI/PMI} de 17 sur 36 correspond au décalage de I_{CQI/PMI} moins 17 avec la périodicité de 20 ;
le paramètre I_{CQI/PMI} de 37 sur 76 correspond au décalage de I_{CQI/PMI} moins 37 avec la périodicité de 40 ;
le paramètre I_{CQI/PMI} de 77 sur 156 correspond au décalage de I_{CQI/PMI} moins 77 avec la périodicité de 80 ;
le paramètre I_{CQI/PMI} de 157 sur 316 correspond au décalage de I_{CQI/PMI} moins 157 avec la périodicité de 160 ;
le paramètre I_{CQI/PMI} de 318 sur 349 correspond au décalage de I_{CQI/PMI} moins 318 avec la périodicité de 32 ;
le paramètre I_{CQI/PMI} de 350 sur 413 correspond au décalage de I_{CQI/PMI} moins 350 avec la périodicité de 64, et
le paramètre I_{CQI/PMI} de 414 sur 541 correspond au décalage de I_{CQI/PMI} moins 414 avec la périodicité de 128, et
dans le second mappage :
le paramètre I_{CQI/PMI} de 0 correspond au décalage de I_{CQI/PMI} avec la périodicité de 1 ;
le paramètre I_{CQI/PMI} de 1 sur 5 correspond au décalage de I_{CQI/PMI} moins 1 avec la périodicité de 5 ;
le paramètre I_{CQI/PMI} de 6 sur 15 correspond au décalage de I_{CQI/PMI} moins 6 avec la périodicité de 10 ;
le paramètre I_{CQI/PMI} de 16 sur 35 correspond au décalage de I_{CQI/PMI} moins 16 avec la périodicité de 20 ;
le paramètre I_{CQI/PMI} de 36 sur 75 correspond au décalage de I_{CQI/PMI} moins 36 avec la périodicité de 40 ;
le paramètre I_{CQI/PMI} de 76 sur 155 correspond au décalage de I_{CQI/PMI} moins 76 avec la périodicité de 80 ; et
le paramètre I_{CQI/PMI} de 156 sur 315 correspond au décalage de I_{CQI/PMI} moins 156 avec la périodicité de 160.

7. Procédé de communication d'un appareil de terminal (2), le procédé de communication comprenant :
configurer un mode de rapport d'informations d'état de canal, CSI, périodique et un paramètre I_{CQI/PMI} pour une configuration d'une périodicité et d'un décalage, la périodicité et le décalage étant pour le rapport CSI ; et
réinjecter périodiquement, pour le rapport CSI, un composant CSI sur un canal de commande de liaison montante physique ou un canal partagé de liaison montante physique en utilisant le mode, dans lequel
pour le duplexage par répartition en fréquence, FDD, la périodicité et le décalage sont déterminés en fonction d'un premier mappage qui est un mappage entre des valeurs du paramètre I_{CQI/PMI} et des combinaisons de périodicité et décalage,
pour une cellule de desserte FDD d'agrégation de porteuses de FDD-duplexage par répartition dans le temps, TDD, avec une cellule primaire avec TDD, la périodicité et le décalage du rapport CSI périodique transmis sur la cellule de desserte FDD sont déterminés en fonction d'un second mappage, le second mappage étant un mappage entre des valeurs du paramètre I_{CQI/PMI} et des combinaisons de périodicité et décalage,
dans lequel le premier mappage et le second mappage sont des mappages différents,
pour une cellule de desserte TDD d'agrégation de porteuses de FDD-TDD avec une cellule primaire avec TDD, la périodicité et le décalage du rapport CSI périodique transmis sur la cellule de desserte TDD sont déterminés en fonction du second mappage, et
au cas où l'appareil de terminal (2) est configuré avec des cellules de desserte et au cas où les types de structure de trame de deux cellules de desserte parmi les cellules de desserte configurées sont différents l'un de l'autre, l'appareil de terminal (2) est considéré comme étant configuré avec l'agrégation de porteuses de FDD-TDD.

8. Procédé de communication d'un appareil de station de base (1), le procédé de communication comprenant :
configurer pour un appareil de terminal (2) un mode de rapport d'informations d'état de canal, CSI, périodique et un paramètre I_{CQI/PMI} pour une configuration d'une périodicité et d'un décalage, la périodicité et le décalage étant pour le rapport CSI ; et
recevoir, pour le rapport CSI, des rétroactions périodiques d'un composant CSI sur un canal de commande de liaison montante physique ou un canal partagé de liaison montante physique en utilisant le mode, dans lequel pour le duplexage par répartition en fréquence, FDD, la périodicité et le décalage sont déterminés en fonction d'un mappage parmi un premier mappage du paramètre I_{CQI/PMI}, le premier mappage étant un mappage entre des valeurs du paramètre I_{CQI/PMI} et des combinaisons de périodicité et décalage,
pour une cellule de desserte FDD d'agrégation de porteuses de FDD-duplexage par répartition dans le temps, TDD, avec une cellule primaire avec TDD, la périodicité et le décalage sont déterminés en fonction d'un second mappage, le second mappage étant un mappage entre des valeurs du paramètre I_{CQI/PMI} et des combinaisons de périodicité et décalage,
dans lequel le premier mappage et le second mappage sont des mappages différents,
pour une cellule de desserte TDD d'agrégation de porteuses de FDD-TDD avec une cellule primaire avec TDD, la périodicité et le décalage du rapport CSI périodique transmis sur la cellule de desserte TDD sont déterminés en fonction du second mappage, et
au cas où l'appareil de terminal (2) est configuré avec des cellules de desserte et au cas où les types de structure de trame de deux cellules de desserte parmi les cellules de desserte configurées sont différents l'un de l'autre, l'appareil de terminal (2) est considéré comme étant configuré avec l'agrégation de porteuses de FDD-TDD.

9. Procédé selon la revendication 7 ou la revendication 8, dans lequel
le premier mappage définit la périodicité de 2, 5, 10, 20, 40, 80, 160, 32, 64 et 128 sous-trames, et
le second mappage définit la périodicité de 1, 5, 10, 20, 40, 80 et 160 sous-trames.

10. Procédé selon la revendication 7 ou la revendication 8, dans lequel dans le premier mappage :
le paramètre I_{CQI/PMI} de 0 sur 1 correspond au décalage de I_{CQI/PMI} avec la périodicité de 2 ;
le paramètre I_{CQI/PMI} de 2 sur 6 correspond au décalage de I_{CQI/PMI} moins 2 avec la périodicité de 5 ;
le paramètre I_{CQI/PMI} de 7 sur 16 correspond au décalage de I_{CQI/PMI} moins 7 avec la périodicité de 10 ;
le paramètre I_{CQI/PMI} de 17 sur 36 correspond au décalage de I_{CQI/PMI} moins 17 avec la périodicité de 20 ;
le paramètre I_{CQI/PMI} de 37 sur 76 correspond au décalage de I_{CQI/PMI} moins 37 avec la périodicité de 40 ;
le paramètre I_{CQI/PMI} de 77 sur 156 correspond au décalage de I_{CQI/PMI} moins 77 avec la périodicité de 80 ;
le paramètre I_{CQI/PMI} de 157 sur 316 correspond au décalage de I_{CQI/PMI} moins 157 avec la périodicité de 160 ;
le paramètre I_{CQI/PMI} de 318 sur 349 correspond au décalage de I_{CQI/PMI} moins 318 avec la périodicité de 32 ;
le paramètre I_{CQI/PMI} de 350 sur 413 correspond au décalage de I_{CQI/PMI} moins 350 avec la périodicité de 64, et
le paramètre I_{CQI/PMI} de 414 sur 541 correspond au décalage de I_{CQI/PMI} moins 414 avec la périodicité de 128, et
dans le second mappage :
le paramètre I_{CQI/PMI} de 0 correspond au décalage de I_{CQI/PMI} avec la périodicité de 1 ;
le paramètre I_{CQI/PMI} de 1 sur 5 correspond au décalage de I_{CQI/PMI} moins 1 avec la périodicité de 5 ;
le paramètre I_{CQI/PMI} de 6 sur 15 correspond au décalage de I_{CQI/PMI} moins 6 avec la périodicité de 10 ;
le paramètre I_{CQI/PMI} de 16 sur 35 correspond au décalage de I_{CQI/PMI} moins 16 avec la périodicité de 20 ;
le paramètre I_{CQI/PMI} de 36 sur 75 correspond au décalage de I_{CQI/PMI} moins 36 avec la périodicité de 40 ;
le paramètre I_{CQI/PMI} de 76 sur 155 correspond au décalage de I_{CQI/PMI} moins 76 avec la périodicité de 80 ; et
le paramètre I_{CQI/PMI} de 156 sur 315 correspond au décalage de I_{CQI/PMI} moins 156 avec la périodicité de 160.
